(19) Europäisches Patentamt
European Patent Office
Office européen des brevets

(11) **EP 1 587 090 B1**

(12) **EUROPEAN PATENT SPECIFICATION**

(45) Date of publication and mention
of the grant of the patent:
**06.06.2007 Bulletin 2007/23**

(51) Int Cl.:
**G11B 7/135** (2006.01)

(21) Application number: **05102759.7**

(22) Date of filing: **07.04.2005**

(54) **Optical pickup apparatus**

Optische Abtastvorrichtung

Dispositif de lecture optique

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **12.04.2004 JP 2004117023
16.06.2004 JP 2004178216
30.09.2004 JP 2004287708
12.11.2004 JP 2004329419**

(43) Date of publication of application:
**19.10.2005 Bulletin 2005/42**

(73) Proprietor: **Konica Minolta Opto, Inc.
Hachioji-shi,
Tokyo 192-8505 (JP)**

(72) Inventors:
• **Ikenaka, Kiyono
Hachioji-shi
192-8505, Tokyo (JP)**
• **Kurogama, Tatsuji
Hachioji-shi
192-8505, Tokyo (JP)**
• **Wachi, Mika
Hachioji-shi
192-8505, Tokyo (JP)**

(74) Representative: **Henkel, Feiler & Hänzel
Patentanwälte
Maximiliansplatz 21
80333 München (DE)**

(56) References cited:
**EP-A- 1 251 500      EP-A- 1 258 871
US-A1- 2003 053 223   US-A1- 2004 042 084
US-B1- 6 359 845**

## Description

This application is based on Japanese Patent Application Nos. 2004-117023 filed on Apr 12, 2004, 2004-178216 filed on Jun 6, 2004, 2004-287708 filed on Sep 30, 2004 and 2004-329419 filed on Nov 12, 2004 in Japanese Patent Office, the entire content of which is hereby incorporated by reference.

## FIELD OF THE INVENTION

The present invention relates to an objective lens, an optical pickup apparatus.

## BACKGROUND OF THE INVENTION

In recent years, in an optical pickup apparatus, there has been advanced a trend to a short wave of a laser light source used as a light source for reproducing of information recorded on an optical disc and for recording of information on an optical disc. For example, a laser light source with wavelength 405 nm such as a blue-violet semiconductor laser or a blue-violet SHG laser conducting wave length conversion of an infrared semiconductor laser by using generation of the second harmonic is being put to practical use.

If these blue-violet laser light sources are used, it is possible to record information of 15 - 20 GB for an optical disc having a diameter of 12 cm when using an objective lens having a numerical aperture (NA) that is identical to that of a digital versatile disc (hereinafter referred to as DVD), and when the NA of the objective lens is enhanced to 0.85, it is possible to record information of 23 - 27 GB for an optical disc having a diameter of 12 cm. Hereafter, in the present specification, an optical disc employing a blue-violet laser light source and a magnetooptical disc are generically called "a high density optical disc".

Incidentally, there are proposed two standards presently as a high density optical disc. One of them is a Blu-ray disc (hereinafter referred to as BD as an abbreviation) employing an objective lens with NA 0.85 and having a 0.1 mm-thick protective layer, and the other is HD DVD (hereinafter referred to as HD as an abbreviation) employing an objective lens with NA 0.65 - 0.67 and having a 0.6 mm-thick protective layer. When considering possibility that high density optical discs each conforming to either of these two standards appear on the market in the future, a compatible type optical pickup apparatus that can conduct recording and reproducing for all high density optical discs including existing DVD and CD is important, and among them, a one-lens type coping to compatibleness with an objective lens is of the most ideal type.

In the optical pickup apparatus realizing compatibleness for a plural types of optical discs using one objective lens described above, it is also easy to realize to employ common optical elements except the objective lens, when magnifications of the objective lens for wavelengths corresponding to the optical discs are same. Moreover, when the optical pickup apparatus employs a structure such that parallel light fluxes enters into the objective lens and a magnification of the objective lens is 0, it allows that the optical pickup apparatus is operated more easily. Therefore, an objective lens having magnifications for wavelengths corresponding to the optical discs are same and zeros are required.

Besides, in order to realize compatibility between BD and HD where a blue-violet laser light source records and or reproduce information, and CD, it is necessary to correct a spherical aberration generated by a difference of substrate thickness between BD and HD, and CD.

As a correction method for aberration caused by the difference between protective substrate thicknesses, there have been known technologies to change a degree of divergence of an incident light flux entering an objective optical system, or to provide a diffractive structure on an optical surface of an optical element constituting an optical pickup apparatus (for example, see Patent Document 1).

(Patent Document 1) TOKKAI No. 2002-298422

The invention described in Patent Document 1 is one to change a degree of divergence of an incident light flux entering an objective optical system as a method of correcting aberration for attaining compatibleness between DVD and CD.

However, a wavelength of light flux for information recording and/or reproducing on the high density disc has a twice value of the wavelength of light flux for information recording and/or reproducing on CD. Therefore, it is difficult to realize the compatibility with the diffractive structure used in an objective lens compatible to DVD and CD.

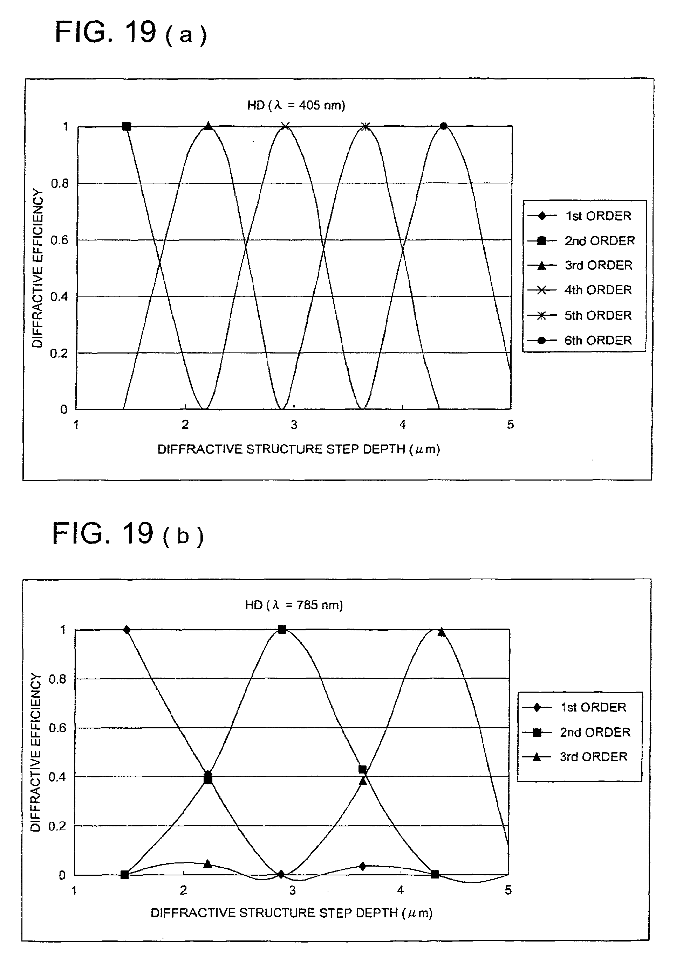

Figs. 19(a) and 19(b) show diffraction orders and diffraction efficiencies of light fluxes diffracted by a blazed type of a diffractive structure corresponding to light flux with a wavelength 407 nm emitted by the blue-violet laser light source and light with a wavelength 785 nm emitted by the light source for CD. As shown in Figs. 19(a) and 19(b), when the diffractive structure generates a diffracted light flux (the 2m-th order diffracted light flux) with high diffractive efficiency for a light with a wavelength 407 nm, the diffractive structure also generates a diffracted light flux (the m-th order diffracted light flux) with high diffractive efficiency for a light with a wavelength 785 nm. Because the 2m-th order and m-th order diffracted light fluxes are diffracted with the same Bragg's angle on a diffractive surface, there is provided no diffraction effect between both diffractive light fluxes with the two wavelengths.

Next, the optical pickup apparatus employs an objective lens in which a finite light flux enters, in order to realize the compatibility between the high density disc and CD. However, there are caused a problem that an amount of generation of coma by the objective lens shift in the course of tracking grows greater, because magnification of such a objective lens is large.

An optical pick up apparatus according to characterizing part of claim 1 is known from US-A-2004/0042084.

## SUMMARY OF THE INVENTION

Taking the aforementioned problems into consideration, an object of the invention is to provide an objective lens and an optical pickup apparatus which are used for reproducing and/or recording of information for at least two types of optical discs including a high density optical disc, and cause no problems on tracking performance.

According to the present invention the above object is achieved by an optical pick up apparatus according to claim 1. The dependent claims are directed to further advantageous aspects of the invention.

The optical pickup apparatus includes a first light source for emitting a first light flux, a third light source for emitting a third light flux and an objective lens arranged in a common optical path of the first light flux and the third light flux. The first light flux enters into the objective lens as a converging light flux, and $-1/10 \leq m3 < 0$ is satisfied, where m3 is a magnification of the objective lens for a third light flux.

As described above, the optical pickup apparatus employs a structure in which a light flux for information recording and/or reproducing on the high density disc enters into the objective lens as a gently converging light flux (a finite light flux), and a light flux for information recording and/or reproducing on at least one type of optical disk except the high density disc on the objective lens as a converging light flux (a finite light flux). It makes each magnification of the objective lens corresponding to the first and third light fluxes smaller than a finite magnification of the conventional finite objective lens attaining compatibility between the high density optical disc and CD, and then, the problem caused on the tracking operation of the objective lens is solved.

If the light amount used for recording and reproducing information is sacrificed, it is also possible to share an action for the compatibility with a diffractive action. Even in such a case, by using this invention, there can be provided an optical pickup apparatus and an objective lens with smaller performance degradation in tracking operation of the objective lens.

In the present specification, in addition to the BD and HD mentioned above, an optical disc having, on its information recording surface, a protective layer with a thickness of about several - several tens nm and an optical disc having a protective layer or a protective film whose thickness is zero are also assumed to be included in the high density optical disc.

In the present specification, DVD is a generic name of optical discs in a DVD series including DVD-ROM, DVD-Video, DVD-Audio, DVD-RAM, DVD-R, DVD-RW, DVD+R and DVD+RW, while, CD is a generic name of optical discs in a CD series including CD-ROM, CD-Audio, CD-Video, CD-R and CD-RW.

## BRIEF DESCRIPTION OF THE DRAWINGS

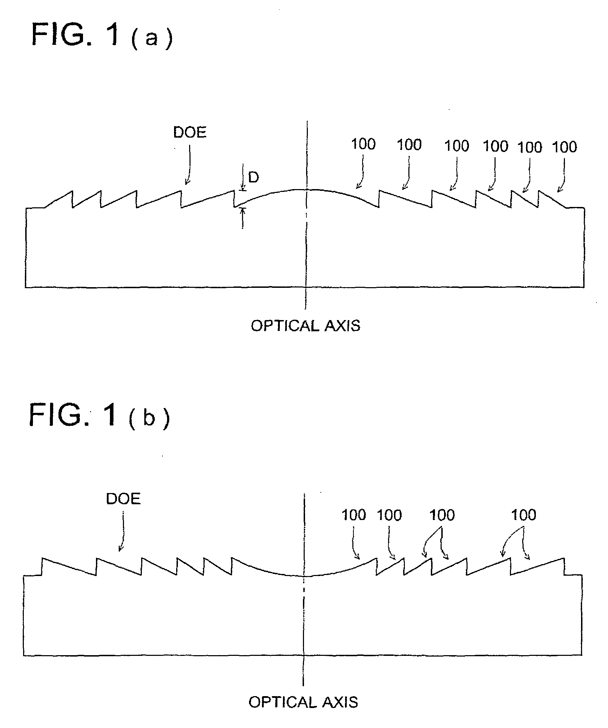

Each of Figs. 1 (a) and 1 (b) is a diagram showing a phase structure.

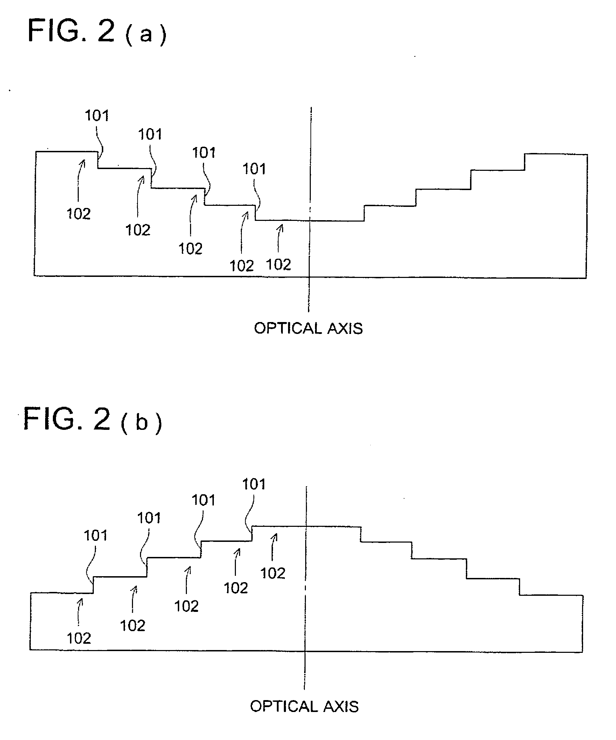

Each of Figs. 2 (a) and 2 (b) is a diagram showing a phase structure.

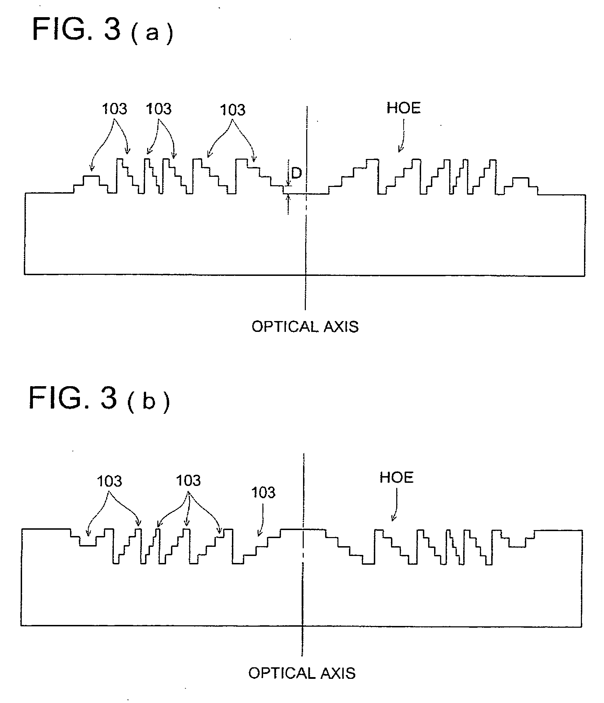

Each of Figs. 3 (a) and 3 (b) is a diagram showing a phase structure.

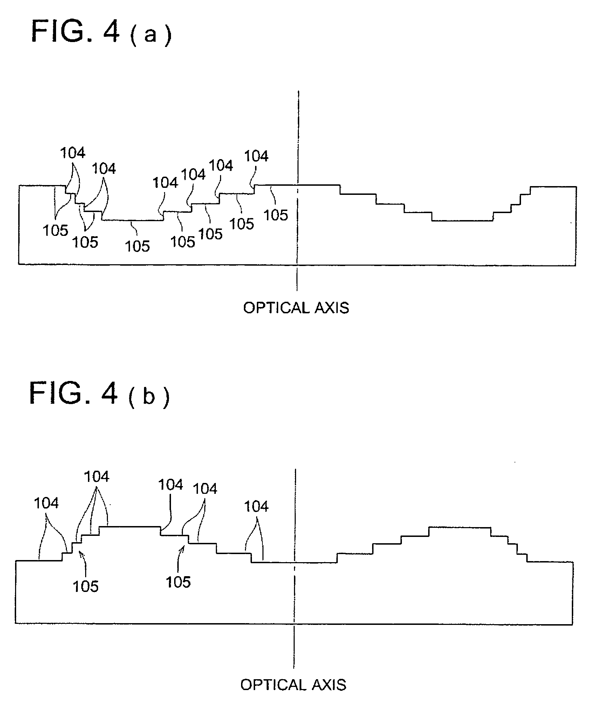

Each of Figs. 4 (a) and 4 (b) is a diagram showing a phase structure.

Fig. 5 is a plan view of primary portions showing the structure of an optical pickup apparatus.

Fig. 6 is a diagram showing an optical surface of an objective lens.

Fig. 7 is a plan view of primary portions showing the structure of an optical pickup apparatus.

Fig. 8 is a plan view of primary portions showing the structure of an optical pickup apparatus.

Fig. 9 is a plan view of primary portions showing the structure of an optical pickup apparatus.

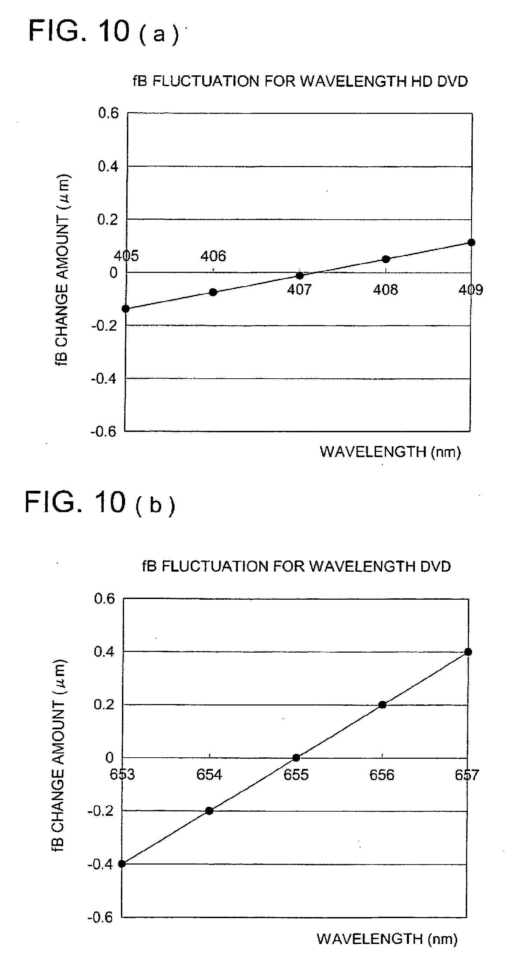

Each of Figs. 10(a) and 10(b) is a graph showing amount of fluctuation of position of the minimum wavefront aberration dfb/dλ.

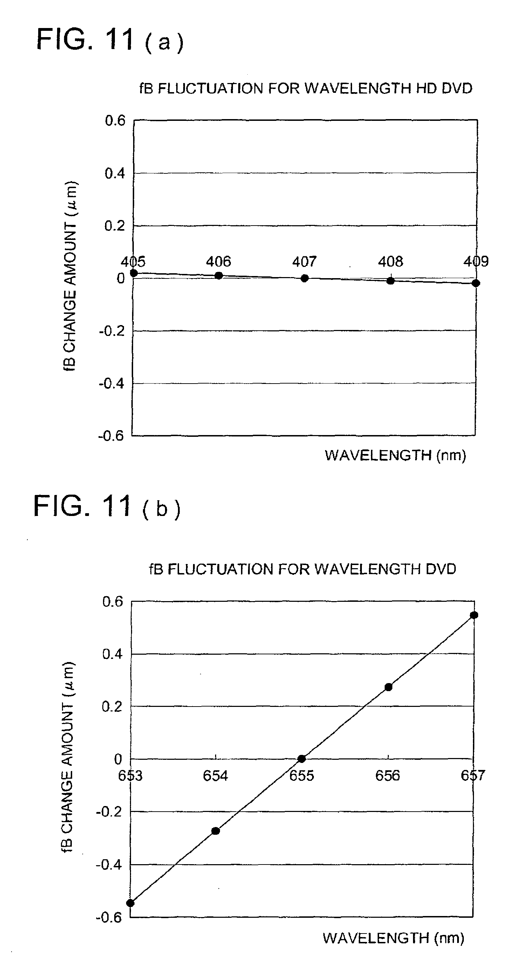

Each of Figs. 11(a) and 11(b) is a graph showing amount of fluctuation of position of the minimum wavefront aberration dfb/dλ.

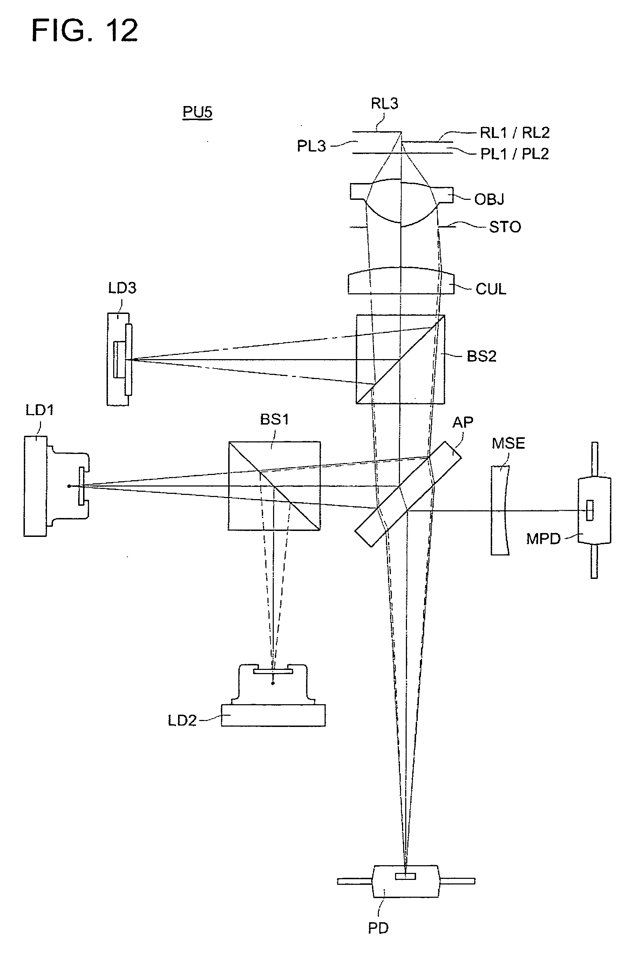

Fig. 12 is a plan view of primary portions showing the structure of an optical pickup apparatus.

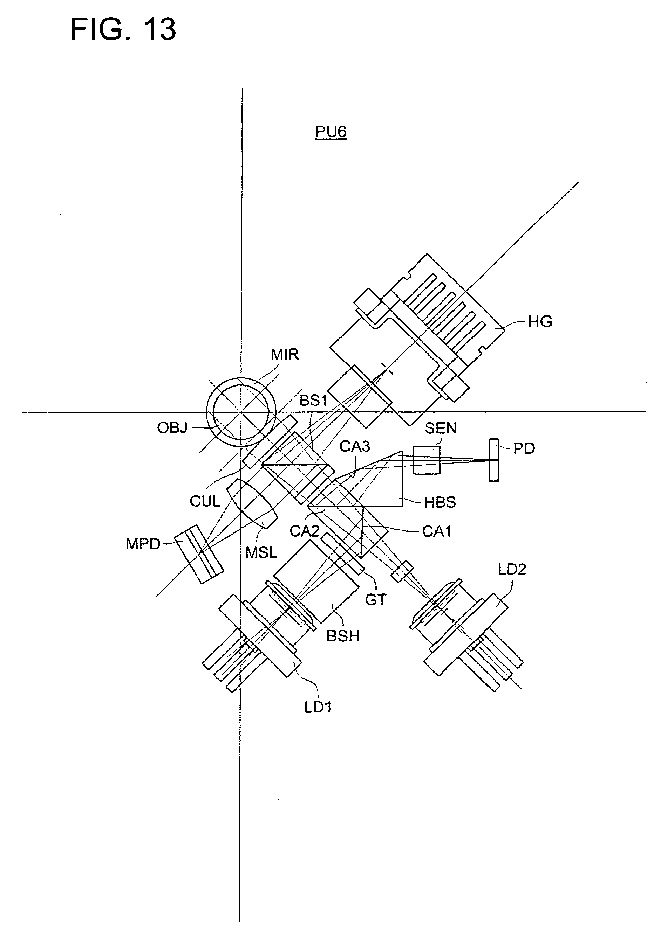

Fig. 13 is a plan view of primary portions showing the structure of an optical pickup apparatus.

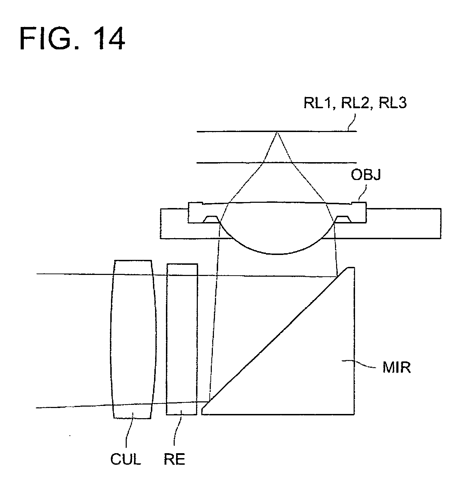

Fig. 14 is a side view showing an objective lens of the optical pickup apparatus shown in Fig. 13.

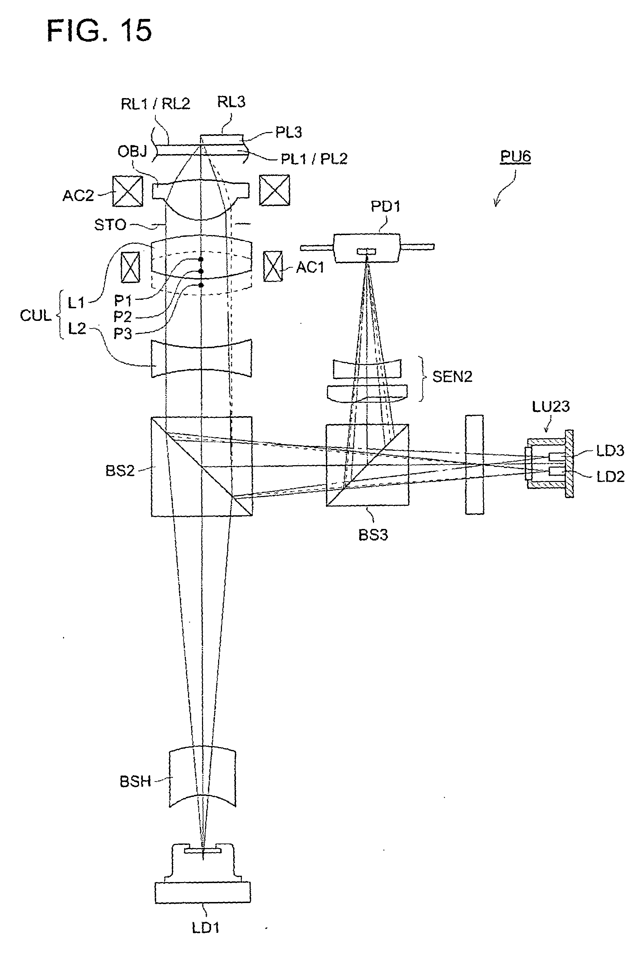

Fig. 15 is a plan view of primary portions showing the structure of an optical pickup apparatus.

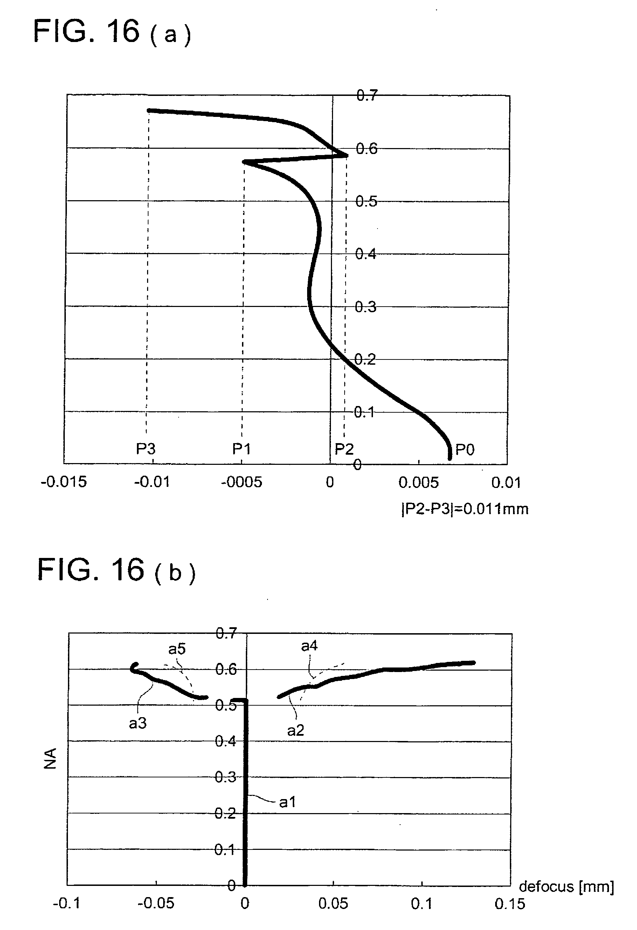

Figs. 16(a) and 16(b) are diagrams showing characteristics of an objective lens in Example 9, and Fig. 16 (a) shows longitudinal spherical aberration of HD in the case of a wavelength wherein 10 nm is added to the wavelength of HD, while, Fig. 16 (b) shows longitudinal spherical aberration of CD in the case of its standard wavelength.

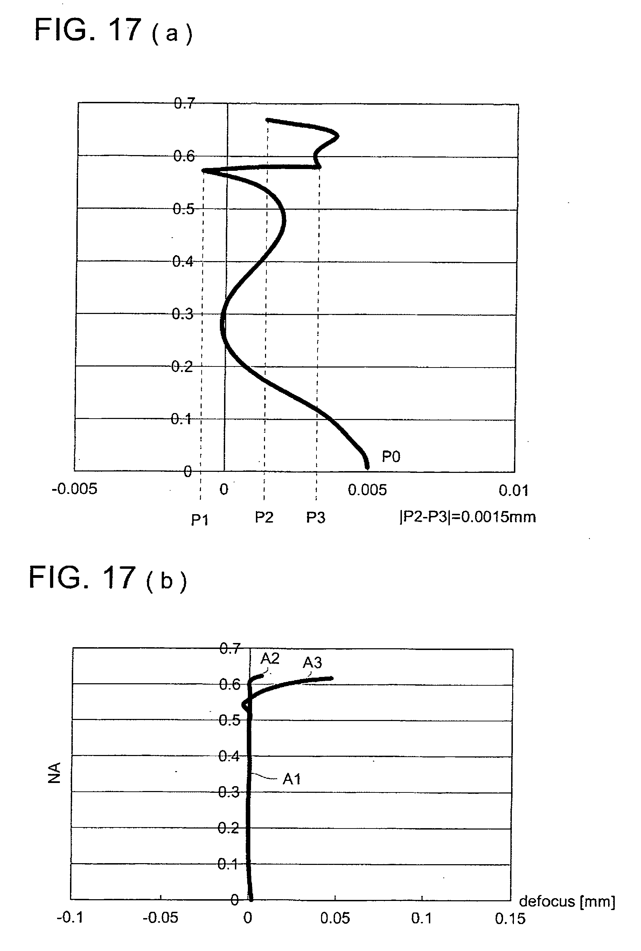

Each of Figs. 17(a) and 17(b) is a diagram showing characteristics of an objective lens in Comparative Example, and Fig. 17(a) shows longitudinal spherical aberration of HD in the case of a wavelength wherein 10 nm is added to the wavelength of HD, while, Fig. 17(b) shows longitudinal spherical aberration of CD in the case of its standard wavelength.

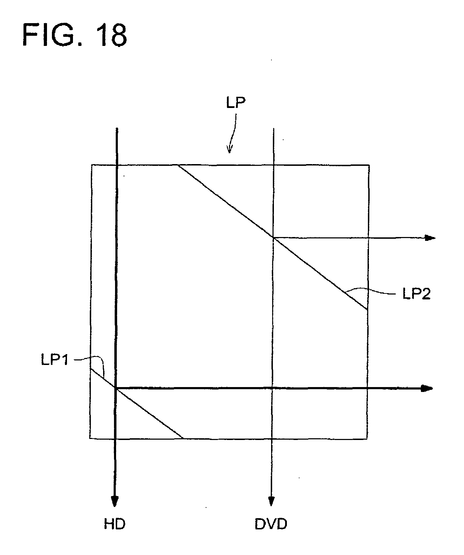

Fig. 18 is an illustration showing a laminate prism.

Each of Figs. 19 (a) and 19 (b) is a diagram showing diffraction orders and diffraction efficiencies in a blased type diffractive structure for a wavelength of HD and a wavelength for CD.

## DETAILED DESCRIPTION OF THE INVENTION

Preferred embodiments of the invention will be explained as follow.

Item 1-1

The structure described in Item 1 is an optical pickup apparatus including a first light source for emitting a first light flux with a wavelength $\lambda1$ for recording and/or reproducing information on a first optical disc having a protective substrate with a thickness t1; a third light source for emitting a third light flux with a wavelength $\lambda3$ ($1.8 \times \lambda1 \leq \lambda3 \leq 2.2 \times \lambda1$) for recording and/or reproducing information on a third optical disc having a protective substrate with a thickness t3 ($t1 < t3$); and an objective lens arranged in a common optical path of the first light flux and the third light flux when the optical pickup apparatus records and/or reproduces information on each of the first and third optical discs. The first light flux enters into the objective lens as a converging light flux, and $-1/10 \leq m3 < 0$ is satisfied, where m3 is a magnification of the objective lens for a third light flux.

Besides, both of HD DVD and BD is used as the first disc but HD DVD is more preferable because it is effective.

Item 1-2

It is preferable that, in the optical pickup apparatus of item 1-1, a magnification m1 of the objective lens for the first light flux satisfies $0 < m1 \leq 1/10$.

Item 1-3

It is preferable that, in the optical pickup apparatus of item 1-2, the magnification m1 of the objective lens for the first light flux satisfies $0 < m1 \leq 1/15$.

Item 1-4

It is preferable that, in the optical pickup apparatus of any one of items 1-1 through 1-3, the magnification m3 of the objective lens for the third light flux satisfies $-1/15 \leq m3 < 0$.

Item 1-5

It is preferable that, the optical pickup apparatus of any one of items 1-1 through 1-4, further includes: a second light source for emitting a second light flux with a wavelength $\lambda2$ ($1.5 \times \lambda1 \leq \lambda2 \leq 1.7 \times \lambda1$) for recording and/or reproducing information on a second optical disc having a protective substrate with a thickness t2 ($0.9 \times t1 \leq t2$).

Further, if at least one of $0.9 \times t1 \leq t2$ for protective substrate thickness t2, $0 < m1 \leq 1/15$ for optical system magnification m1 and $-1/10 \leq m3 < 0$ for magnification m3 is satisfied, an amount of generation of aberration in the course of tracking can be controlled even in the case of a super-slim lens that is thinner than the conventional objective lens.

Item 1-6

It is preferable that, the optical pickup apparatus of any one of items 1-1 through 1-5, further includes a phase structure arranged on a first optical surface of the objective lens.

In the structure described in Item 1-6, a phase structure is provided on at least one optical surface of the objective lens. Owing to this phase structure, therefore, the first optical disc and the second optical disc are made compatible each other, aberration caused during temperature changes by temperature-dependency of the refractive index of a material representing plastic of which an objective lens is made can be corrected, and color correction of the first optical disc having the shortest wavelength can be conducted.

A phase structure formed on an optical surface of an objective optical system is a structure for correcting chromatic aberration caused by a wavelength difference between the first wavelength $\lambda 1$ and the second wavelength $\lambda 2$ and/or spherical aberration resulted from a difference of protective layer thickness between the first optical disc and the second optical disc. The chromatic aberration mentioned here means a fluctuation of a position of the minimum wavefront aberration in the optical axis direction caused by a wavelength difference.

The phase structure mentioned above may be either a diffractive structure or an optical path difference providing structure. The diffractive structure includes a structure that has plural ring-shaped zones 100 wherein the cross section including the optical axis is serrated as shown schematically in Figs. 1(a) and 1(b), a structure that has plural ring-shaped zones 102 wherein directions of steps 101 are the same within an effective diameter and the cross section including the optical axis is step-shaped as shown schematically in Figs. 2(a) and 2(b), a structure that has plural ring-shaped zones 103 in which a step-shaped structure is formed as shown schematically in Figs. 3(a) and 3(b), and a structure that has plural ring-shaped zones 105 wherein directions of steps 104 are changed within an effective diameter and the cross section including the optical axis is step-shaped as shown schematically in Figs. 4(a) and 4(b). The optical path difference providing structure includes a structure that has plural ring-shaped zones 105 wherein directions of steps 104 are changed within an effective diameter and the cross section including the optical axis is step-shaped as shown schematically in Figs. 4(a) and 4(b). Therefore, the structure shown schematically in Figs. 4(a) and 4(b) is a diffractive structure on one occasion, and it is an optical path difference providing structure on another occasion. Incidentally, each of Figs. 1(a) to 4(b) is one showing schematically the occasion where each phase structure is formed on a plane surface. However, each phase structure may also be formed on a spherical surface or on aspheric surface. Incidentally, in the present specification, the diffractive structure composed of plural ring-shaped zones shown in each of Figs 1(a), 1(b), 2(a), 2(b), 4(a) and 4(b) is given a symbol "DOE", and the diffractive structure composed of plural ring-shaped zones in which a step-shaped structure is formed as shown in Figs. 3(a) and 3(b) is given a symbol "HOE".

Item 1-7

It is preferable that, in the optical pickup apparatus of item 1-6, the phase structure is a diffractive structure.

In the structure described in Item 1-7, compatibility between the first optical disc and the second optical disc, correction of aberration of the objective lens concerning temperatures or color correction of the first optical disc can be carried out more effectively, because the phase structure is a diffractive structure.

Item 1-8

It is preferable that, in the optical pickup apparatus of item 1-7, an Abbe constant $\nu d$ satisfies $40 \leq \nu d \leq 90$, the diffractive structure comprises ring-shaped zones arranged on an area on the first optical surface of the objective lens and the area is not used for information recording or reproducing for the third optical disc, and a step difference of each of the ring-shaped zones $d_{out}$ along a parallel direction to an optical axis satisfies

$$(2k - 1) \times \lambda 1/(n1 - 1) \leq d_{out} < 2k \times \lambda 1/(n1 - 1)$$

where k is a positive integer value and n1 is a refractive index of the objective lens for a first light flux.

In the structure described in Item 1-8, Abbe's number $\nu d$ of the objective lens satisfies $40 \leq \nu d \leq 90$, and a step difference $d_{out}$ in the direction running parallel to the optical axis between ring-shaped zones formed on the area that is not used for recording and/or reproducing for the third optical disc in the aforesaid diffractive structure satisfies $(2k - 1) \times \lambda 1/(n1 - 1) \leq d_{out} < 2k \times \lambda 1/(n1 - 1)$. Therefore, the light flux with wavelength $\lambda 3$ which has passed through the area is dispersed in terms of an amount of light into two or more unwanted diffracted light, thus, intense false signals are not generated in focus signals of the third optical disc. Accordingly, focusing of the objective lens can be carried out properly.

Item 1-9

It is preferable that, in the optical pickup apparatus of item 1-8, $5 \times \lambda 1/(n1 - 1) \leq d_{out} < 6 \times \lambda 1/(n1 - 1)$ is satisfied.

In the structure described in Item 1-9, theoretical diffractive efficiency of the diffracted light in working light fluxes having respectively wavelengths $\lambda 1$ and $\lambda 2$, because $5 \times \lambda 1/(n1 - 1) \leq d_{out} < 6 \times \lambda 1/(n1 - 1)$ is satisfied.

Item 1-10

It is preferable that, in the optical pickup apparatus of item 1-8 or 1-9, the objective lens includes on at least one surface thereof: a first area for recording and/or reproducing information of the third light flux; a second area arranged outside of the first area. When the first light flux whose wavelength changes +10 nm is emitted by the first light source and enters into the objective lens, the objective lens satisfies

$$1.7 \times 10^{-3} \leq |P2 - P3| \leq 7.0 \times 10^{-3}$$

and

$$P0 \leq P2 \leq P1 \text{ or } P1 \leq P2 \leq P0$$

where P0 is a paraxial converging position of a light flux passing through the objective lens, P1 is a converging position of a light flux passing through a farthest area from the optical axis in the first area, P2 is a converging position of a light flux passing through a closest area to the optical axis in the second area, P3 is a converging position of a light flux passing through farthest area from the optical axis in the objective lens.

Further, to avoid an adverse effect on recording and reproducing signals, it is preferable that the unwanted diffracted light is not converged at the position of converged spot of the light flux with wavelength λ3 even a light amount of the unwanted diffracted light is small. Among light converging positions and spherical aberrations of two diffraction order light each having highest amount of light, the spherical aberration is determined by a magnification of the second optical disc for the first optical disc. On the other hand, wavelength characteristics are determined by the optical system magnification of the second optical disc for the first optical disc, and therefore, an appropriate magnification is established from the viewpoint of both spherical aberration and wavelength characteristics.

Among light converging positions and spherical aberrations of two diffraction order light each having highest amount of light, the light converging position is determined by chromatic aberration of the objective lens. To keep the light converging position of a flare light and a focus position to be away from each other as far as possible, an absolute value of chromatic aberration needs to be greater. However, if the chromatic aberration grows greater, a diffraction pitch becomes small and efficiency declines, resulting impossible recording in the case of mode-hop, which is a problem. Therefore, it is important to keep the balance between chromatic aberration and a light converging position of a flare light.

From the foregoing, as the structure described in item 1-10, in the case where a light flux emitted from the first light source and having a wavelength increased by +10 nm is made to enter, if the following expressions are satisfied,

$$1.7 \times 10^{-3} \leq |P2 - P3| \leq 7.0 \times 10^{-3}$$

and

$$P0 \leq P2 \leq P1 \text{ or } P1 \leq P2 \leq P0,$$

where P0 represents a paraxial converging position, P1 represents a converging position of the light flux which has passed through the area farthest from the optical axis among the first area used for recording and/or reproducing for the light flux having the wavelength λ3, P2 represents a converging position of the light flux which has passed through the area nearest to the optical axis among the second area arranged outside the first area, and P3 represents a converging position of the light flux which has passed through the area farthest from the optical axis, it is possible to control deterioration of wavefront aberration for the light flux with wavelength λ1 where error sensitivity is strict because of a short wavelength and high NA, even in the case of wavelength changes, temperature changes, or of the mode-hop. It is also possible to lower light density by converging light at the position other than the light converging spot on the optical disc for the light flux having numerical aperture NA3 or more and wavelength λ3.

Item 1-11

It is preferable that, in the optical pickup apparatus of item 1-8 or 1-9, when the first light source emits the first light flux whose wavelength changes, a longitudinal aberration in the first area and a longitudinal aberration in the second area are inclined to a same direction.

In the structure described in Item 1-11, when a wavelength is changed for the light flux having wavelength $\lambda 1$, an inclination of aberration in the first area in the longitudinal spherical aberration and an inclination of aberration in the second area are in the same direction. The expression that "an inclination of aberration in the first area in the longitudinal spherical aberration and an inclination of aberration in the second area are in the same direction" or "a longitudinal aberration in the first area and a longitudinal aberration in the second area are inclined to a same direction" means that when a light flux intersects the optical axis to be farther in terms of its intersection from the objective lens as a distance from the optical axis to the point where light passes through the objective lens grows greater in the first area, the light intersects the optical axis to be farther in terms of its intersection from the objective lens as a distance from the optical axis to the point where light passes through the objective lens grows greater also in the second area. On the other hand, the aforesaid expression also means that when light intersects the optical axis to be closer in terms of its intersection to the objective lens as a distance from the optical axis to the point where light passes through the objective lens grows greater in the first area, the light intersects the optical axis to be closer in terms of its intersection to the objective lens as a distance from the optical axis to the point where light passes through the objective lens grows greater also in the second area. In this case, it is difficult to solve high order aberration by the combination of optical elements. However, if a displacement direction of a light converging position of the light flux that has passed through the first area and a displacement direction of a light converging position of the light flux that has passed through the second area are in the same direction, it is possible to conduct aperture limitation properly on the third optical disc side, without generating high order aberration on wavefront aberration even in the case of wavelength changes and temperature changes.

Item 1-12

It is preferable that, in the optical pickup apparatus of item 1-7, when the third light flux enters in the objective lens, the objective lens converges a light flux passing through an area which is outside of a numerical aperture of the third light flux on the first optical surface of the objective lens, at a position which is apart 0.01 mm or more from a position of a converging spot on the third optical disc.

In the structure described in Item 1-12, when the light flux with wavelength $\lambda 3$ enters, the light which has passed through the area that is not less than the numerical aperture for the light flux with wavelength $\lambda 3$ on the optical surface is converged at the position that is away from the light-convergent spot position on the third optical disc by 0.01 mm or more. Therefore, it is possible to cause the light flux with wavelength $\lambda 3$ with numerical aperture NA3 or more to be converged at the position that is away from the light converged spot to the extent where there is no problem for recording and reproducing for wavelength $\lambda 3$ on the optical disc, and it is also possible to control wavefront aberration deterioration, in the occasion of wavelength changes of the light flux with wavelength $\lambda 1$ where error sensitivity is great, and of temperature changes or of mode-hop.

Furthermore, the phase structure may provide a positive diffractive action to at least one of light fluxes with wavelengths $\lambda 1$, $\lambda 2$ and $\lambda 3$.

In the structure, it is possible to correct aberration property for the temperature of the objective lens caused by temperature-dependency of refractive index of a material when a material of the objective lens is plastic, because the phase structure gives positive diffractive function to at least one light flux among the light fluxes having respectively wavelength $\lambda 1$, wavelength $\lambda 2$ and wavelength $\lambda 3$.

Item 1-13

It is preferable that, in the optical pickup apparatus of item 1-7, a third order spherical aberration of the objective lens is a wavefront aberration component of a converging spot formed on an information recording surface of at least one of the first through third discs and a change amount of the third order spherical aberration of the objective lens generated when a temperature is increased has a positive value.

In this case, if a sign of the third-order spherical aberration change for a long wavelength change is opposite to a sign of the third-order spherical aberration change for a temperature rise, both signs cancel each other, because an oscillation wavelength of a laser becomes longer under an ordinary environment at high temperature. Further, if the positive spherical aberration remains as a spherical aberration change as in Item 1-13, without canceling completely, wavefront aberration deterioration can be controlled in the case of wavelength changes and temperature changes.

Item 1-14

It is preferable that, in the optical pickup apparatus of item 1-7, a power of the phase structure has a negative value.

As in the structure described in Item 1-14, chromatic aberration caused by wavelength changes can be corrected by canceling negative diffracting power generated by the phase structure provided on the optical surface of the objective lens positive and refractive power generated by the material of the objective lens each other, for at least one light flux among the light fluxes having respectively wavelength λ1, wavelength λ2 and wavelength λ3.

Item 1-15

It is preferable that, in the optical pickup apparatus of any one of items 1-6 through 1-14, the phase structure is arranged on the area on the first optical surface on the objective lens where the second light flux passes through.
In the structure described in Item 1-15, the first optical disc and the second optical disc can be made to be compatible each other, because the phase structure is provided on the area through which the light flux with wavelength λ2 passes on the optical surface. Further, when HD and DVD are used as the first optical disc and the second optical disc whose effective diameters are mostly the same, for example, color correction of the first optical disc can be carried out.

Item 1-16

It is preferable that, in the optical pickup apparatus of any one of items 1-7 through 1-15, the phase structure transmits the first light flux without providing a phase difference and diffracts the second light flux with providing a phase difference.
The structure described in Item 1-16, can provide selectively a diffracting function to an entering light flux corresponding to the wavelength of the light flux, because the phase structure transmits the light flux with wavelength λ1 without providing a phase difference substantially, and diffracts the light flux with wavelength λ2 with providing a phase difference substantially.
Here, the phase structure may transmit a second light flux without providing a phase difference and diffract a first light flux with providing a substantial phase difference.

Item 1-17

It is preferable that, in the optical pickup apparatus of item 1-14, $|dfb/d\lambda| \leq 0.1$ [μm/nm] is satisfied, where dfb/dλ is a change amount of position along an optical axis on which a wavefront aberration is minimum corresponding to a wavelength variation with 1 nm of the first light flux in a converged spot formed on the information recording surface of the first optical information medium.

Item 1-18

It is preferable that, in the optical pickup apparatus of item 1-14, $|dfb/d\lambda| \leq 0.2$ [μm/nm] is satisfied, where dfb/dλ is a change amount of position along an optical axis on which a wavefront aberration is minimum corresponding to a wavelength variation with 1 nm of the second light flux in a converged spot formed on the information recording surface of the second optical information medium.
Hereon, the phase structure may be a diffractive structure having a plurality of ring-shaped zones in a shape of concentric circles each having its center on the optical axis, a cross sectional form of the phase structure including the optical axis is in a serrated form, and may satisfy the following expression;

$$8 \times \lambda1/(n1 - 1) \leq d < 9 \times \lambda1/(n1 - 1)$$

where d represents a step difference along the optical axis direction of each ring-shaped zone formed on the area used for recording and/or reproducing for wavelength λ3 and n1 represents the refractive index of the objective lens for the light flux with wavelength λ1.
Moreover, the phase structure may be a diffractive structure including plural ring-shaped zones in a shape of concentric circles each having its center on the optical axis, a cross sectional form of the phase structure including the optical axis is in a serrated form, and may satisfy the following expression;

$$6 \times \lambda1/(n1 - 1) \leq d < 7 \times \lambda1/(n1 - 1)$$

where d represents a step difference along the optical axis direction of each ring-shaped zone formed on the area used for recording and/or reproducing for wavelength λ3 and n1 represents the refractive index of the objective lens for the light flux with wavelength λ1.

Item 1-19

It is preferable that, in the optical pickup apparatus of any one of items 1-6 through 1-18, the phase structure is a diffractive structure having a plurality of ring-shaped zones and having a serrated cross section including a optical axis, a center of each of the plurality of ring-shaped zones is arranged on an optical axis, and the optical pickup apparatus satisfies a following expression,

$$10 \times \lambda1/(n1 - 1) \leq d < 12 \times \lambda1/(n1 - 1)$$

wherein n1 is a refractive index of the objective lens for a wavelength λ1, and d is a step difference along the optical axis of each of the ring-shaped zones.

Herein, the structure may satisfies 0.8 mm ≤ f1 ≤ 4.0 mm, where f1 is a focal length of the objective lens for the first light flux.

Furthermore, the structure may satisfies 1.3 mm ≤ f1 ≤ 2.2 mm, where f1 is a focal length of the objective lens for the light flux with wavelength λ1.

Furthermore, the structure may satisfies 0.49 ≤ NA3 ≤ 0.54, where NA3 is a numerical aperture of the objective lens on the optical disc side for the third light flux.

Item 1-20

It is preferable that, in the optical pickup apparatus of any one of items 1-5 through 1-19, t1 = t2 is satisfied.

Item 1-21

It is preferable that, in the optical pickup apparatus of any one of items 1-5 through 1-20, m2 = 0 is satisfied, where m2 is a magnification of the objective lens for the second light flux.

Item 1-22

It is preferable that, in the optical pickup apparatus of any one of items 1-1 through 1-21, the objective lens is made of a glass material.

Herein, the objective lens may be made of a plastic material.

Further, the objective lens may be composed of two or more lenses, and a lens arranged closest to the light source may have the phase structure.

Item 1-23

It is preferable that, the optical pickup apparatus of any one of items 1-1 through 1-22 further has a numerical aperture limiting element arranged in an optical path of the third light flux.

Item 1-24

It is preferable that, in the optical pickup apparatus of item 1-23, the numerical aperture limiting element is a liquid crystal element or a wavelength selective filter.

Item 1-25

It is preferable that, the optical pickup apparatus of any one of items 1-1 through 1-22, further has a chromatic aberration correcting element arranged in an optical path of the first light flux for correcting a chromatic aberration of the first light flux.

Item 1-26

It is preferable that, the optical pickup apparatus of any one of items 1-5 through 1-22, further has: a photodetector for receiving the first light flux reflected on an information recording surface of the first optical disc when the optical pickup apparatus reproduces or records information on the first optical disc, for receiving the second light flux reflected on an information recording surface of the second optical disc when the optical pickup apparatus reproduces or records information on the second optical disc, and for receiving the third light flux reflected on an information recording surface of the third optical disc when the optical pickup apparatus reproduces or records information on the third optical disc.

Item 1-27

It is preferable that, the optical pickup apparatus of item 1-26 further has: a coupling lens arranged in a common optical path of the first to third light fluxes; and an actuator arranged in a common optical path of the first to third light fluxes for actuating the coupling lens.

In this case, magnifications of the objective lens for all of three wavelengths are different each other. However, if conjugate lengths of the optical system in which a objective lens and a coupling lens are combined are made uniform for three wavelengths by arranging a coupling lens on a common optical path for respective light fluxes with wavelengths $\lambda 1$, $\lambda 2$ and $\lambda 3$ and by moving the coupling lens, it is possible to use a laser wherein sensors are made uniform for three wavelengths, and plural light sources are made to be one package. The coupling lens may be either of a single lens or of plural lenses, and when it is of plural lenses, there is imagined that one of the plural lenses moves, or plural lenses move simultaneously.

The actuator in the present specification is not limited to a specified actuator and well-known actuator used for actuating an optical element of an optical pickup apparatus can be used. For example, a stepping motor and an actuator using a piezoelectric element (it is also called electric-machine sensing element) described in JP-A No. 9-191676 is preferably used.

Item 1-28

It is preferable that, in the optical pickup apparatus of item 1-27, the coupling lens has a diffractive structure on at least one surface thereof.

Item 1-29

It is preferable that, in the optical pickup apparatus of item 1-28, the diffractive structure of the coupling lens satisfies $|dfb/d\lambda| \leq 0.1$ [$\mu$m/nm]
where dfb/d$\lambda$ is a change amount of a position along an optical axis on which a wavefront aberration is minimum corresponding to a wavelength variation with 1 nm of the first light flux in a converged spot formed on the information recording surface of the first optical information medium.

Item 1-30

It is preferable that, in the optical pickup apparatus of any one of items 1-27 through 1-29, the coupling lens comprises a diffraction grating and the diffraction grating detects a movement of the objective lens in a direction perpendicular to an optical axis.

Item 1-31

It is preferable that, the optical pickup apparatus of item 1-26, further has: a coupling lens arranged in a common optical path of the first to third light fluxes and
a liquid crystal element arranged in a common optical path of the first to third light fluxes.

Magnifications of the objective lens for all of three wavelengths are different each other. However, it is possible to use a laser wherein sensors are made uniform for three wavelengths, and plural light sources are made to be one package, by arranging a coupling lens and a liquid crystal element on the common optical path for respective light fluxes with wavelengths $\lambda 1$, $\lambda 2$ and $\lambda 3$, and by uniformizing conjugate lengths of the optical system in which the objective lens, the coupling lens and the liquid crystal element are combined for three wavelengths.

Item 1-32

It is preferable that, in the optical pickup apparatus of item 1-31, the coupling lens has a diffractive structure on at least one surface thereof.

In the structure described in Item 1-32, it is possible to control chromatic aberration for the light flux with wavelength λ1 and wavefront aberration deterioration caused by temperature changes, by using a diffracting function, because a diffractive structure is formed on at least one surface of the coupling lens.

Item 1-33

It is preferable that, in the optical pickup apparatus of item 1-32, the diffractive structure of the coupling lens satisfies

$$|dfb/d\lambda| \leq 0.1 \ [\mu m/nm]$$

where dfb/dλ is a change amount of a position along an optical axis on which a wavefront aberration is minimum corresponding to a wavelength variation with 1 nm of the first light flux in a converged spot formed on the information recording surface of the first optical information medium.

Item 1-34

It is preferable that, in the optical pickup apparatus of any one of items 1-31 through 1-33, the coupling lens comprises a diffraction grating and the diffraction grating detects a movement of the objective lens in a direction perpendicular to an optical axis.
Herein, the coupling lens may be integrally formed in one body with the liquid crystal device.

Item 1-35

It is preferable that, in the optical pickup apparatus of any one of items 1-26 through 1-34, the second light source and the third light source are packaged in one body with arranged in one case.

Item 1-36

It is preferable that, the optical pickup apparatus of any one of items 1-5 through 1-22, further has:

a first photodetector for receiving the first light flux reflected on an information recording surface of the first optical disc, and the second light flux reflected on an information recording surface of the second optical disc; and
a second photodetector for receiving the third light flux reflected on an information recording surface of the third optical disc.

Item 1-37

It is preferable that, the optical pickup apparatus of item 1-36, further has: a coupling lens arranged in a common optical path of the first to third light fluxes and
the coupling lens has a diffractive structure on at least one surface thereof.
In the structure described in Item 1-37, a coupling lens is arranged on the common optical path for respective light fluxes with wavelengths λ1, λ2 and λ3, and a diffractive structure is provided on at least one optical surface of the coupling lens, and thereby, the sensors for the light fluxes respectively with wavelengths λ1 and λ2 can be made uniform by the diffractive structure. Further, the diffractive structure can conduct chromatic aberration correction for wavelength λ1 simultaneously. The diffractive structure may be formed either on one surface or on plural surfaces. If a structure is arranged so that light with wavelength λ3 may also pass through the coupling lens, it results in reduction of the number of parts of the entire optical system.
Herein, in the optical pickup apparatus, a focal length $f_c$ of the coupling lens for the light flux with wavelength wavelengths λ1 may satisfy 6 mm $\leq f_c \leq$ 15 mm.

Item 1-38

It is preferable that, the optical pickup apparatus of item 1-37, further has: a chromatic aberration correcting element arranged in an optical path where only the first light flux passing through for correcting a chromatic aberration of the first light flux.

Item 1-39

It is preferable that, the optical pickup apparatus of any one of items 1-37 through 1-38, further comprising: a astigmatism generating plate arranged in an optical path between the coupling lens and the first photodetector; and wherein at lest one of the first light flux and the second light flux enters into the coupling lens after being reflected by the astigmatism generating plate.

In the structure described in Item 1-39, though the light flux with at least one of the wavelength $\lambda 1$ and wavelength $\lambda 2$ is reflected on the astigmatism generating plate and enters the coupling lens, this astigmatism generating plate gives astigmatism to light entering the photodetector and also has a function to deflect light that travels from the light source to the coupling lens, which makes it unnecessary to install parts each having individual function, resulting in reduction of the number of parts of the entire optical pickup apparatus.

Item 1-40

It is preferable that, the optical pickup apparatus of any one of items 1-37 through 1-38, further has: a compound beam splitter arranged in an optical path between the coupling lens and the first photodetector, wherein the compound beam splitter merges optical paths of the first light flux and second light flux, the first and second light fluxes whose optical paths are merged by the compound beam splitter enters into the coupling lens, and the compound beam splitter makes a difference between forward optical paths of the first and second light fluxes and backward optical paths of the first and second light fluxes.

In the structure described in Item 1-40, it is possible to reduce the number of parts of the entire pickup apparatus because there is used a multifunctional compound beam splitter having functions for merging optical paths for light fluxes with wavelength $\lambda 1$ and wavelength $\lambda 2$ and for branching into the forward optical path and the backward optical path.

Item 1-41

It is preferable that, in the optical pickup apparatus of item 1-40, the composite beam splitter comprises a first surface having a dichroic function which transmits or reflects an entering light flux according to a wavelength of the entering light flux, a second surface having a beam splitter function which transmits or reflects an entering light flux according to a polarization direction of the entering light flux, and a third surface for reflecting an entering light flux.

In the structure described in Item 1-41, it is possible to establish freely an angle between light of emergence and incident light for the compound beam splitter, and thereby, to downsize an optical pickup apparatus, because the compound beam splitter has the first surface for merging optical paths, the second surface for branching into the forward optical path and the backward optical path and the third surface for reflecting light.

Item 1-42

It is preferable that, in the optical pickup apparatus of item 1-41, the second light flux emitted by the second light source goes out from the composite beam splitter after passing through the first and second surfaces, the second light flux emitted by the coupling lens goes out from the composite beam splitter after being reflected by the second and third surfaces, the first light flux emitted by the first light source goes out from the composite beam splitter after being reflected by the first surface and passing through the second surfaces successively, the first light flux emitted by the coupling lens goes out from the composite beam splitter after being reflected by the second and third surfaces.

Item 1-43

It is preferable that, in the optical pickup apparatus of item 1-37, the diffractive structure of the coupling lens has a plurality of ring-shaped zones whose centers are arranged at the optical axis and has a serrated cross section including the optical axis, and the optical pickup apparatus satisfies a following expression,

$$2 \times \lambda 1/(n1 - 1) \le d < 3 \times \lambda 1/(n1 - 1)$$

wherein n1 is a refractive index of the objective lens for a wavelength $\lambda 1$, and
d is a step difference along the optical axis of each of the ring-shaped zones.

Item 1-44

It is preferable that, in the optical pickup apparatus of any one of items 1-37 through 1-43, the diffractive structure is arranged on each of an optical disc side of an optical surface on the coupling lens and an optical disc side of an optical surface on the coupling lens.

Item 1-45

It is preferable that, in the optical pickup apparatus of item 1-44, the diffractive structure of the coupling lens has a plurality of ring-shaped zones whose centers are arranged at the optical axis and has a serrated cross section including the optical axis, and the optical pickup apparatus satisfies a following expression,

$$10 \times \lambda1/(n1 - 1) \leq d < 12 \times \lambda1/(n1 - 1)$$

wherein n1 is a refractive index of the objective lens for a wavelength $\lambda1$, and
d is a step difference along the optical axis of each of the ring-shaped zones.

Item 1-46

It is preferable that, in the optical pickup apparatus of any one of items 1-44 through 1-45, the diffractive structure arranged on the light source side of the optical surface on the coupling lens transmits the first light flux without providing a phase difference, and diffracts the second light flux with providing a phase difference.

Item 1-47

It is preferable that, in the optical pickup apparatus of any one of items 1-37 through 1-46, the coupling lens comprises a diffraction grating and the diffraction grating detects a movement of the objective lens in a direction perpendicular to an optical axis.

Item 1-48

It is preferable that, the optical pickup apparatus of item 1-37, further has: a first coupling lens arranged in a common optical path of the first and second light fluxes, a second coupling lens arranged in an optical path of the third light fluxes, and a diffractive structure arranged on at least one surface of the first and second coupling lenses.

Item 1-49

It is preferable that, in the optical pickup apparatus of item 1-36, the second photodetector is a hologram laser

Item 1-50

It is preferable that, in the optical pickup apparatus of item 1-48, the coupling lenses has a diffraction grating on at least one optical surface thereof and the diffraction grating detects a movement of the objective lens in a direction perpendicular to an optical axis.

Item 1-51

It is preferable that, the optical pickup apparatus of any one of items 1-5 through 1-22, further has: a first photodetector for receiving the second light flux reflected on an information recording surface of the second optical disc, and the third light flux reflected on an information recording surface of the third optical disc; and a second photodetector for receiving the first light flux reflected on an information recording surface of the first optical disc.

Item 1-52

It is preferable that, the optical pickup apparatus of item 1-51, further has: a coupling lens having a diffractive structure and arranged in a common optical path of the second light flux and the third light flux.

In the structure described in Item 1-52, sensors respectively for a light flux with wavelength λ1 and for a light flux with wavelength λ2 can be made to be common, by making conjugate lengths of the optical systems each including an objective lens and a coupling lens respectively for a light flux with wavelength λ1 and a light flux with wavelength λ2 uniform, by the diffractive structure provided on the coupling lens, because there is provided a coupling lens that has a diffractive structure and is made to be common so that a light flux with wavelength λ2 and a light flux with wavelength λ3 may pass through. If an individual coupling lens is used for a light flux with wavelength λ1, magnifications of all optical systems can be established freely, and if a coupling lens that is common to light fluxes respectively with wavelength λ1 and wavelength λ3 is used, the number of parts of the optical pickup apparatus can be reduced.

Item 1-53

It is preferable that, in the optical pickup apparatus of item 1-51 or 1-52, the first photodetector, the second light source and the third light source are packaged in one body by being arranged in one case.

Item 1-54

It is preferable that, in the optical pickup apparatus of item 1-52 or 1-53, the coupling lens has a diffraction grating and the diffraction grating detects a movement of the objective lens in a direction perpendicular to an optical axis.

Item 1-55

It is preferable that, the optical pickup apparatus of any one of items 1-5 through 1-22, further has: a photodetector for receiving the first light flux reflected by an information recording surface of the first optical disc; a first laser in which a photodetector for receiving the second light flux reflected by an information recording surface of the second optical disc and the second light source are packaged in one body; and a second laser in which a photodetector for receiving the third light flux reflected by an information recording surface of the third optical disc and the third light source are packaged in one body.

In the structure described in Item 1-55, even when conjugate lengths wherein a coupling lens and an objective lens are combined for three light fluxes respectively with three wavelengths are different each other, the optical pickup apparatus can be constituted with less number of parts, because the structure is provided with a photodetector, the first laser, and the second laser. Herein the photodetector receives a light flux that is emitted from the first light source and is reflected on the information recording surface of the first optical disc, the first laser houses a photodetector receiving a light flux that is emitted from the second light source and is reflected on the information recording surface of the second optical disc and the second light source, to be one package, and the second laser houses a photodetector receiving a light flux that is emitted from the third light source and is reflected on the information recording surface of the third optical disc and the third light source, to be one package.

Item 1-56

It is preferable that, the optical pickup apparatus of any one of items 1-5 through 1-22, further has: a laminated prism having a plurality of prism functions arranged on an common optical path of at least two of the first to third light fluxes.

The structure described in Item 1-56, it is possible to merge an optical path by making plural light fluxes each having a different wavelength to be close each other, because a laminated prism having a function of plural prisms is arranged on the common optical path for at least two light fluxes among respective light fluxes respectively with wavelengths λ1, λ2 and λ3. Therefore, it is possible to push forward the reduction of the number of parts and downsizing of the optical pickup apparatus.

Item 1-57

It is preferable that, the optical pickup apparatus of any one of items 1-5 through 1-26, 1-35, 1-36, 1-51, 1-55, 1-56, further has: a coupling lens having a diffraction grating on an common optical path of the first to third light fluxes, and the diffraction grating detects a movement of the objective lens in a direction perpendicular to an optical axis.

One of the detecting method of tracking of the objective lens is a three-beam method which is one in which a sensor receives three diffracted light generated by the diffraction grating. If the diffraction grating is united with the coupling lens solidly as in the above structures, the number of parts can be reduced.

Item 1-58

The structure is an optical objective lens for use in an optical pickup apparatus of any one of items 1-1 through 1-22.

The invention makes it possible to obtain an objective lens that is used for reproducing and/or recording of information for at least three types of optical discs including a high density optical disc and is free from the problem of tracking characteristics, and an optical pickup apparatus employing the objective lens.

Preferred another embodiments of the invention will be explained as follow.

Item 2-1

For solving the problems mentioned above, the structure described in Item 2-1 is an objective lens of an optical pickup apparatus, at least for reproducing and/or recording information by using a light flux with wavelength $\lambda 1$ emitted from the first light source for the fist optical disc having protective substrate thickness t1, reproducing and/or recording information by using a light flux with wavelength $\lambda 2$ ($1.5 \times \lambda 1 \leq \lambda 2 \leq 1.7 \times \lambda 1$) emitted from the second light source for the second optical disc having protective substrate thickness t2 ($t1 \leq t2$), and reproducing and/or recording information by using a light flux with wavelength $\lambda 3$ ($1.8 \times \lambda 1 \leq \lambda 3 \leq 2.2 \times \lambda 1$) emitted from the third light source for the third optical disc having protective substrate thickness t3 ($t2 < t3$), wherein the objective lens transmits each of light fluxes respectively with wavelength $\lambda 1$, $\lambda 2$ and $\lambda 3$, when reproducing or recording information for each optical disc, and optical system magnification m1 of the objective lens for the light flux with wavelength $\lambda 1$ satisfies $0 < m1 \leq 1/100$.

Incidentally, $0.9 \times t1 \leq t2$ is more preferable for protective substrate t2.

Item 2-2

The structure described in Item 2-2 is the objective lens described in Item 2-1, wherein $0 < m1 \leq 1/20$ is satisfied.

Incidentally, $0 < m1 \leq 1/15$ is more preferable as optical system magnification m1.

Item 2-3

The structure described in Item 2-3 is the objective lens described in Item 2-1 or Item 2-2, wherein optical system magnification m3 of the objective lens for the light flux with wavelength $\lambda 3$ satisfies $-1/10 \leq m3 < 0$.

Item 2-4

The structure described in Item 2-4 is the objective lens described in Item 2-3, wherein $-1/20 \leq m3 < 0$ is satisfied.

Incidentally, $-1/15 \leq m3 < 0$ is more preferable as optical system magnification m3.

A phase structure formed on an optical surface of an objective optical system is a structure for correcting chromatic aberration caused by a wavelength difference between the first wavelength $\lambda 1$ and the second wavelength $\lambda 2$ and/or spherical aberration resulted from a difference of protective layer thickness between the first optical disc and the second optical disc. The chromatic aberration mentioned here means a fluctuation of a position of the minimum wavefront aberration in the optical axis direction caused by a wavelength difference.

The phase structure mentioned above may be either a diffractive structure or an optical path difference providing structure. The diffractive structure includes a structure that has plural ring-shaped zones 100 wherein the cross section including the optical axis is serrated as shown schematically in Figs. 1(a) and 1(b), a structure that has plural ring-shaped zones 102 wherein directions of steps 101 are the same within an effective diameter and the cross section including the optical axis is step-shaped as shown schematically in Figs. 2(a) and 2(b), a structure that has plural ring-shaped zones 103 in which a step-shaped structure is formed as shown schematically in Figs. 3(a) and 3(b), and a structure that has plural ring-shaped zones 105 wherein directions of steps 104 are changed within an effective diameter and the cross section including the optical axis is step-shaped as shown schematically in Figs. 4(a) and 4(b). The optical path difference providing structure includes a structure that has plural ring-shaped zones 105 wherein directions of steps 104 are changed within an effective diameter and the cross section including the optical axis is step-shaped as shown schematically in Figs. 4(a) and 4(b). Therefore, the structure shown schematically in Figs. 4(a) and 4(b) is a diffractive structure on one occasion, and it is an optical path difference providing structure on another occasion. Incidentally, each of Figs. 1(a) to 4(b) is one showing schematically the occasion where each phase structure is formed on a plane surface. However, each phase structure may also be formed on a spherical surface or on aspheric surface. Incidentally, in the present specification, the diffractive structure composed of plural ring-shaped zones shown in each of Figs 1(a), 1(b), 2(a), 2(b), 4(a) and 4(b) is given a symbol "DOE", and the diffractive structure composed of plural ring-shaped zones in which a step-shaped structure is formed as shown in Figs. 3(a) and 3(b) is given a symbol "HOE".

By causing a light flux with wavelength λ1 to enter the objective lens as gently converged light and by causing a light flux with wavelength λ3 to enter the objective lens as gently diverged light, as in the structures described in Items 2-1 through 2-4, it is possible to control the optical system magnification of the objective lens, and to control an amount of generation of aberration in the course of tracking, compared with an occasion where a light flux with wavelength λ1 is caused to enter as parallel light.

Further, if at least one of 0.9 x t1 ≤ t2 for protective substrate thickness t2, 0 < m1 ≤ 1/15 for optical system magnification m1 and -1/15 ≤ m3 < 0 for optical system magnification m3 is satisfied, an amount of generation of aberration in the course of tracking can be controlled even in the case of a super-slim lens that is thinner than the conventional objective lens.

Item 2-5

The structure described in Item 2-5 is the objective lens described in any one of Items 2-1 through 2-4, includes a phase structure on at least one optical surface of the objective lens.

In the structure described in Item 2-5, a phase structure is provided on at least one optical surface of the objective lens. Owing to this phase structure, therefore, the first optical disc and the second optical disc are made compatible each other, aberration caused during temperature changes by temperature-dependency of the refractive index of a material representing plastic of which an objective lens is made can be corrected, and color correction of the first optical disc having the shortest wavelength can be conducted. Item 2-6

The structure described in Item 2-6 is the objective lens described in Item 2-5, wherein the phase structure is a diffractive structure.

In the structure described in Item 2-6, compatibility between the first optical disc and the second optical disc, correction of aberration of the objective lens concerning temperatures or color correction of the first optical disc can be carried out more effectively, because the phase structure is a diffractive structure.

Item 2-7

The structure described in Item 2-7 is the objective lens described in Item 2-6, wherein an Abbe constant vd satisfies $40 \leq vd \leq 90$, the diffractive structure comprises ring-shaped zones arranged on an area on the first optical surface of the objective lens and the area is not used for information recording or reproducing for the third optical disc, and a step difference of each of the ring-shaped zones $d_{out}$ along a parallel direction to an optical axis satisfies $(2k - 1) \times \lambda1/(n1 - 1) \leq d_{out} < 2k \times \lambda1/(n1 - 1)$.

In the structure described in Item 2-7, an Abbe constant vd satisfies $40 \leq vd \leq 90$, the diffractive structure comprises ring-shaped zones arranged on an area on the first optical surface of the objective lens and the area is not used for information recording or reproducing for the third optical disc, and a step difference of each of the ring-shaped zones $d_{out}$ along a parallel direction to an optical axis satisfies $(2k - 1) \times \lambda1/(n1 - 1) \leq d_{out} < 2k \times \lambda1/(n1 - 1)$. Therefore, the light flux with wavelength λ3 which has passed through the area is dispersed in terms of an amount of light into two or more unwanted diffracted light, thus, intense false signals are not generated in focus signals of the third optical disc. Accordingly, focusing of the objective lens can be carried out properly.

Item 2-8

The structure described in Item 2-8 is the objective lens described in Item 2-7, wherein $5 \times \lambda1/(n1 - 1) \leq d_{out} < 6 \times \lambda1/(n1 - 1)$ is satisfied.

In the structure described in Item 2-8, theoretical diffractive efficiency of the diffracted light in working light fluxes having respectively wavelengths λ1 and λ2, because $5 \times \lambda1/(n1 - 1) \leq d_{out} < 6 \times \lambda1/(n1 - 1)$ is satisfied.

Item 2-9

The structure described in Item 2-9 is the objective lens described in Item 2-7 or Item 2-8, wherein when P0 represents a paraxial converging position in the case where a light flux emitted from the first light source and having a wavelength increased by +10 nm is made to enter, P1 represents a converging position of the light flux which has passed through the area farthest from the optical axis among the first area used for recording and/or reproducing for the light flux having the wavelength λ3, P2 represents a converging position of the light flux which has passed through the area nearest to the optical axis among the second area arranged outside the first area, and P3 represents a converging position of the light flux which has passed through the area farthest from the optical axis, the following expressions are satisfied.

$$1.7 \times 10^{-3} \leq |P2 - P3| \leq 7.0 \times 10^{-3}$$

$$P0 \leq P2 \leq P1 \text{ or } P1 \leq P2 \leq P0$$

Further, to avoid an adverse effect on recording and reproducing signals, it is preferable that the unwanted diffracted light is not converged at the position of converged spot of the light flux with wavelength $\lambda 3$ even a light amount of the unwanted diffracted light is small. Among light converging positions and spherical aberrations of two diffraction order light each having highest amount of light, the spherical aberration is determined by a magnification of the second optical disc for the first optical disc. On the other hand, wavelength characteristics are determined by the optical system magnification of the second optical disc for the first optical disc, and therefore, an appropriate magnification is established from the viewpoint of both spherical aberration and wavelength characteristics.

Among light converging positions and spherical aberrations of two diffraction order light each having highest amount of light, the light converging position is determined by chromatic aberration of the objective lens. To keep the light converging position of a flare light and a focus position to be away from each other as far as possible, an absolute value of chromatic aberration needs to be greater. However, if the chromatic aberration grows greater, a diffraction pitch becomes small and efficiency declines, resulting impossible recording in the case of mode-hop, which is a problem. Therefore, it is important to keep the balance between chromatic aberration and a light converging position of a flare light.

From the foregoing, as the structure described in item 2-9, in the case where a light flux emitted from the first light source and having a wavelength increased by +10 nm is made to enter, if the following expressions are satisfied,

$$1.7 \times 10^{-3} \leq |P2 - P3| \leq 7.0 \times 10^{-3}$$

and

$$P0 \leq P2 \leq P1 \text{ or } P1 \leq P2 \leq P0,$$

where P0 represents a paraxial converging position, P1 represents a converging position of the light flux which has passed through the area farthest from the optical axis among the first area used for recording and/or reproducing for the light flux having the wavelength $\lambda 3$, P2 represents a converging position of the light flux which has passed through the area nearest to the optical axis among the second area arranged outside the first area, and P3 represents a converging position of the light flux which has passed through the area farthest from the optical axis, it is possible to control deterioration of wavefront aberration for the light flux with wavelength $\lambda 1$ where error sensitivity is strict because of a short wavelength and high NA, even in the case of wavelength changes, temperature changes, or of the mode-hop. It is also possible to lower light density by converging light at the position other than the light converging spot on the optical disc for the light flux having numerical aperture NA3 or more and wavelength $\lambda 3$.

Item 2-10

The structure described in Item 2-10 is the objective lens described in Item 2-7 or Item 2-8, wherein when the first light source emits the light flux having wavelength $\lambda 1$ whose wavelength changes, an inclination of aberration in the first area in the longitudinal spherical aberration and an inclination of aberration in the second area are in the same direction.

In the structure described in Item 2-10, when a wavelength is changed for the light flux having wavelength $\lambda 1$, an inclination of aberration in the first area in the longitudinal spherical aberration and an inclination of aberration in the second area are in the same direction. The expression that "an inclination of aberration in the first area in the longitudinal spherical aberration and an inclination of aberration in the second area are in the same direction" or "a longitudinal aberration in the first area and a longitudinal aberration in the second area are inclined to a same direction" means that when a light flux intersects the optical axis to be farther in terms of its intersection from the objective lens as a distance from the optical axis to the point where light passes through the objective lens grows greater in the first area, the light intersects the optical axis to be farther in terms of its intersection from the objective lens as a distance from the optical axis to the point where light passes through the objective lens grows greater also in the second area. On the other hand, the aforesaid expression also means that when light intersects the optical axis to be closer in terms of its intersection to the objective lens as a distance from the optical axis to the point where light passes through the objective lens grows greater in the first area, the light intersects the optical axis to be closer in terms of its intersection to the objective lens as a distance from the optical axis to the point where light passes through the objective lens grows greater also in the second area. In this case, it is difficult to solve high order aberration by the combination of optical elements. However, if a displacement direction of a light converging position of the light flux that has passed through the first area and a displacement direction of a light converging position of the light flux that has passed through the second area are in the same direction, it is possible to conduct aperture limitation properly on the third optical disc side, without generating high order aberration on wavefront aberration even in the case of wavelength changes and temperature changes.

Item 2-11

The structure described in Item 2-11 is the objective lens described in Item 2-6, converges the light flux that has passed through the area which is not less than the numerical aperture for the light flux with wavelength $\lambda 3$ on the optical surface is converged at the position which is away from the light-convergent spot position on the third optical disc, when a light flux with wavelength $\lambda 3$ enters.

In the structure described in Item 2-11, when the light flux with wavelength $\lambda 3$ enters, the light which has passed through the area that is not less than the numerical aperture for the light flux with wavelength $\lambda 3$ on the optical surface is converged at the position that is away from the light-convergent spot position on the third optical disc by 0.01 mm or more. Therefore, it is possible to cause the light flux with wavelength $\lambda 3$ with numerical aperture NA3 or more to be converged at the position that is away from the light converged spot to the extent where there is no problem for recording and reproducing for wavelength $\lambda 3$ on the optical disc, and it is also possible to control wavefront aberration deterioration, in the occasion of wavelength changes of the light flux with wavelength $\lambda 1$ where error sensitivity is great, and of temperature changes or of mode-hop.

Item 2-12

The structure described in Item 2-12 is the objective lens described in Item 2-6, wherein the phase structure gives positive diffractive function to at least one light flux among the light fluxes having respectively wavelength $\lambda 1$, wavelength $\lambda 2$ and wavelength $\lambda 3$.

In the structure described in Item 2-12, it is possible to correct aberration property for the temperature of the objective lens caused by temperature-dependency of refractive index of a material when a material of the objective lens is plastic, because the phase structure gives positive diffractive function to at least one light flux among the light fluxes having respectively wavelength $\lambda 1$, wavelength $\lambda 2$ and wavelength $\lambda 3$.

Item 2-13

The structure described in Item 2-13 is the objective lens described in Item 2-10, wherein a third-order spherical aberration change in the case of temperature rise which is a component of wavefront aberration of a light-convergent spot formed on the information recording surface is positive, for at least one optical disc among the first, the second and the third optical discs.

In this case, if a sign of the third-order spherical aberration change for a long wavelength change is opposite to a sign of the third-order spherical aberration change for a temperature rise, both signs cancel each other, because an oscillation wavelength of a laser becomes longer under an ordinary environment at high temperature. Further, if the positive spherical aberration remains as a spherical aberration change as in Item 2-13, without canceling completely, wavefront aberration deterioration can be controlled in the case of wavelength changes and temperature changes.

Item 2-14

The structure described in Item 2-14 is the objective lens described in Item 2-6, wherein the power of the phase structure is negative.

As in the structure described in Item 2-14, chromatic aberration caused by wavelength changes can be corrected by canceling the phase structure provided on the optical surface of the objective lens with negative diffracting power and with positive refractive power by the material of the objective lens, for at least one light flux among the light fluxes having respectively wavelength $\lambda 1$, wavelength $\lambda 2$ and wavelength $\lambda 3$

Item 2-15

The structure described in Item 2-15 is the objective lens described in any one of Items 2-5 through 2-14, wherein the phase structure is provided on the area through which the light flux with wavelength λ2 passes on the optical surface.

In the structure described in Item 2-15, the first optical disc and the second optical disc can be made to be compatible each other, because the phase structure is provided on the area through which the light flux with wavelength λ2 passes on the optical surface. Further, when HD and DVD are used as the first optical disc and the second optical disc whose effective diameters are mostly the same, for example, color correction of the first optical disc can be carried out.

Item 2-16

The structure described in Item 2-16 is the objective lens described in any one of Items 2-6 through 2-15, the phase structure transmits the first light flux without providing a phase difference and diffracts the second light flux with providing a phase difference.

In the structure described in Item 2-16, can provide selectively a diffracting function to an entering light flux corresponding to the wavelength of the light flux, because the phase structure transmits the light flux with wavelength λ1 without providing a phase difference substantially, and diffracts the light flux with wavelength λ2 with providing a phase difference substantially.

Item 2-17

The structure described in Item 2-17 is the objective lens described in any one of Items 2-6 through 2-15, the phase structure transmits the second light flux without providing a phase difference and diffracts the first light flux with providing a phase difference.

Item 2-18

The structure described in Item 2-18 is the objective lens described in Item 2-14, wherein, the following expression is satisfied,

$$|dfb/d\lambda| \leq 0.1 \ [\mu m/nm]$$

where dfb/dλ is a change amount of position along an optical axis on which a wavefront aberration is minimum corresponding to a wavelength variation with 1 nm of the first light flux in a converged spot formed on the information recording surface of the first optical information medium.

Item 2-19

The structure described in Item 2-19 is the objective lens described in Item 2-14, wherein, the following expression is satisfied,

$$|dfb/d\lambda| \leq 0.2 \ [\mu m/nm]$$

where dfb/dλ is a change amount of position along an optical axis on which a wavefront aberration is minimum corresponding to a wavelength variation with 1 nm of the first light flux in a converged spot formed on the information recording surface of the first optical information medium.

Item 2-20

The structure described in Item 2-20 is the objective lens described in any one of Items 2-5 through 2-19, wherein the phase structure is a diffractive structure including plural ring-shaped zones in a shape of concentric circles each having its center on the optical axis, a cross sectional form of the phase structure including the optical axis is in a serrated form, and distance d of a step in the optical axis direction of each ring-shaped zone formed on the area used for recording and/or reproducing for wavelength $\lambda 3$ satisfies the following expression;

$$8 \times \lambda 1/(n1 - 1) \leq d < 9 \times \lambda 1/(n1 - 1)$$

wherein n1 represents the refractive index of the objective lens for the light flux with wavelength $\lambda 1$.

Item 2-21

The structure described in Item 2-21 is the objective lens described in any one of Items 2-5 through 2-19, wherein the phase structure is a diffractive structure including plural ring-shaped zones in a shape of concentric circles each having its center on the optical axis, a cross sectional form of the phase structure including the optical axis is in a serrated form, and step difference d along the optical axis direction of each ring-shaped zone formed on the area used for recording and/or reproducing for wavelength $\lambda 3$ satisfies the following expression;

$$6 \times \lambda 1/(n1 - 1) \leq d < 7 \times \lambda 1/(n1 - 1)$$

wherein n1 represents the refractive index of the objective lens for the light flux with wavelength $\lambda 1$.

Item 2-22

The structure described in Item 2-22 is the objective lens described in any one of Items 2-5 through 2-19, wherein the phase structure is a diffractive structure including plural ring-shaped zones in a shape of concentric circles each having its center on the optical axis, a cross sectional form of the phase structure including the optical axis is in a serrated form, and step difference d along the optical axis direction of each ring-shaped zone formed on the area used for recording and/or reproducing for wavelength $\lambda 3$ satisfies the following expression;

$$10 \times \lambda 1/(n1 - 1) \leq d < 12 \times \lambda 1/(n1 - 1)$$

wherein n1 represents the refractive index of the objective lens for the light flux with wavelength $\lambda 1$.

Item 2-23

The structure described in Item 2-23 is the objective lens described in any one of Items 2-1 through 2-22, wherein focal length f1 of the objective lens for the light flux with wavelength $\lambda 1$ satisfies 0.8 mm $\leq$ f1 $\leq$ 4.0 mm.

Item 2-24

The structure described in Item 2-24 is the objective lens described in Item 2-23, wherein focal length f1 of the objective lens for the light flux with wavelength $\lambda 1$ satisfies 1.3 mm $\leq$ f1 $\leq$ 2.2 mm.

Item 2-25

The structure described in Item 2-25 is the objective lens described in any one of Items 2-1 through 2-24, wherein numerical aperture NA3 of the objective lens on the optical disc side for the light flux with wavelength $\lambda 3$ satisfies 0.49 $\leq$ NA3 $\leq$ 0.54.

Item 2-26

The structure described in Item 2-26 is the objective lens described in any one of Items 2-1 through 2-25, wherein t1 = t2 is satisfied.

Item 2-27

The structure described in Item 2-27 is the objective lens described in any one of Items 2-1 through 2-26, wherein m2 = 0 is satisfied for optical system magnification m2 of the objective lens for the light flux with wavelength λ2.

In the structure described in Item 2-27, m2 = 0 is satisfied for optical system magnification m2 of the objective lens for the light flux with wavelength λ2, and therefore, no coma is caused in the course of tracking, because a parallel light enters the objective lens for the second optical disc having high NA.

Item 2-28

The structure described in Item 2-28 is the objective lens described in any one of Items 2-1 through 2-27, wherein the objective lens is made of a plastic material.

Item 2-29

The structure described in Item 2-29 is the objective lens described in any one of Items 2-1 through 2-27, wherein the objective lens is made of a glass material.

Item 2-30

The structure described in Item 2-30 is the objective lens described in any one of Items 2-1 through 2-29, wherein the objective lens includes two combined lenses.

Item 2-31

The structure described in Item 2-31 is the objective lens described in Item 2-5, wherein the objective lens is composed of two or more lenses, and a lens arranged closest to the light source has the phase structure.

Item 2-32

The structure described in Item 2-32 is provided with the objective lens described in any one of Items 2-1 through 2-31.

Item 2-33

The structure described in Item 2-33 is the optical pickup apparatus described in Item 2-32, further has a numerical aperture limiting element arranged in an optical path of the light flux with wavelength λ3.

Item 2-34

The structure described in Item 2-34 is the optical pickup apparatus described in Item 2-32, wherein the numerical aperture limiting element is a liquid crystal element or a wavelength- selective filter.

Item 2-35

The structure described in Item 2-35 is the optical pickup apparatus described in Item 2-32, further has a chromatic aberration correcting element arranged in an optical path of the light flux with wavelength λ1 for correcting a chromatic aberration of the light flux with wavelength λ1.

Item 2-36

The structure described in Item 2-36 is the optical pickup apparatus described in Item 2-32, further has: a photodetector for receiving the first light flux reflected on an information recording surface of the first optical disc when the optical pickup apparatus reproduces or records information on the first optical disc, for receiving the second light flux reflected on an information recording surface of the second optical disc when the optical pickup apparatus reproduces or records information on the second optical disc, and for receiving the third light flux reflected on an information recording surface of the third optical disc when the optical pickup apparatus reproduces or records information on the third optical disc.

Item 2-37

The structure described in Item 2-37 is the optical pickup apparatus described in Item 2-36, further has a coupling lens arranged in a common optical path of the light fluxes having respectively wavelength $\lambda 1$, wavelength $\lambda 2$ and wavelength $\lambda 3$ and being movable in the optical axis direction.

In this case, magnification of the objective lens for all of three wavelengths are different each other. However, if conjugate lengths of the optical system in which a objective lens and a coupling lens are combined are made uniform for three wavelengths by arranging a coupling lens on a common optical path for respective light fluxes with wavelengths $\lambda 1$, $\lambda 2$ and $\lambda 3$ and by moving the coupling lens, it is possible to use a laser wherein sensors are made uniform for three wavelengths, and plural light sources are made to be one package. The coupling lens may be either of a single lens or of plural lenses, and when it is of plural lenses, there is imagined that one of the plural lenses moves, or plural lenses move simultaneously.

Item 2-38

The structure described in Item 2-38 is the optical pickup apparatus described in Item 2-37, further has: a coupling lens arranged in a common optical path of the light fluxes with wavelengths $\lambda 1$, $\lambda 2$ and $\lambda 3$ and
a liquid crystal element arranged in a common optical path of the light fluxes with wavelengths $\lambda 1$, $\lambda 2$ and $\lambda 3$.

Magnifications of the objective lens for all of three wavelengths are different each other. However, it is possible to use a laser wherein sensors are made uniform for three wavelengths, and plural light sources are made to be one package, by arranging a coupling lens and a liquid crystal element on the common optical path for respective light fluxes with wavelengths $\lambda 1$, $\lambda 2$ and $\lambda 3$, and by uniformizing conjugate lengths of the optical system in which the objective lens, the coupling lens and the liquid crystal element are combined for three wavelengths.

Item 2-39

The structure described in Item 2-39 is the optical pickup apparatus described in Item 2-37 or Item 2-38, wherein a diffractive structure is formed on at least one surface of the coupling lens.

In the structure described in Item 2-39, it is possible to control chromatic aberration for the light flux with wavelength $\lambda 1$ and wavefront aberration deterioration caused by temperature changes, by using a diffracting function, because a diffractive structure is formed on at least one surface of the coupling lens.

Item 2-40

The structure described in Item 2-40 is the optical pickup apparatus described in Item 2-39, wherein the diffractive structure of the coupling lens satisfies the following expression

$$|dfb/d\lambda| \leq 0.1 \ [\mu m/nm],$$

where $dfb/d\lambda$ is a change amount of a position along an optical axis on which a wavefront aberration is minimum corresponding to a wavelength variation with 1 nm of the first light flux in a converged spot formed on the information recording surface of the first optical information medium.

Item 2-41

The structure described in Item 2-41 is the optical pickup apparatus described in Item 2-37, wherein the coupling lens and the liquid crystal element are united solidly.

Item 2-42

The structure described in Item 2-42 is the optical pickup apparatus described in any one of Items 2-36 through 2-41, wherein the second light source and the third light source are housed in the same casing to be one package.

Item 2-43

The structure described in Item 2-43 is the optical pickup apparatus described in Item 2-31, among a photodetector that receives a light flux which is reflected on an information recording surface of at least one of the first, second and third optical discs, further has a photodetector that receives a light flux that is emitted from the first light source and is reflected on an information recording surface of the first optical disc and a light flux that is emitted from the second light source and is reflected on an information recording surface of the second optical disc and a photodetector that receives a light flux that is emitted from the third light source and is reflected on an information recording surface of the third optical disc.

Item 2-44

The structure described in Item 2-44 is the optical pickup apparatus described in Item 2-43, further has a coupling lens arranged on the common optical path of respective light fluxes with wavelengths λ1, λ2 and λ3, and a diffractive structure provided on at least one optical surface of the coupling lens.

In the structure described in Item 2-44, a coupling lens is arranged on the common optical path for respective light fluxes with wavelengths λ1, λ2 and λ3, and a diffractive structure is provided on at least one optical surface of the coupling lens, and thereby, the sensors for the light fluxes respectively with wavelengths λ1 and λ2 can be made uniform by the diffractive structure. Further, the diffractive structure can conduct chromatic aberration correction for wavelength λ1 simultaneously. The diffractive structure may be formed either on one surface or on plural surfaces. If a structure is arranged so that light with wavelength λ3 may also pass through the coupling lens, it results in reduction of the number of parts of the entire optical system.

Item 2-45

The structure described in Item 2-45 is the optical pickup apparatus described in Item 2-44, wherein focal length $f_c$ of the coupling lens for the light flux with wavelength wavelengths λ1 satisfies 6 mm $\leq f_c \leq$ 15 mm.

Item 2-46

The structure described in Item 2-46 is the optical pickup apparatus described in Item 2-44, further has a chromatic aberration correcting element for the light flux with wavelength λ1 arranged in the optical path through which only the light flux with wavelength λ1 passes.

Item 2-47

The structure described in Item 2-47 is the optical pickup apparatus described in any one of Items 2-44 through 2-46, further has an astigmatism generating plate arranged in the optical path between a photodetector that receives a light flux that is emitted from the first light source and is reflected on an information recording surface of the first optical disc and a light flux that is emitted from the second light source and is reflected on an information recording surface of second optical disc and the coupling lens, and the light flux with at least one of the wavelength λ1 and wavelength λ2 is reflected on the astigmatism generating plate and enters the coupling lens.

In the structure described in Item 2-47, though the light flux with at least one of the wavelength λ1 and wavelength λ2 is reflected on the astigmatism generating plate and enters the coupling lens, this astigmatism generating plate gives astigmatism to light entering the photodetector and also has a function to deflect light that travels from the light source to the coupling lens, which makes it unnecessary to install parts each having individual function, resulting in reduction of the number of parts of the entire optical pickup apparatus.

Item 2-48

The structure described in Item 2-48 is the optical pickup apparatus described in any one of Items 2-44 through 2-46, further has a compound beam splitter arranged in the optical path between a photodetector that receives a light flux that is emitted from the first light source and is reflected on an information recording surface of the first optical disc and a light flux that is emitted from the second light source and is reflected on an information recording surface of second optical disc and the coupling lens, wherein light fluxes respectively with the wavelength λ1 and the compound beam splitter merges optical paths of the first light flux and second light flux, the first and second light fluxes whose optical paths are merged by the compound beam splitter enters into the coupling lens, and the compound beam splitter makes a difference between forward optical paths of the first and second light fluxes and backward optical paths of the light fluxes respectively with wavelengths λ1 and λ2.

In the structure described in Item 2-48, it is possible to reduce the number of parts of the entire pickup apparatus because there is used a multifunctional compound beam splitter having functions for merging optical paths for light fluxes with wavelength λ1 and wavelength λ2 and for branching into the forward optical path and the backward optical path.

Item 2-49

The structure described in Item 2-49 is the optical pickup apparatus described in Item 2-48, wherein the compound beam splitter includes a first surface having a dichroic function which transmits or reflects an entering light flux depending on a wavelength, the second surface having a beam splitter function which transmits or reflects an entering light flux depending on a direction of polarization of light and the third surface that reflects an entering light flux.
In the structure described in Item 2-49, it is possible to establish freely an angle between light of emergence and incident light for the compound beam splitter, and thereby, to downsize an optical pickup apparatus, because the compound beam splitter has the first surface for merging optical paths, the second surface for branching into the forward optical path and the backward optical path and the third surface for reflecting light.

Item 2-50

The structure described in Item 2-50 is the optical pickup apparatus described in Item 2-49, wherein the light flux with wavelength λ2 emerges from the compound beam splitter after being transmitted through the first and second surfaces, when emitted from the second light source, and it emerges from the compound beam splitter after being reflected on the second surface and the third surface, when emerging from the coupling lens, while, the light flux with wavelength λ1 emerges from the compound beam splitter after being reflected on the first surface and transmitted through the second surface, when emitted from the first light source, and it emerges from the compound beam splitter after being reflected on the second surface and the third surface, when emerging from the coupling lens.

Item 2-51

The structure described in Item 2-51 is the optical pickup apparatus described in Item 2-44, wherein the diffractive structure formed on the coupling lens includes plural ring-shaped zones in a form of concentric circles each having its center on the optical axis, and the cross section of the diffractive structure including the optical axis is serrated, and step difference d along the optical axis direction of each ring-shaped zone satisfies the following expression;

$$2 \times \lambda 1/(n1 - 1) \leq d < 3 \times \lambda 1/(n1 - 1)$$

wherein n1 represents the refractive index of the coupling lens for the light flux with wavelength λ1.

Item 2-52

The structure described in Item 2-52 is the optical pickup apparatus described in any one of Items 2-44 through 2-51, wherein the diffractive structure of the coupling lens is formed on each of the optical surface of the coupling lens on the optical disc side and the optical surface on the light source side.

Item 2-53

The structure described in Item 2-53 is the optical pickup apparatus described in Item 2-52, wherein the diffractive structure formed on the optical surface of the coupling lens on the light source side includes plural ring-shaped zones in a form of concentric circles each having its center on the optical axis, and the cross section of the diffractive structure including the optical axis is serrated, and step difference d along the optical axis direction of each ring-shaped zone satisfies the following expression;

$$10 \times \lambda 1/(n1 - 1) \leq d < 12 \times \lambda 1/(n1 - 1)$$

wherein n1 represents the refractive index of the coupling lens for the light flux with wavelength λ1.

Item 2-54

The structure described in Item 2-54 is the optical pickup apparatus described in Item 2-52 or Item 2-53 wherein the diffractive structure formed on the optical surface of the coupling lens on the light source side, transmits the light flux with wavelength $\lambda 1$ without providing a phase difference substantially, while, diffracts the light flux with wavelength $\lambda 2$ with providing a phase difference substantially.

Item 2-55

The structure described in Item 2-55 is the optical pickup apparatus described in Item 2-44, wherein a coupling lens through which the light flux with wavelength $\lambda 1$ and the light flux with wavelength $\lambda 2$ pass and a coupling lens through which the light flux with wavelength $\lambda 3$ passes are arranged separately.

Item 2-56

The structure described in Item 2-56 is the optical pickup apparatus described in Item 2-43, wherein the photodetector that receives the light flux which is emitted from the third light source and is reflected on the information recording surface of the third optical disc is a hologram laser.

Item 2-57

The structure described in Item 2-57 is the optical pickup apparatus described in Item 2-32, among a photodetector receiving a light flux that is emitted from the second light source and reflected on an information recording surface of the second optical disc and a light flux that is emitted from the third light source and reflected on an information recording surface of the third optical disc, a photodetector receiving a light flux that is emitted from the first light source and reflected on an information recording surface of the first optical disc are provided concerning a photodetector receiving the light flux reflected on at least one information recording surface among the first, second and third optical discs.

Item 2-58

The structure described in Item 2-58 is the optical pickup apparatus described in Item 2-57, further has a coupling lens that has a diffractive structure and arranged to be common so that a light flux with wavelength $\lambda 2$ and a light flux with wavelength $\lambda 3$ may pass through.
In the structure described in Item 2-58, sensors respectively for a light flux with wavelength $\lambda 1$ and for a light flux with wavelength $\lambda 2$ can be made to be common, by making conjugate lengths of the optical systems each including an objective lens and a coupling lens respectively for a light flux with wavelength $\lambda 1$ and a light flux with wavelength $\lambda 2$ uniform, by the diffractive structure provided on the coupling lens, because there is provided a coupling lens that has a diffractive structure and is made to be common so that a light flux with wavelength $\lambda 2$ and a light flux with wavelength $\lambda 3$ may pass through. If an individual coupling lens is used for a light flux with wavelength $\lambda 1$, magnifications of all optical systems can be established freely, and if a coupling lens that is common to light fluxes respectively with wavelength $\lambda 1$ and wavelength $\lambda 3$ is used, the number of parts of the optical pickup apparatus can be reduced.

Item 2-59

The structure described in Item 2-59 is the optical pickup apparatus described in Item 2-57 or Item 2-58, wherein the photodetector receiving a light flux that is emitted from the second light flux and is reflected on the information recording surface of the second optical disc and a light flux that is emitted from the third light flux and is reflected on the information recording surface of the third optical disc, the second light source and the third light source are housed in the same casing to be one package.

Item 2-60

The structure described in Item 2-60 is the optical pickup apparatus described in Item 2-32, further has a photodetector that receives a light flux that is emitted from the first light source and is reflected on the information recording surface of the first optical disc; the first laser including a photodetector receiving a light flux that is emitted from the second light source and is reflected on the information recording surface of the second optical disc and the second light source to be one package; and the second laser includes a photodetector receiving a light flux that is emitted from the third light source and is reflected on the information recording surface of the third optical disc and the third light source to be one package.

In the structure described in Item 2-60, even when conjugate lengths wherein a coupling lens and an objective lens are combined for three light fluxes respectively with three wavelengths are different each other, the optical pickup apparatus can be constituted with less number of parts, because the structure is provided with a photodetector, the first laser, and the second laser. Herein the photodetector receives a light flux that is emitted from the first light source and is reflected on the information recording surface of the first optical disc, the first laser houses a photodetector receiving a light flux that is emitted from the second light source and is reflected on the information recording surface of the second optical disc and the second light source, to be one package, and the second laser houses a photodetector receiving a light flux that is emitted from the third light source and is reflected on the information recording surface of the third optical disc and the third light source, to be one package.

Item 2-61

The structure described in Item 2-61 is the optical pickup apparatus described in Item 2-32, further has a laminated prism having a function of plural prisms arranged on the common optical path of at least two light fluxes among respective light fluxes respectively with wavelengths λ1, λ2 and λ3.

The structure described in Item 2-61, it is possible to merge an optical path by making plural light fluxes each having a different wavelength to be close each other, because a laminated prism having a function of plural prisms is arranged on the common optical path for at least two light fluxes among respective light fluxes respectively with wavelengths λ1, λ2 and λ3. Therefore, it is possible to push forward the reduction of the number of parts and downsizing of the optical pickup apparatus.

Item 2-62

The structure described in Item 2-62 is the optical pickup apparatus described in any one of Items 2-32 through 2-36, 2-42, 2-43, 2-57, 2-60 and 2-61, further has a coupling lens having a diffraction grating on a common optical path for light fluxes respectively with wavelengths λ1, λ2 and λ3, and the diffraction grating of the coupling lens detects a movement of the objective lens in the direction perpendicular to the optical axis.

Item 2-63

The structure described in Item 2-63 is the optical pickup apparatus described in any one of Items 2-37 through 2-41, 2-44 through 2-55, 2-58 and 2-59, wherein a diffraction grating is provided on the coupling lens, and the diffraction grating on the coupling lens detects a movement of the objective lens in the direction perpendicular to the optical axis.

One of the detecting method of tracking of the objective lens is a three-beam method which is one in which a sensor receives three diffracted light generated by the diffraction grating. If the diffraction grating is united with the coupling lens solidly as in the structures in Items 2-62 and 2-63, the number of parts can be reduced.

Item 2-64

A coupling lens in the structure described in Item 2-64 is provided on the optical pickup apparatus described in Item 2-36, and it can move in the optical axis direction on the common optical path for respective light fluxes with wavelengths λ1, λ2 and λ3.

Item 2-65

A structure described in Item 2-65 is united with a liquid crystal element solidly in the coupling lens described in Item 2-64.

Item 2-66

A coupling lens in a structure described in Item 2-66 is provided on the optical pickup apparatus described in Item 2-43, and a diffractive structure is provided on at least one optical surface, and is arranged on the common optical path for respective light fluxes with wavelengths λ1, λ2 and λ3.

Item 2-67

With respect to the structure described in Item 2-67, in the coupling lens described in Item 2-66, focal length

$f_c$ for the light flux with wavelength $\lambda 1$ satisfies 6 mm $\leq f_c \leq$ 15 mm.

Item 2-68

With respect to the structure described in Item 2-68, in the coupling lens described in Item 2-66, a coupling lens through which the light fluxes respectively with wavelength $\lambda 1$ and wavelength $\lambda 2$ pass and a coupling lens through which a light flux with wavelength $\lambda 3$ passes are arranged separately.

Item 2-69

A coupling lens in the structure described in Item 2-69 is provided on the optical pickup apparatus described in Item 2-57, and it has a diffractive structure and is made to be common so that light fluxes respectively with wavelengths $\lambda 2$ and $\lambda 3$ may pass through.

The invention makes it possible to obtain an objective lens that is used for reproducing and/or recording of information for at least three types of optical discs including a high density optical disc and is free from the problem of tracking characteristics, and an optical pickup apparatus employing the objective lens.

**EXAMPLES**

Preferred embodiments for practicing the invention will be explained in detail as follows, referring to the drawings.

(First Embodiment)

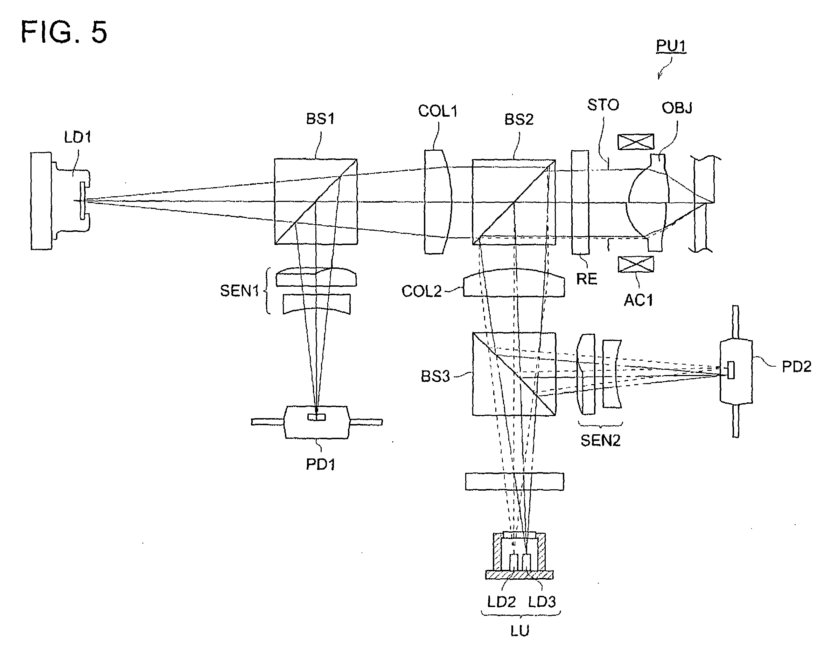

Fig. 5 is a diagram showing schematically the structure of optical pickup apparatus PU1 capable of conducting recording and reproducing of information properly for any of HD (first optical disc), DVD (second optical disc) and CD (third optical disc). Optical specifications of HD include wavelength $\lambda 1 = 407$ nm, protective layer (protective substrate) PL1 thickness t1 = 0.6 mm and numerical aperture NA1 = 0.65, optical specifications of DVD include wavelength $\lambda 2 = 655$ nm, protective layer PL2 thickness t2 = 0.6 mm and numerical aperture NA2 = 0.65, and optical specifications of CD include wavelength $\lambda 3 = 785$ nm, protective layer PL3 thickness t3 = 1.2 mm and numerical aperture NA3 = 0.51.

However, the combination of a wavelength, a protective layer thickness and a numerical aperture is not limited to the foregoing. Further, as a first optical disc, BD having protective layer PL1 thickness t1 is about 0.1 mm may also be used.

Further, an optical system magnification (first magnification m1) of the objective lens in the case of conducting recording and/or reproducing of information for the first optical disc satisfies $0 < m1 \leq 1/10$. Namely, in objective lens OBJ in the present embodiment, it is in the structure where the first light flux enter the objective lens as light converged slightly.

With respect to optical system magnifications (second magnification m2 and third magnification m3) of the objective lens in the case of conducting recording and/or reproducing of information for the second optical disc and the third optical disc, they are in the structure, in the present embodiment, where the second light flux enters the objective lens as light converged slightly and the third light flux enters as light diverged slightly ($-1/10 \leq m3 < 0$), although they are not restricted in particular.

Optical pickup apparatus PU1 is provided with blue-violet semiconductor laser LD1 (first light source) that is driven when conducting recording and reproducing of information for high density optical disc HD and emits a laser light flux (first light flux) with a wavelength 407 nm, photodetector PD1 for the first light flux receiving the light flux that receives light flux reflected light flux coming from the blue-violet semiconductor laser LD1 reflected on an information recording surface of HD, light source unit LU wherein red semiconductor laser LD2 (second light source) that is driven when conducting recording and reproducing of information for DVD and emits a laser light flux (second light flux) with a wavelength 655 nm and infrared semiconductor laser LD3 (third light source) that is driven when conducting recording and reproducing of information for CD and emits a laser light flux (third light flux) with a wavelength 785 nm are united, photodetector PD2 that receives a light flux that is emitted from the red semiconductor laser LD2 and reflected on an information recording surface of DVD and a light flux that is emitted from the infrared semiconductor laser LD3 and reflected on an information recording surface of CD, first collimator lens COL1 through which the first light flux only passes, second collimator lens COL2 through which the second and third light fluxes pass, double sided aspheric objective lens OBJ which has, on its optical surface, a diffractive structure representing a phase structure and has a function to converge laser light fluxes respectively on information recording surfaces RL1, RL2 and RL3, first beam splitter BS1, second beam splitter BS2, third beam splitter BS3, diaphragm STO, 1/4 wavelength plate RE, and sensor lenses SEN1 and SEN2.

When conducting recording and reproducing of information for high density optical disc HD in optical pickup apparatus PU1, blue-violet semiconductor laser LD1 is first driven to emit light, as its path of a ray of light is drawn with solid lines in Fig. 5. A divergent light flux emitted from the blue-violet semiconductor laser LD1 passes through first beam splitter BS1 and arrives at first collimator lens COL1.

Then, the first light flux is converted into light converged slightly when it is transmitted through the first collimator lens COL1, then, it passes through the second beam splitter BS2 and 1/4 wavelength plate RE to arrive at objective lens OBJ, and it becomes a spot that is formed on information recording surface RL1 through the first protective layer PL1 by the objective lens OBJ. Biaxial actuator AC1 arranged around the objective lens OBJ drives it to perform focusing and tracking.

A reflected light flux modulated by information pits on information recording surface RL1 passes again through objective lens OBJ, 1/4 wavelength plate RE, second beam splitter BS2 and first collimator lens COL1, then, is branched by first beam splitter BS1, and is given astigmatism by sensor lens SEN1 to be converged on a light-receiving surface of photodetector PD1. Thus, it is possible to read information recorded on high density optical disc HD by using output signals of the photodetector PD1.

Further, when conducting recording and reproducing of information for DVD, red semiconductor laser LD2 is first driven to emit light, as its path of a ray of light is drawn with solid lines in Fig. 5. A divergent light flux emitted from the red semiconductor laser LD2 passes through third beam splitter BS3 and arrives at second collimator lens COL2.

Then, the second light flux is converted into light converged slightly when it is transmitted through the second collimator lens COL2, then, it is reflected by the second beam splitter BS2, and arrives at objective lens OBJ after passing through 1/4 wavelength plate RE to become a spot that is formed on information recording surface RL2 through the second protective layer PL2 by the objective lens OBJ. Biaxial actuator AC1 arranged around the objective lens OBJ drives it to perform focusing and tracking.

Or, it is also possible to arrange so that the second light flux is converted into light diverged slightly when passing through second collimator lens COL2, then, is reflected by the second beam splitter BS2 to enter the objective lens OBJ after passing through 1/4 wavelength plate RE.

A reflected light flux modulated by information pits on information recording surface RL2 passes again through objective lens OBJ and 1/4 wavelength plate RE, then, passes through collimator lens COL2 after being reflected by second beam splitter BS2 and is branched by third beam splitter BS3 to be converged on a light-receiving surface of photodetector PD2. Thus, it is possible to read information recorded on DVD by using output signals of the photodetector PD2.

Further, when conducting recording and reproducing of information for CD, infrared semiconductor laser LD3 is first driven to emit light, as its path of a ray of light is drawn with one-dot chain lines in Fig. 5. A divergent light flux emitted from the infrared semiconductor laser LD3 passes through third beam splitter BS3 and arrives at second collimator lens COL2.

Then, the third light flux is converted into light converged slightly when it is transmitted through the second collimator lens COL2, then, it is reflected by the second beam splitter BS2, and arrives at objective lens OBJ after passing through 1/4 wavelength plate RE to become a spot that is formed on information recording surface RL3 through the third protective layer PL3 by the objective lens OBJ. Biaxial actuator AC1 arranged around the objective lens OBJ drives it to perform focusing and tracking.

A reflected light flux modulated by information pits on information recording surface RL2 passes again through objective lens OBJ and 1/4 wavelength plate RE, then, passes through collimator lens COL2 after being reflected by second beam splitter BS2 and is branched by third beam splitter BS3 to be converged on a light-receiving surface of photodetector PD2. Thus, it is possible to read information recorded on CD by using output signals of the photodetector PD2.

Next, the structure of objective lens OBJ will be explained.

The objective lens is a plastic lens wherein each of its optical surface S1 on the light source side and optical surface S2 on the optical disc side is aspheric. The optical surface S1 of the objective lens is split into first AREA 1 including the optical axis corresponding to the area within NA3 and second AREA 2 corresponding to the area from NA3 to NA2.

The first AREA 1 is used for recording and/or reproducing for the first, second and third light fluxes on the central side of the optical axis. On the other side, the second AREA 2 is arranged outside the first area to be used for recording and/or reproducing for the first light flux and the second light flux.

Further, when the high density optical disc is BD, it is preferable that the second area AREA 2 is split into areas from NA3 to NA2.

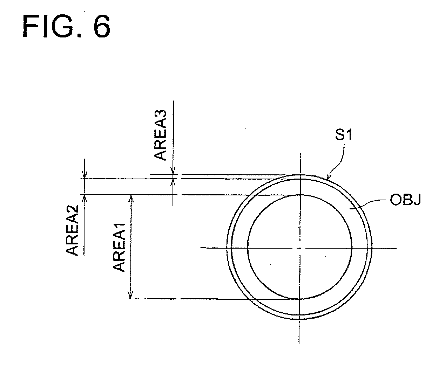

Further, as in the examples shown later, both of the optical surfaces S1 and S2 may be split respectively, and for example, it is also possible to employ the structure wherein division of the first area AREA 1 and the second area AREA 2 is conducted on the optical surface S1 and division of the second area AREA 2 and the third area AREA 3 is conducted on the optical surface S2, to share the division by the two optical surfaces. Further, the structure wherein third area AREA 3 is provided as in Fig. 6 may also be employed.

In the second area AREA 2, step difference $d_{out}$ in the direction running parallel to the optical axis between ring-shaped zones is formed to satisfy $(2k - 1) \times \lambda1/(n1 - 1) \leq d_{out} < 2k \times \lambda1/(n1 - 1)$, preferable to satisfy $5 \times \lambda1/(n1 - 1)$ $d_{out} < 6 \times \lambda1/(n1 - 1)$, in diffractive structure HOE. In this case, Abbe's number vd of the objective lens OBJ satisfies $40 \leq vd \leq 90$.

If the objective lens OBJ is formed as stated above, a light flux with wavelength $\lambda3$ having passed through the area which is not used for recording and/or reproducing for CD is dispersed in terms of an amount of light into two or more unwanted diffracted light, and thereby, intensive false signals are not generated on focus signals of CD. Therefore, focusing of the objective lens can be carried out properly.

Incidentally, when the third light flux enters, light having passed through the second area AREA 2 may also be converged on the position which is away from the light-converged spot position on CD by 0.01 mm. By doing this, it is possible to converge the third light flux with numerical aperture NA3 or more at the position that is away from the light-converged spot to the extent of no problem for recording and reproducing for the third light flux on CD, and to control wavefront aberration deterioration in the case of changes of the wavelength of the first light flux whose error sensitivity is great, temperature changes and of the mode-hop.

It is further possible to make the second area AREA 2 to be of the structure identical to that of the first area AREA 1 which will be described later, and to conduct aperture limitation corresponding to NA3 by using an numerical aperture limiting element arranged separately from the objective lens. Further, the structure wherein numerical aperture limiting element AP is arranged in the vicinity of the optical surface S1 of the objective lens OBJ, and the numerical aperture limiting element AP and the objective lens OBJ are solidly driven for tracking by a biaxial actuator.

On the optical surface of the numerical aperture limiting element AP, there is formed wavelength selection filter WF having the wavelength selectance for transmittance. The wavelength selection filter WF makes all waves from the first wavelength $\lambda1$ to the third wavelength $\lambda3$ to be transmitted in the area within NA3, intercepts only the third wavelength $\lambda3$ in the area from NA3 to NA1, and has the wavelength selectance for transmittance transmitting the first wavelength $\lambda1$ and the second wavelength $\lambda2$, thus, the wavelength selectance can conduct aperture limitation corresponding to NA3.

Further, as a method of limiting the aperture, a method to switch the aperture mechanically and a method to use liquid crystal phase control element LCD which will be described later are also employed, in addition to the method to use the wavelength selection filter WF.

In the diffractive structure HOE formed on the first area AREA 1, difference D of the step structure formed in each ring-shaped zone is established to the value calculated by $D \cdot (N - 1) / \lambda1 = 2 \cdot q$, and division number P in each ring-shaped zone is established to 5. Incidentally, $\lambda1$ is one wherein a wavelength of a laser light flux emitted from the first light-emitting point EP1 is expressed in a micron unit (here, $\lambda1 = 0.408$ $\mu$m), and q represents a natural number.

When the first light flux with first wavelength $\lambda1$ enters the step structure in which the step difference D in the optical axis direction is established as stated above, an optical path difference of $2 \times \lambda1$ ($\mu$m) is generated between the adjoining step structures, and no phase difference is given to the first light flux substantially, thus, the first light flux is transmitted as it is without being diffracted (which is called "0th order diffracted light" in the present specification).

Further, when the third light flux with the third wavelength $\lambda3$ ($\lambda3 = 0.785$ $\mu$m, here) enters this step structure, an optical path difference of $(2 \times \lambda1/\lambda3) \times \lambda3$ ($\mu$m) is generated between the adjoining step structures. Since a length of the third wavelength $\lambda3$ is about twice that of $\lambda1$, an optical path difference of about $1 \times \lambda3$ ($\mu$m) is generated between adjoining step structures, and no phase difference is given to the third light flux substantially as in the first light flux, thus, the third light flux is transmitted as it is without being diffracted (0th order diffracted light).

On the other hand, when the second light flux with the second wavelength $\lambda2$ ($\lambda2 = 0.658$ $\mu$m, here) enters this step structure, an optical path difference of $2 \times 0.408 \times (1.5064 - 1) / (1.5242 - 1) - 0.658 = 0.13$ ($\mu$m) is generated between the adjoining step structures. Since division number P in each ring-shaped zone is established to 5, an optical path difference equivalent to one wavelength of the second wavelength $\lambda2$ is generated between the adjoining ring-shaped zones ($0.13 \times 5 = 0.65 \approx 1 \times 0.658$), and the second light flux is diffracted in the direction of +1st order (+1st order diffracted light). The diffractive efficiency of the +1st order diffracted light of the second light flux in this case is 87.5% which is a sufficient amount of light for recording and reproducing of information for DVD.

A width of each ring-shaped zone of diffractive structure HOE is established so that prescribed spherical aberration may be added to the +1st order diffracted light by the diffracting actions when the second light flux enters. When the spherical aberration caused by magnification of the second optical disc, a substrate thickness and a wavelength for magnification of the first optical disc, a substrate thickness and a wavelength is canceled by the spherical aberration to be added by diffraction, the second light flux forms an excellent spot on information recording surface RL2 of DVD.

Incidentally, diffractive structure DOE 1 or diffractive structure DOE 2 composed of plural ring-shaped zones wherein the cross section including the optical axis is serrated (Fig. 1(a) shows DOE 1 and Fig. 1(b) shows DOE 2) may be formed on the first area AREA 1 on the optical surface S1 of the objective lens OBJ.

In the diffractive structure DOE, difference D of the step in the optical axis direction is established so that the diffractive efficiency of 8th-order diffracted light for wavelength 407 nm (refractive index of the optical element on which diffractive structure DOE is formed for wavelength 407 nm is 1.559806) may be 100%. When the second light flux (refractive index of the optical element on which diffractive structure DOE is formed for wavelength 655 nm is 1.540725) enters the diffractive structure DOE 1 on which a difference of the steps is established as stated above, +5th-order diffracted light is generated at diffractive efficiency of 87.7%, while, when the third light flux (refractive index of the optical element on which diffractive structure DOE is formed for wavelength 785 nm is 1.537237), +4th-order diffracted light is generated at diffractive efficiency of 99.9%, thus, a sufficient diffractive efficiency is obtained in any wavelength area.

On the other hand, if the same distance D of the step in the optical axis direction is established also for diffractive structure DOE 2, the diffracted light for each of the first, second and third light fluxes has the same diffractive efficiency.

As in the present embodiment, a wavelength (blaze wavelength) of light for which the diffractive efficiency is 100% is not λ1, and a diffractive efficiency for λ2 that is shifted slightly from λ1 can be enhanced, which makes it possible to keep balance of the diffractive efficiency for various light with respective wavelengths.

In the case of the diffractive structure DOE, when the wavelength is changed by +10 nm for the first light flux, the relation of

$$1.7 \times 10^{-3} \leq |P2 - P3| \leq 7.0 \times 10^{-3}$$

$$P0 \leq P2 \leq P1 \text{ or } P1 \leq P2 \leq P0$$

is satisfied, when P0 represents a paraxial light-converged position, P1 represents a light-converged position of a light flux having passed through the area farthest from the optical axis in the first area AREA 1, P2 represents a light-converged position of a light flux having passed through the area closest to the optical axis in the second area AREA 2 and P3 represents a light-converged position of the light flux having passed through the area farthest from the optical axis.

By satisfying the aforesaid relation, it is possible to control wavefront aberration deterioration in the case of changes in the wavelength and temperatures and even in the case of the mode-hop, for the first light flux wherein the error sensitivity is severe because the wavelength is short and NA is high. It is also possible to reduce light density while converging light at the position other than the light-converging position on the optical disc for the light flux with wavelength λ3 and numerical aperture NA3 or more.

Further, when the wavelength is changed in the first light flux, it is preferable that the light-converging position in the first area AREA 1 and the light-converging position in the second area AREA 2 are the same in terms of the displacement direction. In this case, "the light-converging positions are the same in terms of the displacement direction" means that when light is converged to be away farther from the objective lens OBJ as a distance from the optical axis grows greater in the first area AREA 1, light is converged to be away farther from the objective lens OBJ as a distance from the optical axis grows greater also in the second area AREA 2, and when light is converged to be closer to the objective lens OBJ as a distance from the optical axis becomes smaller in the first area AREA 1, light is converged to be closer to the objective lens OBJ as a distance from the optical axis becomes smaller also in the second area AREA 2. Hereby, hith-order aberration is not caused on wavefront aberration even in the case of changes in wavelength and temperature, and aperture limitation can be conducted properly on the third optical disc side.

Further, in the objective lens OBJ in the present embodiment, a sine condition is satisfied for a high density optical disc wherein the permissible range mainly for efficiency is narrow. Therefore, when using a high density optical disc, coma caused by tracking of the objective lens OBJ matters little although light converged slightly enters the objective lens OBJ. In the case of CD, a sine condition is not satisfied because mainly a protective layer thickness and an optical system magnification of CD are greatly different from those of the high density optical disc, but the coma is on the level that makes it possible to be used for recording and reproducing sufficiently, because magnification is small among the magnification and a sine condition which are dominant causes for generation of coma in the case of tracking of the objective lens OBJ.

However, when coma in the case of tracking further needs to be corrected, a coma correcting element may be provided on the light source side on the objective lens OBJ, or, a collimator lens having a correcting function or a coupling lens may be provided.

Second collimator lens COL2 is a coma correcting element having a function to reduce coma, and it is corrected, in the effective diameter through which the third light flux passes under the state where a light-emitting point of infrared semiconductor LD3 is positioned on the optical axis of the objective lens OBJ, so that spherical aberration may not be more than a diffraction limit, and it is designed so that spherical aberration may be generated in the direction of over correction on the outside of the effective diameter.

Owing to this, in the case of tracking of the objective lens OBJ, the third light flux passes through the area designed to have large spherical aberration, therefore, coma is added to the third light flux that has been transmitted through the second collimator lens COL2 and the objective lens OBJ. A direction and a size of spherical aberration on the outside of the effective diameter of the second collimator lens COL2 are determined so that the coma and coma caused by that a light-emitting point of infrared semiconductor laser LD3 is an off-axial point of object may cancel each other.

Incidentally, it is also possible to arrange the structure wherein coma generated from tracking of the objective lens OBJ by tilt-driving objective lens OBJ in synchronization with tracking of objective lens OBJ and coma generated in tilt-driving cancel each other. AS a method for tilt-driving the objective lens OBJ, it is further possible to arrange the structure wherein coma caused by tracking of objective lens OBJ and coma generated in the course of tilt-driving are made to cancel each other by tilt-driving of a triaxial actuator.

It is still possible to arrange the structure wherein tracking characteristics of the objective lens OBJ for CD can be made excellent by driving the second collimator lens COL2 with a biaxial actuator in synchronization with tracking of the objective lens OBJ.

As stated above, in the structure of the optical pickup apparatus PU1 shown in the present embodiment, an optical system magnification (first magnification m1) of an objective lens in the case of conducting recording and/or reproducing of information for the first optical disc is established to be within a range of $0 < m1 \leq 1/10$, an optical system magnification (third magnification m3) of an objective lens in the case of making the first light flux to enter as light converged slightly and conducting recording and/or reproducing of information for the third optical disc is established to be within a range of $-1/10 \leq m3 < 0$, and the third light flux is made to enter as light diverged slightly.

Hereby, compared with the structure, for example, wherein the first light flux is made to enter as parallel light and the third light flux is made to enter as divergent light under the condition of first magnification $m1 = 0$ and third magnification $m3 < -1/10$, it is possible to obtain an optical pickup apparatus compatible for high density optical disc, DVD and CD, wherein the optical system magnification of the objective lens can be controlled, and an amount of generation of aberration in tracking can be controlled.

Incidentally, though the light flux with wavelength $\lambda 2$ is made to emerge from the second collimator L2 as light converged slightly and the light flux with wavelength $\lambda 3$ is made to emerge as light diverged slightly, in the present embodiment, it is also possible to employ the structure wherein a light flux with wavelength $\lambda 2$ and a light flux with wavelength $\lambda 3$ are made to emerge from the second collimator L2 respectively as light diverged slightly and that diverged slightly which are different each other.

Though it is preferable, from the viewpoint of light weight and low cost, that the objective lens OBJ is made of plastic, it may also be made of glass when temperature resistance and light resistance are taken into consideration. What is dominant on the market presently is a refraction type glass mold aspheric lens, and if low melting point glass under development can be used, a glass mold lens on which a diffractive structure is formed may be manufactured. In the present development of plastic to be used for optics, there is a material whose refractive index is changed less by temperature changes. This material is one wherein refractive index change of total resin caused by temperature changes is made small by mixing inorganic fine grains whose absolute value of refractive index change caused by temperature changes is small regardless of whether a sign of the absolute value is opposite or the same, and in addition to this, there is a material wherein dispersion of total resin is made small by mixing equally inorganic fine grains whose dispersion is small. If these materials are used for the objective lens for BD, more effects are obtained.

(Second Embodiment)

Preferred embodiments for practicing the invention will be explained in detail as follows, referring to the drawings.

Compared with the optical pickup apparatus PU1 shown in the aforesaid First Embodiment, primary difference from the optical pickup apparatus PU1 is that coupling lens CUL is provided in optical pickup apparatus PU2 in the present embodiment, in place of the first collimator lens COL 1 and the second collimator lens COL 2.

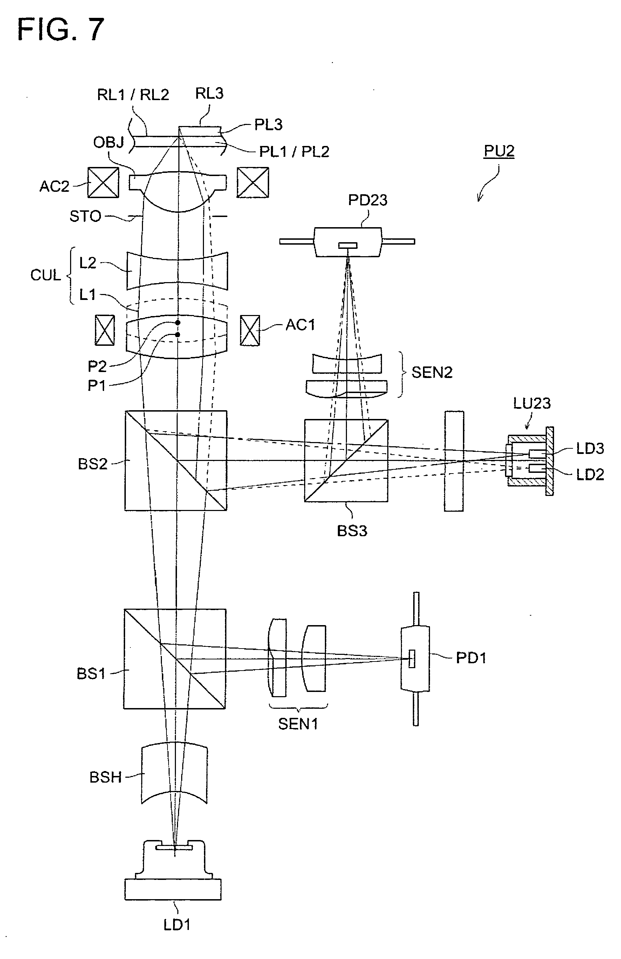

Fig. 7 is a diagram showing schematically the structure of the optical pickup apparatus PU2 capable of conducting recording and reproducing of information properly for any of HD (first optical disc), DVD (second optical disc) and CD (third optical disc). Optical specifications of HD include wavelength $\lambda 1 = 407$ nm, protective layer PL1 thickness $t1 = 0.6$ mm and numerical aperture $NA1 = 0.65$, optical specifications of DVD include wavelength $\lambda 2 = 655$ nm, protective layer PL2 thickness $t2 = 0.6$ mm and numerical aperture $NA2 = 0.65$, and optical specifications of CD include wavelength $\lambda 3 = 785$ nm, protective layer PL3 thickness $t3 = 1.2$ mm and numerical aperture $NA3 = 0.51$. However, the combination of a wavelength, a protective layer thickness and a numerical aperture is not limited to the foregoing.

Optical pickup apparatus PU2 is provided with blue-violet semiconductor laser LD1 (first light source) that emits a laser light flux (first light flux) with a wavelength 407 nm which is emitted when conducting recording and reproducing of information for HD, photodetector PD1 for the first light flux receiving the first light flux coming from the blue-violet semiconductor laser LD1 reflected on an information recording surface of HD, light source unit LU23 wherein red semiconductor laser LD2 (second light source) that emits a laser light flux (second light flux) with a wavelength 655 nm when conducting recording and reproducing of information for DVD and infrared semiconductor laser LD3_ (third light source) that emits a laser light flux (third light flux) with a wavelength 785 nm when conducting recording and reproducing of information for CD are united, photodetector PD23 that receives the second light flux that is emitted from the red semiconductor laser LD2 and reflected on an information recording surface of DVD and the third light flux that is emitted from the infrared semiconductor laser LD3 and reflected on an information recording surface of CD, coupling lens CUL through which the first through third light fluxes pass, objective lens OBJ which has a function to converge laser light fluxes respectively on information recording surfaces RL1, RL2 and RL3, first beam splitter BS1, second beam splitter BS2, third beam splitter BS3, diaphragm STO, sensor lenses SEN1 and SEN2, uniaxial actuator AC1, biaxial actuator AC2 and 121212beam shaping element BSH.

Incidentally, though there are provided photodetector PD23 which is common for the light flux with wavelength $\lambda 2$ and the light flux with wavelength $\lambda 3$ and photodetector PD1 which is common for the light flux with wavelength $\lambda 1$ in the present embodiment, it is also possible to employ the structure wherein only one photodetector that is common for light fluxes respectively with wavelengths $\lambda 1$, $\lambda 2$ and $\lambda 3$ is provided.

Coupling lens CUL is composed of two plastic lenses including first lens L1 having positive refracting power and second lens L2 having negative refracting power which are arranged in this order from the light source side.

Then, in the case of using the optical pickup apparatus, when a position of the first lens L1 in the case where the light flux with wavelength $\lambda 1$ or with wavelength $\lambda 2$ passes is made to be different from that in the case where the light flux with wavelength $\lambda 3$ passes, a distance between the first lens and the second lens is changed, and an angle of emergence for each light flux is changed, which will be explained in detail, later.

When conducting recording and reproducing of information for HD in optical pickup apparatus PU2, uniaxial actuator AC1 is driven first to move the first lens L1 to position P1 on the optical axis.

Then, the blue-violet semiconductor laser LD1 is driven to emit light as its light path is shown with solid lines in Fig. 7. A divergent light flux emitted from the blue-violet semiconductor laser LD1 is shaped, in terms of its cross section, from an ellipse to a circle by passing through beam shaping element BSH, and then, passes the first and second beam splitters BS1 and BS2 to arrive at the objective lens OBJ after being converted to light slightly converged by passing through the first and second lenses L1 and L2.

Then, the first light-convergent spot is formed when the diffracted light with prescribed order number of the first light flux generated when receiving diffracting actions from the diffractive structure on the objective lens OBJ is converged on the information recording surface R11 through protective layer PL1 of HD. With regard to this first light-convergent spot, chromatic aberration is controlled to be within a range necessary for reproducing and/or recording of information, and specifically, an absolute value of chromatic aberration of the first light-convergent spot is controlled to be not more than 0.15 $\mu$m/nm.

Then, biaxial actuator AC2 arranged around the objective lens OBJ drives the objective lens OBJ to carry out focusing and tracking. A reflected light flux modulated by information pits on information recording surface RL1 passes again through objective lens OBJ, the second lens L2, the first lens L1 and the second beam splitter BS2, and then, is branched by the first beam splitter BS1 to be converged on a light-receiving surface of photodetector PD1 after being given coma by sensor lens SEN1. Thus, it is possible to read information recorded on HD by using output signals of the photodetector PD1.

When conducting recording and reproducing of information for DVD, uniaxial actuator AC1 is driven first to move the first lens L1 to position P1 on the optical axis in the same way as in the case of conducting recording and reproducing of information for HD.

Then, the red semiconductor laser LD2 is driven to emit light as its light path is shown with dotted lines in Fig. 7. A divergent light flux emitted from the red semiconductor laser LD2 passes through the third beam splitter BS3, and then is reflected on the second beam splitter BS2 to arrive at the objective lens OBJ after being converted into parallel light flux by passing through the first and second lenses L1 and L2.

Then, the second light-convergent spot is formed when the diffracted light with prescribed order number of the second light flux generated when receiving diffracting actions from the diffractive structure on the objective lens OBJ is converged on the information recording surface R12 through protective layer PL2 of DVD. With regard to this second light-convergent spot, chromatic aberration is controlled to be within a range necessary for reproducing and/or recording of information, and specifically, an absolute value of chromatic aberration of the second light-convergent spot is controlled to be not more than 0.25 $\mu$m/nm.

Then, biaxial actuator AC2 arranged around the objective lens OBJ drives the objective lens OBJ to carry out focusing and tracking. A reflected light flux modulated by information pits on information recording surface RL2 passes again through objective lens OBJ, the second lens L2 and the first lens L1, then, is reflected by the second beam splitter BS2 and is branched by the third beam splitter BS3 to be converged on a light-receiving surface of photodetector PD23 after being given coma by sensor lens SEN2. Thus, it is possible to read information recorded on DVD by using output signals of the photodetector PD23.

On the other hand, when conducting recording and reproducing of information for CD, uniaxial actuator AC1 is driven first to move the first lens L1 to position P2 on the optical axis. The first lens at this point of time is shown with dotted lines in Fig. 7.

Then, the infrared semiconductor laser LD3 is driven to emit light as its light path is shown with one-dot chain lines in Fig. 7. A divergent light flux emitted from the infrared semiconductor laser LD3 passes through the third beam splitter BS3, and then is reflected on the second beam splitter BS2 to pass through the first and second lenses L1 and L2.

In this case, since the position of the first lens L1 on the optical axis is moved to the optical information recording medium side as stated above, the third light flux entering the first lens L1 as divergent light does not emerge from the second lens L2, but emerges as divergent light whose angle of emergence is different from that in the case of entering the first lens L1 to arrive at the objective lens OBJ.

Then, the third light-convergent spot is formed when the diffracted light with prescribed order number of the third light flux generated when receiving diffracting actions from the diffractive structure on the objective lens OBJ is converged on the information recording surface RL3 through protective layer PL3 of CD. With regard to this third light-convergent spot, chromatic aberration is controlled to be within a range necessary for reproducing and/or recording of information.

Then, biaxial actuator AC arranged around the objective lens OBJ drives the objective lens OBJ to carry out focusing and tracking. A reflected light flux modulated by information pits on information recording surface RL3 passes again through objective lens OBJ, the second lens L2 and the first lens L1, and then is reflected on the second beam splitter BS2, and then, is branched by the first beam splitter BS3 to be converged on a light-receiving surface of photodetector PD23 after being given coma by sensor lens SEN2. Thus, it is possible to read information recorded on CD by using output signals of the photodetector PD23.

As stated above, spherical aberration caused by a protective layer thickness difference between HD and CD is corrected by making a distance between the first lens L1 and the second lens L2 in the case of using HD and a distance between the first lens L1 and the second lens L2 in the case of using CD to be different each other, and by making optical system magnification of the objective lens OBJ for light flux with wavelength λ1 and optical system magnification of the objective lens OBJ for light flux with wavelength λ3 to be different each other.

As stated above, in the optical pickup apparatus PU2 shown in the present embodiment, when a light flux with wavelength λ3 passes in the case where the light flux with wavelength λ1, a distance between the first lens and the second lens is changed by moving the first lens in the optical axis direction, so that the light flux with wavelength λ1 is caused to enter the objective lens OBJ as light converged slightly, and the light flux with wavelength λ2 is caused to enter the objective lens OBJ as a different converged light, while the light flux with wavelength λ3 is caused to enter the objective lens OBJ as divergent light. Hereby, the optical system magnification of the objective lens OBJ for the light flux with wavelength λ1 is made to be different from the optical system magnification of the objective lens OBJ for the light flux with wavelength λ3, thus, spherical aberration caused by a protective layer thickness difference between HD and CD can be corrected, chromatic spherical aberration caused by a wavelength difference between wavelength λ1 and wavelength λ2 can be corrected.

Incidentally, though the light flux with wavelength λ2 is made to emerge from coupling lens CUL as parallel light in the present embodiment, it is also possible to employ the structure wherein the light flux with wavelength λ2 is made to emerge as divergent light or converged light, without being limited to the foregoing. Even in this case, however, the light flux with wavelength λ3 is assumed to emerge from the coupling lens CUL with an angle of divergence that is greater than that of the light flux with wavelength λ2, for securing the function to correct spherical aberration caused by a protective layer thickness difference between HD and CD, as stated above.

Further, it is preferable, from the viewpoint of a reduction of the number of parts, to detect a movement of the objective lens in the direction perpendicular to the optical axis with a diffraction grating by providing a diffraction grating on the coupling lens CUL, without arranging the diffraction grating right next to the light source unit LU23 as shown in Fig. 7.

Further, though the light source unit LU23 wherein the second light source LD2 and the third light source LD3 are packaged is used in the present embodiment, the second light source LD2 and the third light source LD3 may also be arranged separately, without being limited to the foregoing. By using the light source unit LU23, the optical element constituting the optical pickup apparatus PU2 can be made common for the second light flux and the third light flux, which realizes downsizing of the optical pickup apparatus PU2 and a reduction of the number of parts.

Further, though the first lens L1 is moved towards the optical information recording medium side in the optical axis direction in the present embodiment when using CD, the second lens L2 may also be moved towards the light source side without being limited to the foregoing.

When HD or DVD is a multi-layer disc such as a two-layer disc composed by laminating at least a transparent protective substrate, a first information recording surface, an intermediate layer and a second information recording surface in this order in the optical axis direction from the light source side, spherical aberration caused by focus-jump between layers in the course of recording or reproducing needs to be corrected. As a method of correcting the spherical aberration, there is given a method to change an angle of incidence of an incident light flux entering the objective lens OBJ.

Owing to the structure wherein a lens (first lens L1 or second lens L2) to be moved when using CD for correcting spherical aberration caused by a protective layer thickness difference between HD and CD is moved for correcting spherical aberration cause by focus-jump between layers, it is not necessary to provide additionally, on the optical pickup apparatus PU2, a structure for correcting spherical aberration caused by focus-jump in multiple discs, resulting in downsizing of optical pickup apparatus PU2 and in a reduction of the number of parts.

Incidentally, it is preferable that a distance of movement of the first lens or the second lens in the case of using CD is within a range of 1 mm - 3 mm.

Further, it is preferable that a distance of movement of the first lens or the second lens for correcting spherical aberration caused by focus-jump in multiple discs is within a range of 0.1 mm - 0.5 mm.

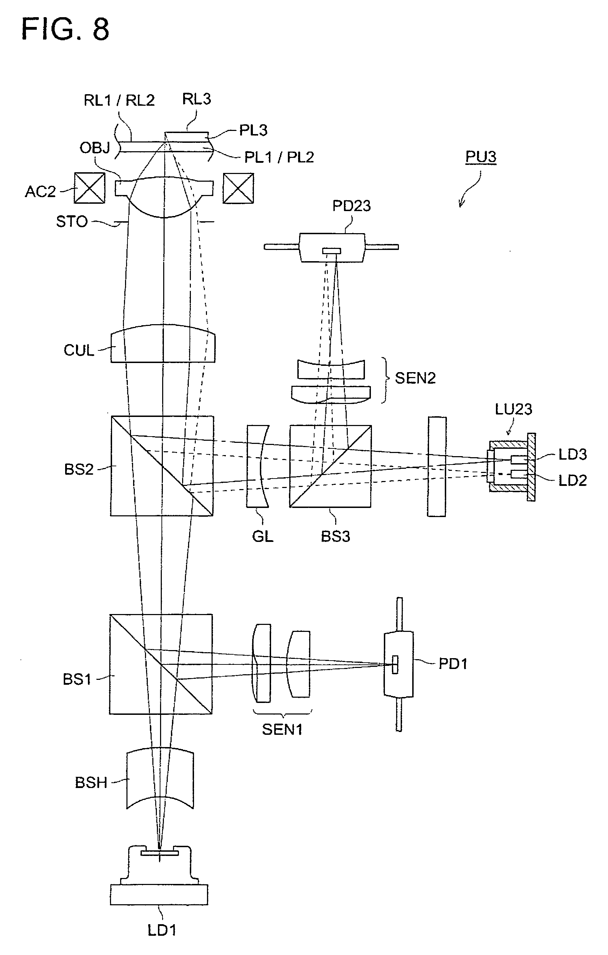

It is further possible to employ the structure wherein coupling lens CUL which is of a fixed type and is provided with a diffractive structure as is shown in optical pickup apparatus PU3 in Fig. 8 is arranged on a common path for light fluxes respectively with wavelengths $\lambda 1 - \lambda 3$, in place of coupling lens CUL capable of moving in the optical axis direction shown in the aforesaid Second Embodiment, and optical element GL having a diffractive structure is arranged on an optical path through which the light fluxes respectively with wavelengths $\lambda 2$ and $\lambda 3$ only pass.

In this case, it is possible to make the optical system magnification of objective lens OBJ for a light flux with wavelength $\lambda 1$ and the optical system magnification of objective lens OBJ for a light flux with wavelength $\lambda 3$ to be different each other by making a distance from coupling lens CUL to first light source LD1 and a distance from coupling lens CUL to optical unit LU23 to be different each other, and it is possible to correct, with a diffractive structure, the spherical aberration caused by a protective layer thickness difference between HD and CD.

Incidentally, if a laminate prism having a function of plural prisms is arranged on a common optical path for the first light flux and the second light flux in optical pickup apparatus PU3 shown in Fig. 8, the first beam splitter BS1 and the second beam splitter BS2 can be eliminated, which is preferable for a reduction of the number of parts and for downsizing of the optical pickup apparatus PU3. Fig. 18 is an illustration showing a laminate prism, and since the laminate prism LP is provided with first prism surface LP1 for the first light flux and second prism surface LP2 for the second light flux, the first light flux and the second light flux can be subjected to spectrum by one laminate prism LP1.

Incidentally, if the laminate prism having three prism surfaces is arranged on the common optical path for the first, second and third light fluxes, first beam splitter BS1, second beam splitter BS2 and third beam splitter BS3 can be eliminated, and further improvement in a reduction of the number of parts and downsizing can be expected.

(Third Embodiment)

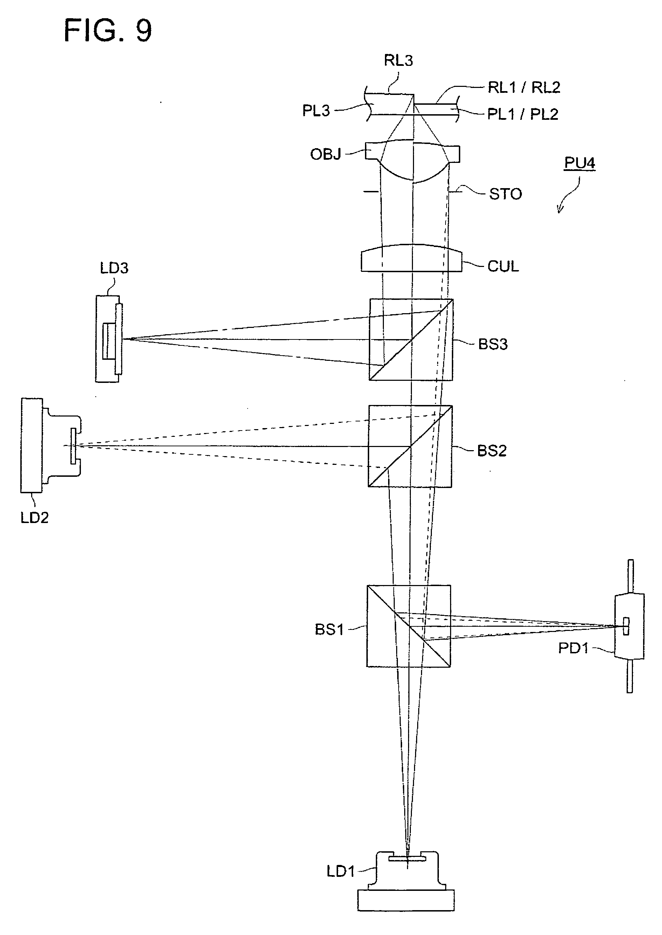

Fig. 9 is a diagram showing schematically the structure of the optical pickup apparatus PU4 capable of conducting recording and reproducing of information properly for any of HD (first optical disc), DVD (second optical disc) and CD (third optical disc). Optical specifications of HD include wavelength $\lambda 1 = 407$ nm, protective layer (protective substrate) PL1 thickness t1 = 0.6 mm and numerical aperture NA1 = 0.65, optical specifications of DVD include wavelength $\lambda 2 = 655$ nm, protective layer PL2 thickness t2 = 0.6 mm and numerical aperture NA2 = 0.65, and optical specifications of CD include wavelength $\lambda 3 = 785$ nm, protective layer PL3 thickness t3 = 1.2 mm and numerical aperture NA3 = 0.51.

However, the combination of a wavelength, a protective layer thickness and a numerical aperture is not limited to the foregoing. Further, BD in which thickness t1 of protective layer PL1 is about 0.1 mm may be used as a first disc.

Objective lens OBJ in the present embodiment is in the structure wherein each of the first light flux with wave-length $\lambda 1$ and the second light flux with wavelength $\lambda 2$ enters the objective lens as light converged slightly, and the third light flux enters as light diverged slightly.

Optical pickup apparatus PU4 is provided with blue-violet semiconductor laser LD1 (first light source), red semiconductor laser LD2 (second light source), photodetector PD1 for both the first light flux and the second light flux, hologram laser LD3 including infrared semiconductor laser LD3 (third light source) that emits a laser light flux (third light flux) with a wavelength 785 nm and photodetector PD 3 for the third light flux, coupling lens CUL, objective lens OBJ, biaxial actuator (not shown) that moves the objective lens OBJ in the prescribed direction, first beam splitter BS1, second beam splitter BS2, third beam splitter BS3, and diaphragm STO.

Blue-violet semiconductor laser LD1 (first light source) emits a laser light flux (first light flux) with a wavelength 407 nm when the optical pickup apparatus records and/or reproduces information of HD. Red semiconductor laser LD2 (second light source) emits a laser light flux (second light flux) with a wavelength 655 nm when the optical pickup apparatus records and/or reproduce information on DVD. In hologram laser LD3, infrared semiconductor laser photodetector PD3 are united in one body. Coupling lens CUL transmits the first through third light fluxes. Objective lens OBJ has a diffractive structure on its optical surface, has aspheric surfaces on both sides and has a function to converge laser light fluxes respectively on information recording surfaces RL1, RL2 and RL3.

When conducting recording and reproducing of information for HD in the optical pickup apparatus PU2, the blue-violet semiconductor laser LD1 is driven to emit light as its light path is shown with solid lines in Fig. 9. A divergent light flux emitted from the blue-violet semiconductor laser LD1 passes through the first through third beam splitters BS1 - BS3 and arrives at coupling lens CUL.

Then, while being transmitted through the coupling lens CUL, the first light flux is converted into light converged slightly, then, it passes through diaphragm STO to arrive at objective lens OBJ to become a spot that is formed on information recording surface RL1 through the first protective layer PL1 by the objective lens OBJ. The objective lens OBJ is driven by a biaxial actuator arranged around the objective lens OBJ to perform focusing and tracking.

A reflected light flux modulated by information pits on information recording surface RL1 passes again through objective lens OBJ, coupling lens CUL, the third beam splitter BS3 and the second beam splitter BS2, then, is branched by the first beam splitter BS1 to be converged on a light-receiving surface of photodetector PD1. Thus, it is possible to read information recorded on HD by using output signals of the photodetector PD1.

When conducting recording and reproducing of information for DVD, the red semiconductor laser LD2 is driven to emit light as its light path is shown with dotted lines in Fig. 9. A divergent light flux emitted from the red semiconductor laser LD2 is reflected on the second beam splitter BS2, then, passes through the third beam splitter BS3 to arrive at the coupling lens CUL.

Then, while being transmitted through the coupling lens CUL, the second light flux is converted into light converged slightly different from HD by the diffractive structure on the coupling lens CUL, then, it passes through diaphragm STO to arrive at objective lens OBJ to become a spot that is formed on information recording surface RL2 through the second protective layer PL2 by the objective lens OBJ. The objective lens OBJ is driven by a biaxial actuator arranged around the objective lens OBJ to perform focusing and tracking.

A reflected light flux modulated by information pits on information recording surface RL2 passes through objective lens OBJ, coupling lens CUL, the third beam splitter BS3 and the second beam splitter BS2, then, is branched by the first beam splitter BS1 to be converged on a light-receiving surface of photodetector PD1. Thus, it is possible to read information recorded on DVD by using output signals of the photodetector PD1.

When conducting recording and reproducing of information for CD, infrared semiconductor laser of hologram laser LD3 is first driven to emit light as its light path is shown with one-dot chain lines in Fig. 9. A divergent light flux emitted from the infrared semiconductor laser is reflected on the third beam splitter BS3 to arrive at the coupling lens CUL.

Then, the third light flux is converted into light slightly diverged while it is transmitted through the coupling lens CUL, because a distance from the infrared semiconductor laser to the coupling lens CUL is different from that from the blue-violet semiconductor laser LD1 to the coupling lens CUL, and passes through diaphragm STO to arrive at the objective lens OBJ to become a spot that is formed on information recording surface RL3 through the third protective layer PL3 by the objective lens OBJ. The objective lens OBJ is driven by a biaxial actuator arranged around the objective lens OBJ to perform focusing and tracking.

A reflected light flux modulated by information pits on information recording surface RL3 passes through the objective lens OBJ and the coupling lens CUL, then, is branched by the third beam splitter BS3 to be converged on a light-receiving surface of photodetector of hologram laser LD3. Thus, it is possible to read information recorded on CD by using output signals of the photodetector.

Coupling lens CUL will be explained next.

The coupling lens CUL is a single lens made of plastic, and diffractive structure DOE is formed on the most of the total area of its plane of emergence (optical surface on the optical disc side).

The diffractive structure DOE is constituted with plural ring-shaped zones in a form of concentric circles each having its center on the optical axis, and a cross section including the optical axis is serrated, and step difference d along the optical axis direction of each ring-shaped zone is established so that the following expression may be satisfied;

$$2 \times \lambda1/(n1 - 1) \leq d < 3 \times \lambda1/(n1 - 1)$$

wherein n1 represents the refractive index of the coupling lens CUL for the light flux with wavelength $\lambda1$.

Owing to this, the diffractive efficiency of the diffracted light (for example, +3rd-order diffracted light in the case of N = 2) whose diffraction order number is an odd number for wavelength 407 nm (refractive index of the objective lens on which the diffractive structure DOE is formed for wavelength 407 nm is 1.559806) is substantially 100%, and 2nd-order diffracted light is generated at the diffractive efficiency of 88%, if the second light flux (refractive index of the objective lens on which the diffractive structure DOE is formed for wavelength 655 nm is 1.540725) enters this diffractive structure DOE, thus, sufficient diffractive efficiency can be obtained.

Incidentally, it is preferable for the diffractive structure DOE of the coupling lens CUL that chromatic aberration of the light-convergent spot formed on an information recording surface of HD is made to be 0.1 $\mu$m or less for wavelength fluctuation of $\Delta\lambda = 1$ nm.

(Fourth Embodiment)

Fourth Embodiment will be explained. Fig. 12 is a diagram showing schematically the structure of optical pickup apparatus PU5 capable of conducting recording and reproducing of information properly for any of HD (first optical disc), DVD (second optical disc) and CD (third optical disc). Optical specifications of HD include wavelength $\lambda 1$ = 407 nm, protective layer PL1 thickness t1 = 0.6 mm and numerical aperture NA1 = 0.65, optical specifications of DVD include wavelength $\lambda 2$ = 655 nm, protective layer PL2 thickness t2 = 0.6 mm and numerical aperture NA2 = 0.65, and optical specifications of CD include wavelength $\lambda 3$ = 785 nm, protective layer PL3 thickness t3 = 1.2 mm and numerical aperture NA3 = 0.51. However, the combination of a wavelength, a protective layer thickness and a numerical aperture is not limited to the foregoing.

Optical pickup apparatus PU5 is provided with blue-violet semiconductor laser LD1 (first light source), red semiconductor laser LD2 (second light source), hologram laser LD3 wherein an infrared semiconductor laser and a photodetector are united, photodetector PD common for the first light flux, the second light flux and the third light flux, coupling lens CUL through which the first through third light fluxes pass, objective lens OBJ, astigmatism generating plate AP, monitor sensor lens MSE, monitor photodetector MPD, first beam splitter BS1, second beam splitter BS2 and diaphragm STO.

Blue-violet semiconductor laser LD1 (first light source) is driven when conducting recording and reproducing of information for HD and emits a laser light flux (first light flux) with a wavelength 407 nm. Red semiconductor laser LD2 (second light source) is driven when conducting recording and reproducing of information for DVD and emits a laser light flux (second light flux) with a wavelength 655 nm. The infrared semiconductor laser in hologram laser LD3 is driven when conducting recording and reproducing of information for CD and emits a laser light flux (third light flux) with a wavelength 785 nm. Objective lens OBJ has the function to converge respective light fluxes respectively on information recording surfaces RL1, RL2 and RL3. Astigmatism generating plate AP causes astigmatism on light traveling to photodetector PD.

In this case, it is preferable that focal length fc of the coupling lens CUL for the first light flux with wavelength $\lambda 1$ satisfies 6 mm $\leq$ fc $\leq$ 15 mm, and focal length f1 of the objective lens OBJ for the first light flux with wavelength $\lambda 1$ satisfies 1.3 mm $\leq$ f1 $\leq$ 2.2 mm. When respective focal lengths f1 and fc are in the aforesaid ranges, an objective lens suitable for the optical pickup apparatus called a super slim lens can be obtained.

Since the astigmatism generating plate AP is arranged in the optical path between the monitor photodetector MPD that is common for light fluxes respectively with wavelength $\lambda 1$ and with wavelength $\lambda 2$ and for coupling lens CUL, the greater part of the light fluxes respectively with wavelength $\lambda 1$ and with wavelength $\lambda 2$ enter the coupling lens CUL after being reflected on the astigmatism generating plate AP, although a part of them enters the monitor photodetector MPD.

When conducting recording and reproducing of information for HD in the optical pickup apparatus PU5, the blue-violet semiconductor laser LD1 is driven to emit light as its light path is shown with solid lines in Fig. 12. A divergent light flux emitted from the blue-violet semiconductor laser LD1 is transmitted through the first beam splitter BS1 to arrive at the astigmatism generating plate AP to be branched thereby, and the greater part of them are transmitted through the second beam splitter BS2, and then are subjected to diffracting actions by the coupling lens CUL to arrive at the objective lens OBJ. On the other hand, after being branched by the astigmatism generating plate AP, a part of light is transmitted through monitor sensor lens MSL and is converged in the monitor photodetector to be used for output adjustment of the blue-violet semiconductor laser LD1.

Then, the diffracted light with prescribed order number of the first light flux generated by the diffracting actions made by the diffractive structure on the objective lens OBJ is converged on information recording surface RL1 through protective layer PL1 of HD, thus, the first light-convergent spot is formed.

Then, an unillustrated biaxial actuator arranged around the objective lens OBJ drives it to perform focusing and tracking. A reflected light flux modulated by information pits on information recording surface RL1 passes again through objective lens OBJ, coupling lens CUL, the second beam splitter BS2 and astigmatism generating plate AP to be converged on a light-receiving surface of photodetector PD. Thus, it is possible to read information recorded on HD by using output signals of the photodetector PD.

When conducting recording and reproducing of information for DVD, the red semiconductor laser LD2 is first driven to emit light as its light path is shown with dotted lines in Fig. 12. A divergent light flux emitted from the red semiconductor laser LD2 is reflected on the first beam splitter BS1 to arrive at the astigmatism generating plate AP to be branched thereby, and the greater part of them are transmitted through the second beam splitter BS2, and then are subjected to diffracting actions by the coupling lens CUL to arrive at the objective lens OBJ. On the other hand, after being branched by the astigmatism generating plate AP, a part of light is transmitted through monitor sensor lens MSL and is converged in the monitor photodetector to be used for output adjustment of the red semiconductor laser LD2.

Then, the diffracted light with prescribed order number of the second light flux generated by the diffracting actions made by the diffractive structure on the objective lens OBJ is converged on information recording surface RL2 through protective layer PL2 of DVD, thus, the second light-convergent spot is formed. Chromatic aberration of the second light-convergent spot is controlled to be within a range necessary for reproducing and/or recording of information, and specifically, an absolute value of chromatic aberration of the second light-convergent spot is controlled to be 0.25 $\mu$m/nm or less.

Then, an unillustrated biaxial actuator arranged around the objective lens OBJ drives it to perform focusing and tracking. A reflected light flux modulated by information pits on information recording surface RL2 passes again through objective lens OBJ, coupling lens CUL, the second beam splitter BS2 and astigmatism generating plate AP to be converged on a light-receiving surface of photodetector PD. Thus, it is possible to read information recorded on DVD by using output signals of the photodetector PD.

When conducting recording and reproducing of information for CD, hologram laser LD3 is first driven to emit light as its light path is shown with one-dot chain lines in Fig. 12. A divergent light flux emitted from the hologram laser LD3 is reflected on the second beam splitter BS2, and is subjected to diffracting actions by coupling lens CUL to arrive at the objective lens OBJ.

Then, the diffracted light with prescribed order number of the third light flux generated by the diffracting actions made by the diffractive structure on the objective lens OBJ is converged on information recording surface RL3 through protective layer PL3 of CD, thus, the third light-convergent spot is formed. Chromatic aberration of the third light-convergent spot is controlled to be within a range necessary for reproducing and/or recording of information, and specifically, an absolute value of chromatic aberration of the third light-convergent spot is controlled to be 0.25 μm/nm or less.

Then, an unillustrated biaxial actuator arranged around the objective lens OBJ drives it to perform focusing and tracking. A reflected light flux modulated by information pits on information recording surface RL3 passes again through objective lens OBJ, coupling lens CUL and the second beam splitter BS2 and is converged on a light-receiving surface of the hologram laser LD3. Thus, it is possible to read information recorded on CD by using output signals of the photodetector PD.

(Fifth Embodiment)

Fifth Embodiment will be explained. Each of Fig. 13 and Fig. 14 is a diagram showing schematically the structure of optical pickup apparatus PU6 capable of conducting recording and reproducing of information properly for any of HD (first optical disc), DVD (second optical disc) and CD (third optical disc). Optical specifications of HD include wavelength λ1 = 407 nm, protective layer PL1 thickness t1 = 0.6 mm and numerical aperture NA1 = 0.65, optical specifications of DVD include wavelength λ2 = 655 nm, protective layer PL2 thickness t2 = 0.6 mm and numerical aperture NA2 = 0.65, and optical specifications of CD include wavelength λ3 = 785 nm, protective layer PL3 thickness t3 = 1.2 mm and numerical aperture NA3 = 0.51. However, the combination of a wavelength, a protective layer thickness and a numerical aperture is not limited to the foregoing.

Optical pickup apparatus PU6 is provided with blue-violet semiconductor laser LD1 (first light source), red semiconductor laser LD2 (second light source), hologram laser HG including an infrared semiconductor laser (third light source) and a photodetector for the third light flux, photodetector PD common for the first light flux and the second light flux, coupling lens CUL through which the first through third light fluxes pass, objective lens OBJ, mirror MIR, compound beam splitter HBS, first beam splitter BS1, sensor lens SEN, beam shaper BSH, diaphragm STO, monitor sensor lens ML, monitor photodetector MPD, 1/4 wavelength plate RE and diffraction grating GT.

Blue-violet semiconductor laser LD1 (first light source) is driven when conducting recording and reproducing of information for HD and emits a laser light flux (first light flux) with a wavelength 407 nm. Red semiconductor laser LD2 (second light source) is driven when conducting recording and reproducing of information for DVD and emits a laser light flux (second light flux) with a wavelength 655 nm. The infrared semiconductor laser (third light source) is driven when conducting recording and reproducing of information for CD and emits a laser light flux (third light flux) with a wavelength 785 nm and is united with a photodetector into Hologram laser HG. Objective lens OBJ has the function to converge respective light fluxes respectively on information recording surfaces RL1, RL2 and RL3. Mirror MIR that reflects respective light fluxes emerging from the coupling lens CUL toward the objective lens OBJ.

In this case, Fig. 14 is a side view showing the objective lens OBJ, which is arranged over the mirror MIR as shown in Fig. 14. Further, information recording surfaces RL1, RL2 and RL3 of respective optical discs are arranged over the objective lens OBJ to face it, thus, respective light fluxes having been transmitted through the objective lens OBJ are converged respectively on the information recording surfaces RL1, RL2 and RL3 of respective optical discs.

On the compound beam splitter HBS, there are provided first surface CA1 having a dichroic function that transmits or reflects light depending on a wavelength, second surface CA2 having a beam splitter function that transmits or reflects light transmitted through or reflected on the first surface CA1 depending on a polarization direction and third surface CA3 that reflects light transmitted through or reflected on the second surface CA2. In detailed explanation, when the second light flux with wavelength λ2 emitted from the red semiconductor laser LD2 enters the compound beam splitter HBS, the second light flux is transmitted through the first surface CA1 and the second surface CA2, and emerges from the compound beam splitter HBS. On the other hand, when the second light flux with wavelength λ2 having emerged from the coupling lens CUL enters the compound beam splitter HBS, the second light flux is reflected on the second surface CA2 and the third surface CA3, and thereby, the second light flux emerges from the compound beam splitter HBS. Further, when the first light flux with wavelength λ1 having emerged from the blue-violet semiconductor laser LD1 enters the compound beam splitter HBS, the first light flux is reflected on the second surface CA2 and the third surface CA3, and thereby the first light flux emerges from the compound beam splitter HBS.

In this case, since sensor lens SEN is arranged between the compound beam splitter HBS and photodetector PD, light that is reflected on the third surface CA3 and emerged from the compound beam splitter HBS is given astigmatism by the sensor lens SEN, and is converged on a light-receiving surface of photodetector PD.

Further, since beam shaper BSH and diffraction grating GT are arranged between the blue-violet semiconductor laser LD1 and compound beam splitter HBS, a diameter of a beam emitted from the blue-violet semiconductor laser LD1 is allowed to approach a true circle by beam shaper BSH, and tracking of the objective lens in the case of using HD DVD is detected by the diffraction grating GT.

When conducting recording and reproducing of information for HD on the optical pickup apparatus PU6, blue-violet semiconductor laser LD1 is driven to emit light, in Fig. 13. A divergent light flux emitted from the blue-violet semiconductor laser LD1 is transmitted through compound beam splitter HBS, first beam splitter BS1 and coupling lens CUL to arrive at mirror MIR. The divergent light flux composed of the first light flux is reflected by the mirror MIR to arrive at objective lens OBJ. Then, diffracted light with prescribed order number of the first light flux generated by receiving diffracting actions from the diffractive structure of the objective lens OBJ is converged on information recording surface RL1 through protective layer PL1 of HD, thus, first light-converged spot is formed (Forward optical path).

An unillustrated biaxial actuator AC1 arranged around the objective lens OBJ drives it to perform focusing and tracking. A reflected light flux modulated by information pits on information recording surface RL1 passes again through objective lens OBJ, mirror MIR, coupling lens CUL and first beam splitter BS1. After that, when a reflected light flux composed of the first light flux enters the compound beam splitter HBS, it is reflected on the second surface CA2 and the third surface CA3 as stated above, and it emerges from the compound beam splitter HBS to be converged on a light-receiving surface of photodetector PD through sensor lens SEN. Thus, it is possible to read information recorded on HD by using output signals of the photodetector PD (Backward optical path).

When conducting recording and reproducing of information for DVD on the optical pickup apparatus PU6, red semiconductor laser LD2 is driven to emit light, in Fig. 13. A divergent light flux emitted from the red semiconductor laser LD2 is transmitted through compound beam splitter HBS, first beam splitter BS1 and coupling lens CUL to arrive at mirror MIR. The divergent light flux composed of the second light flux is reflected by the mirror MIR to arrive at objective lens OBJ. Then, diffracted light with prescribed order number of the second light flux generated by receiving diffracting actions from the diffractive structure of the objective lens OBJ is converged on information recording surface RL2 through protective layer PL2 of DVD, thus, second light-converged spot is formed (Forward optical path).

An unillustrated biaxial actuator drives objective lens OBJ to perform focusing and tracking. A reflected light flux modulated by information pits on information recording surface RL2 passes again through objective lens OBJ, mirror MIR, coupling lens CUL and first beam splitter BS1. After that, when a reflected light flux composed of the second light flux enters the compound beam splitter HBS, it is reflected on the second surface CA2 and the third surface CA3 as stated above, and it emerges from the compound beam splitter HBS to be converged on a light-receiving surface of photodetector PD through sensor lens SEN. Thus, it is possible to read information recorded on DVD by using output signals of the photodetector PD (Backward optical path).

When conducting recording and reproducing of information for CD, hologram laser HG is driven to emit light. A divergent light flux emitted from the hologram laser HG is reflected on the first beam splitter BS1, and is transmitted through the coupling lens CUL to arrive at the objective lens OBJ.

Then, the diffracted light with prescribed order number of the third light flux generated by the diffracting actions made by the diffractive structure on the objective lens OBJ is converged on information recording surface RL3 through protective layer PL3 of CD, thus, the third light-convergent spot is formed.

Then, an unillustrated biaxial actuator drives the objective lens OBJ to perform focusing and tracking. A reflected light flux modulated by information pits on information recording surface RL3 passes again through objective lens OBJ, coupling lens CUL and the first beam splitter BS1 and is converged on a light-receiving surface of the hologram laser HG. Thus, it is possible to read information recorded on CD by using output signals of hologram laser HG.

If compound beam splitter HBS is used as stated above, a beam splitter may be omitted, and optical pickup apparatus PU6 itself can be made more compact.

Further, a light-compounding surface of beam splitter BS1 has no polarization-dependency, and therefore, about 90% of each of the light fluxes respectively with wavelength λ1 and wavelength λ2 passes through it and the rest of them is branched toward monitor sensor lens MEL, while, about 80% of the light flux with wavelength λ3 is reflected and the rest is branched toward monitor sensor lens MSL. Therefore, all light fluxes respectively with all wavelengths are branched toward monitor sensor lens MSL by the beam splitter BS1 and are detected by monitor photodetector MPD, thus, output of the laser can be sensed. By means of branching with the beam splitter BS1, the monitor sensor lens MSL and monitor photodetector MPD can also be made common for the three light fluxes respectively with three wavelengths, which reduces the number of parts.

(Sixth Embodiment)

A preferred embodiment for practicing the invention will be explained in detail as follows, referring to the drawings.

In the explanation for the optical pickup apparatus PU1 shown in the First Embodiment, one optical path is common for both the first light flux and the second light flux both reflected on the information recording surface, and another optical path for the third light flux is formed independently. However, in the optical pickup apparatus PU6, one optical path is made to be common for the first, second and third light fluxes.

Fig. 15 is a diagram showing schematically the structure of optical pickup apparatus PU6 capable of conducting recording and reproducing of information properly for any of HD (first optical disc), DVD (second optical disc) and CD (third optical disc). Optical specifications of HD include wavelength $\lambda1 = 407$ nm, protective layer (protective substrate) PL1 thickness t1 = 0.6 mm and numerical aperture NA1 = 0.65, optical specifications of DVD include wavelength $\lambda2 = 655$ nm, protective layer PL2 thickness t2 = 0.6 mm and numerical aperture NA2 = 0.65, and optical specifications of CD include wavelength $\lambda3 = 785$ nm, protective layer PL3 thickness t3 = 1.2 mm and numerical aperture NA3 = 0.51. However, the combination of a wavelength, a protective layer thickness and a numerical aperture is not limited to the foregoing.

Optical pickup apparatus PU6 is provided with blue-violet semiconductor laser LD1 (first light source), light source unit LU23 including red semiconductor laser LD2 (second light source) and infrared semiconductor laser LD3 (third light source), photodetector PD1, coupling lens CUL through which the first through third light fluxes pass, objective lens OBJ, first beam splitter BS1, second beam splitter BS2, third beam splitter BS3, diaphragm STO, sensor lens SEN2, uniaxial actuator AC1, biaxial actuator AC2, and beam shaping element BSH.

Blue-violet semiconductor laser LD1 (first light source) emits a laser light flux (first light flux) with a wavelength 407 nm when conducting recording and reproducing of information for HD. Red semiconductor laser LD2 (second light source) emits a laser light flux (second light flux) with a wavelength 655 nm when conducting recording and reproducing of information for DVD and infrared semiconductor laser LD3 (third light source) that emits a laser light flux (third light flux) with a wavelength 785 nm when conducting recording and reproducing of information for CD. In light source unit LU23, Red semiconductor laser LD2 and infrared semiconductor laser LD3 are united solidly. Photodetector PD1 receives a light flux reflected on an information recording surface of at least one of HD, DVD and CD. Objective lens OBJ has a function to converge respective light fluxes respectively on information recording surfaces RL1, RL2 and RL3.

The coupling lens CUL is composed of two plastic lenses including the second lens L2 having negative refracting power and the first lens L1 having positive refracting power both arranged in this order from the light source side.

When the optical pickup apparatus is used, the position of the first lens L1 in the case where a light flux with wavelength $\lambda1$ or a light flux with wavelength $\lambda2$ passes through the first lens L1 is made to be different from the position of the first lens L1 in the case where a light flux with wavelength $\lambda3$ passes through the first lens L1, and thereby, a distance between the first lens and the second lens in the optical axis direction is changed, thus, angles of emergence of respective light fluxes are changed.

When conducting recording and reproducing of information for HD in the optical pickup apparatus PU6, uniaxial actuator AC1 is driven first to move the first lens L1 to position P1.

Then, the blue-violet semiconductor laser LD1 is driven first to emit light as its optical path is drawn with solid lines in Fig. 15. A divergent light flux emitted from the blue-violet semiconductor laser LD1 is transmitted through beam shaping element BSH, and thereby changed in terms of its cross section from an oval to a circle, and then, passes through the first and second beam splitters BS2 to pass through the second lens L2 and the first lens L1 to be converted into light converged slightly, and arrives at objective lens OBJ.

Then, the diffracted light with prescribed order number of the first light flux generated by receiving diffracting actions from the diffractive structure of the objective lens OBJ is converged on information recording surface RL1 through protective layer PL1 of HD, thus, the first light-convergent spot is formed. Chromatic aberration of the first light-convergent spot is controlled to be in a range necessary for reproducing and recording of information, and specifically, an absolute value of chromatic aberration of the first light-convergent spot is controlled to be 0.05 $\mu$m or less.

Biaxial actuator AC2 arranged around the objective lens OBJ drives it to perform focusing and tracking. A reflected light flux modulated by information pits on information recording surface RL1 transmits again on objective lens OBJ, the first lens L1 and the second lens L2, is reflected on the second beam splitter BS2, and then, is branched by the third beam splitter BS3, and is given astigmatism by sensor lens SEN2 to be converged on a light-receiving surface of photodetector PD1. Thus, it is possible to read information recorded on HD by using output signals of the photodetector PD1.

Even in the case of conducting recording and reproducing of information for DVD, uniaxial actuator AC1 is driven first to move the first lens L1 to position P2 on the optical axis.

Then, the red semiconductor laser LD2 is driven to emit light as its light path is shown with dotted lines in Fig. 15. A divergent light flux emitted from the red semiconductor laser LD2 passes through the third beam splitter BS3, and then is reflected on the second beam splitter BS2 to arrive at the objective lens OBJ after being converted into light converged slightly that is different from HD by passing through the second and first lenses L2 and L1.

Then, the second light-convergent spot is formed when the diffracted light with prescribed order number of the second light flux generated when receiving diffracting actions from the diffractive structure on the objective lens OBJ is converged on the information recording surface RL2 through protective layer PL2 of DVD. With regard to this second light-convergent spot, chromatic aberration is controlled to be within a range necessary for reproducing and/or recording of information, and specifically, an absolute value of chromatic aberration of the second light-convergent spot is controlled to be not more than 0.25 μm/nm.

Then, biaxial actuator AC2 arranged around the objective lens OBJ drives the objective lens OBJ to carry out focusing and tracking. A reflected light flux modulated by information pits on information recording surface RL2 passes again through objective lens OBJ, the second lens L2 and the first lens L1, then, is reflected by the second beam splitter BS2 and is branched by the third beam splitter BS3 to be converged on a light-receiving surface of photodetector PD1 after being given coma by sensor lens SEN2. Thus, it is possible to read information recorded on DVD by using output signals of the photodetector PD1.

On the other hand, when conducting recording and reproducing of information for CD, uniaxial actuator AC1 is driven first to move the first lens L1 to position P3 on the optical axis. The first lens at this point of time is shown with dotted lines in Fig. 15.

Then, the infrared semiconductor laser LD3 is driven to emit light as its light path is shown with one-dot chain lines in Fig. 15. A divergent light flux emitted from the infrared semiconductor laser LD3 passes through the third beam splitter BS3, and then is reflected on the second beam splitter BS2 to pass through the second and first lenses L2 and L1.

In this case, since the position of the first lens L1 on the optical axis is moved to the optical information recording medium side as stated above, the third light flux entering the first lens L1 as divergent light emerges as divergent light whose angle of emergence is different from that in the case of entering, to arrive at the objective lens OBJ.

Then, the third light-convergent spot is formed when the diffracted light with prescribed order number of the third light flux generated when receiving diffracting actions from the diffractive structure on the objective lens OBJ is converged on the information recording surface RL3 through protective layer PL3 of CD.

Then, biaxial actuator AC arranged around the objective lens OBJ drives the objective lens OBJ to carry out focusing and tracking. A reflected light flux modulated by information pits on information recording surface RL3 passes again through objective lens OBJ, the second lens L2 and the first lens L1, and then is reflected on the second beam splitter BS2, and then, is branched by the first beam splitter BS3 to be converged on a light-receiving surface of photodetector PD1 after being given astigmatism by sensor lens SEN2. Thus, it is possible to read information recorded on CD by using output signals of the photodetector PD1.

(Example 1)

Next, an example of the objective lens shown in the embodiment above will be explained.

Tables 1-1 and 1-2 show lens data of Example 1.

(Table 1-1)

Example 1 Lens data

| Focal length of objective lens | $f_1$=3.00mm | $f_2$=3.10mm | $f_3$=3.12mm |
|---|---|---|---|
| Numerical aperture on image plane side | NA1:0.65 | NA2:0.65 | NA3:0.51 |
| Diffraction order number on the 2nd surface | n1:10 | n2:6 | n3:5 |
| Diffraction order number on the 2'nd surface | n1:5 | n2:3 | |
| Magnification | m1:1/31.0 | m2:1/54.3 | m3:-1/29.9 |

| $i^{th}$ surface | ri | di (407nm) | ni (407nm) | di (655nm) | ni (655nm) | di (785nm) | ni (785nm) |
|---|---|---|---|---|---|---|---|
| 0 | | -90.00 | | -166.02 | | 96.40 | |
| 1 (Aperture diameter) | ∞ | 0.01 ($\phi$3.964mm) | | 0.01 ($\phi$3.964mm) | | 0.01 ($\phi$3.288mm) | |
| 2 | 1.92355 | 1.65000 | 1.559806 | 1.65000 | 1.540725 | 1.65000 | 1.537237 |
| 2' | 1.98118 | 0.00583 | 1.559806 | 0.00583 | 1.540725 | 0.00583 | 1.537237 |
| 3 | -16.03440 | 1.55 | 1.0 | 1.67 | 1.0 | 1.47 | 1.0 |
| 3' | -13.18912 | 0.00000 | 1.0 | 0.00000 | 1.0 | 0.00000 | 1.0 |
| 4 | ∞ | 0.6 | 1.61869 | 0.6 | 1.57752 | 1.2 | 1.57063 |
| 5 | ∞ | | | | | | |

* Symbol di shows displacement from $i^{th}$ surface to $(i+1)^{th}$ surface
* Symbols d2' and d3' show respectively displacement from $2^{nd}$ surface to $2'^{nd}$ surface and displacement from $3^{rd}$ surface to $3'^{rd}$ surface.

(Table 1-2)

Aspheric surface data

2nd surface (0<h≤1.662 mm: HD DVD/DVD/CD common area)

Aspheric surface coefficient

| | |
|---|---|
| $\kappa$ | **-4.4662 × E-1** |
| **A4** | **+8.7126 × E-4** |
| **A6** | **-1.9063 × E-3** |
| **A8** | **+9.2646 × E-4** |
| **A10** | **-2.1198 × E-4** |
| **A12** | **+1.6273 × E-7** |
| **A14** | **+1.3793 × E-6** |

Optical path difference function

| | |
|---|---|
| **B2** | **-2.3141 × E-1** |
| **B4** | **-2.0141 × E-2** |
| **B6** | **-7.5021 × E-3** |
| **B8** | **+1.3559 × E-3** |
| **B10** | **-4.0867 × E-4** |

2' nd surface (1.662 mm<h: HD DVD/DVD common area)

Aspheric surface coefficient

| | |
|---|---|
| $\kappa$ | **-4.1961 × E-1** |
| **A4** | **+3.0725 × E-3** |
| **A6** | **-2.5861 × E-3** |
| **A8** | **+9.6551 × E-4** |
| **A10** | **-1.3826 × E-4** |
| **A12** | **+7.5482 × E-6** |
| **A14** | **-7.5795 × E-7** |

Optical path difference function

| | |
|---|---|
| **B2** | **-5.4710 × E-1** |
| **B4** | **-2.6404 × E-2** |
| **B6** | **-1.5524 × E-2** |
| **B8** | **-1.0308 × E-3** |
| **B10** | **+1.1379 × E-3** |

3rd surface (0<h≤1.362 mm HD DVD/DVD/CD common area)

Aspheric surface coefficient

| | |
|---|---|
| $\kappa$ | **-8.0853 × E+2** |
| **A4** | **-5.5826 × E-3** |
| **A6** | **+1.1660 × E-2** |
| **A8** | **-6.4291 × E-3** |
| **A10** | **+1.5528 × E-3** |
| **A12** | **-1.3029 × E-4** |
| **A14** | **-3.4460 × E-6** |

3'rd surface (1.362 mm<h HD DVD/DVD common area)

Aspheric surface coefficient

| | |
|---|---|
| $\kappa$ | **-1.2782 × E+3** |

(continued)

3'rd surface (1.362 mm<h HD DVD/DVD common area)
Aspheric surface coefficient

| | |
|---|---|
| **A4** | **-7.3881 × E-3** |
| **A6** | **+1.1800 × E-2** |
| **A8** | **-6.0862 × E-3** |
| **A10** | **+1.8088 × E-3** |
| **A12** | **-2.3565 × E-4** |
| **A14** | **+1.5370 × E-5** |

As shown in Tables 1-1 and 1-2, the objective lens in the present example is one compatible for HD, DVD and CD wherein focal length f1 is set to 3.00 mm and magnification m1 is set to 1/31.0 for wavelength λ1 407 nm, focal length f2 is set to 3.10 mm and magnification m2 is set to 1/54.3 for wavelength λ2 655 nm, and focal length f3 is set to 3.12 mm and magnification m3 is set to -1/29.9 for wavelength λ3 785 nm.

A plane of incidence of the objective lens is divided into the second surface wherein a height with an optical axis as a center satisfies 0 mm ≤ h ≤ 1.662 mm and the 2'nd surface wherein the height satisfies 1.662 mm < h, and a plane of emergence of the objective lens is divided into the third surface wherein a height with an optical axis as a center satisfies 0 mm ≤ h ≤ 1.362 mm and the 3'rd surface wherein the height satisfies 1.362 mm < h.

Further, each of the second surface, the 2'nd surface, the third surface and the 3'rd surface is formed to be an aspheric surface which is stipulated by the numerical expression resulting from the following expression (Numeral 1) in which a coefficient shown in Tables 1-1 and 1-2 is substituted, and is on an axial symmetry around optical axis L.

(Numeral 1)

$$x = \frac{h^2/r}{1 + \sqrt{1-(1+\kappa)(h/r)^2}} + \sum_{i=2} A_{2i} h^{2i}$$

In this case, x represents an axis in the optical axis direction (the direction of the advance of light is positive), κ represents a conic constant and $A_{2i}$ represents an aspheric surface coefficient.

Further, diffractive structure DOE is formed on each of the second surface and the 2'nd surface. This diffractive structure DOE is expressed by an optical path difference to be added to transmission wavefront by this structure. The optical path difference DOE of this kind is expressed by optical path difference function φ(h) (mm) defined by substituting a coefficient shown in Tables 1-1 and 1-2 in the following Numeral 2, when h(mm) represents a height in the direction perpendicular to the optical axis, $B_{2i}$ represents an optical path difference function coefficient, n represents the diffraction order number of the diffracted light having the maximum diffractive efficiency among diffracted light of incident light flux, λ (nm) represents a wavelength of a light flux entering the diffractive structure, and λB (nm) represents a manufacturing wavelength of the diffractive structure.

(Numeral 2)

Optical path difference function

$$\Phi(h) = \left( \sum_{i=0}^{5} B_{2i} h^{2i} \right) \times n \times \frac{\lambda}{\lambda B}$$

Incidentally, blaze wavelength λB of the diffracted structure DOE is 1.0 mm.

(Example 2)

Tables 2-1 and- 2-2 show lens data of Example 2.

(Table 2-1)

Example 2 Lens data

| Focal length of objective lens | $f_1$=3.00mm | $f_2$=3.09mm | $f_3$=3.12mm |
|---|---|---|---|
| Numerical aperture on image plane side | NA1:0.65 | NA2:0.65 | NA3:0.51 |
| Diffraction order number on the 2nd surface | n1:8 | n2:5 | n3:4 |
| Diffraction order number on the 2'nd surface | n1:8 | n2:5 | |
| Magnification | m1:1/34.2 | m2:1/50.3 | m3:-1/30.5 |

| $i^{th}$ surface | ri | di (407nm) | ni (407nm) | di (655nm) | ni (655nm) | di (785nm) | ni (785nm) |
|---|---|---|---|---|---|---|---|
| 0 | | -100 | | -152.15 | | 98.11 | |
| 1 (Aperture diameter) | $\infty$ | 0.01 ($\phi$3.946mm) | | 0.01 ($\phi$3.946mm) | | 0.01 ($\phi$3.286mm) | |
| 2 | 1.95579 | 1.65000 | 1.559806 | 1.65000 | 1.540725 | 1.65000 | 1.537237 |
| 2' | 1.98098 | 0.00719 | 1.559806 | 0.00719 | 1.540725 | 0.00719 | 1.537237 |
| 3 | -16.36147 | 1.56 | 1.0 | 1.66 | 1.0 | 1.46 | 1.0 |
| 3' | -13.60880 | 0.00000 | 1.0 | 0.00000 | 1.0 | 0.00000 | 1.0 |
| 4 | $\infty$ | 0.6 | 1.61869 | 0.6 | 1.57752 | 1.2 | 1.57063 |
| 5 | $\infty$ | | | | | | |

* Symbol di shows displacement from $i^{th}$ surface to $(i+1)^{th}$ surface
* Symbols d2' and d3' show respectively displacement from $2^{nd}$ surface to $2'^{nd}$ surface and displacement from $3^{rd}$ surface to $3'^{rd}$ surface.

(Table 2-2)

2nd surface (0<h≤1.669 mm: HD DVD/DVD/CD common area)

Aspheric surface coefficient

| | |
|---|---|
| κ | **-4.3361 × E-1** |
| A4 | **+1.6282 × E-3** |
| A6 | **-2.0857 × E-3** |
| A8 | **+1.0150 × E-3** |
| A10 | **-1.9142 × E-4** |
| A12 | **-7.1077 × E-6** |
| A14 | **+2.7406 × E-6** |

Optical path difference function

| | |
|---|---|
| B2 | **-4.6300 × E-1** |
| B4 | **-3.5115 × E-2** |
| B6 | **-6.2907 × E-3** |
| B8 | **+2.0853 × E-3** |
| B10 | **-3.0419 × E-4** |

2nd surface (1.669 mm<h: HD DVD/DVD common area)

Aspheric surface coefficient

| | |
|---|---|
| κ | **-4.2244 × E-1** |
| A4 | **+3.0487 × E-3** |
| A6 | **-2.6223 × E-3** |
| A8 | **+9.4560 × E-4** |
| A10 | **-1.4603 × E-4** |
| A12 | **+5.0391 × E-6** |
| A14 | **-1.3667 × E-6** |

Optical path difference function

| | |
|---|---|
| B2 | **-4.2194 × E-1** |
| B4 | **-2-1032 × E-2** |
| B6 | **-1.3189 × E-2** |
| B8 | **-1.5405 × E-3** |
| B10 | **+4.9103 × E-4** |

3rd surface (0<h≤1.367 mm HD DVD/DVD/CD common area)

Aspheric surface coefficient

| | |
|---|---|
| κ | **-1.156B × E+3** |
| A4 | **-5.4870 × E-3** |
| A6 | **+1.1312 × E-2** |
| A8 | **-6.5163 × E-3** |
| A10 | **+1.5966 × E-3** |
| A12 | **-1.1506 × E-4** |
| A14 | **-9.7212 × E-6** |

3'rd surface (1.367 mm<h HD DVD/DVD common area)

Aspheric surface coefficient

| | |
|---|---|
| κ | **-1.3413 × E+3** |
| A4 | **-7.1899 × E-3** |
| A6 | **+1.1899 × E-2** |

(continued)

3'rd surface (1.367 mm<h HD DVD/DVD common area)
Aspheric surface coefficient

| | |
|---|---|
| A8 | -6.0565 $\times$ E-3 |
| A10 | +1.6060 $\times$ E-3 |
| A12 | -2.4616 $\times$ E-4 |
| A14 | +1.7102 $\times$ E-5 |

As is shown in Tables 2-1 and 2-2, the objective lens in the present example is one compatible for HD, DVD and CD wherein focal length f1 is set to 3.00 mm and magnification m1 is set to 1/34.2 for wavelength $\lambda$1 407 nm, focal length f2 is set to 3.09 mm and magnification m2 is set to 1/50.3 for wavelength $\lambda$2 655 nm, and focal length f3 is set to 3.12 mm and magnification m3 is set to -1/30.5 for wavelength $\lambda$3 785 nm.

A plane of incidence of the objective lens is divided into the second surface wherein a height with an optical axis as a center satisfies 0 mm $\leq$ h $\leq$ 1.669 mm and the 2'nd surface wherein the height satisfies 1.669 mm < h, and a plane of emergence of the objective lens is divided into the third surface wherein a height with an optical axis as a center satisfies 0 mm $\leq$ h $\leq$ 1.669 mm and the 3'rd surface wherein the height satisfies 1.669 mm < h.

Further, each of the second surface, the 2'nd surface, the third surface and the 3'rd surface is formed to be an aspheric surface which is stipulated by the numerical expression resulting from the following expression (Numeral 1) in which a coefficient shown in Tables 2-1 and 2-2 is substituted, and is on an axial symmetry around optical axis L.

Further, diffractive structure DOE is formed on each of the second surface and the 2'nd surface, and this diffractive structure DOE is expressed by an optical path difference to be added to transmission wavefront by this structure. The optical path difference of this kind is expressed by optical path difference function $\phi$ (h)(mm) defined by substituting a coefficient shown in Tables 2-1 and 2-2 in the Numeral 2 above.

Incidentally, the blaze wavelength of the diffractive structure DOE is 1.0 mm.

Each of Figs. 10 and 11 is a graph showing the relationship between the wavelength fluctuation and fluctuation of fb in each of Examples 1 and 2, namely, showing the wavefront aberration minimum amount of position changes for the wavelength change of each light flux dfb/d$\lambda$ in the light-convergent spot formed on the information recording surface of each optical disc.

(Example 3)

Tables 3-1 and 3-2 shows lens data in Example 3.

EP 1 587 090 B1

(Table 3-1)

Example 3 Lens data

| Focal length of objective lens | $f_1$=2.2mm | $f_2$=2.26mm | $f_3$=2.27mm |
|---|---|---|---|
| Numerical aperture on image plane side | NA1:0.85 | NA2:0.60 | NA3:0.48 |
| Magnification | m1:1/23.3 | m2:-1/28.9 | m3:-1/11.2 |

| $i^{th}$ surface | ri | di (408nm) | ni (408nm) | di (658nm) | ni (658nm) | di (785nm) | ni (785nm) |
|---|---|---|---|---|---|---|---|
| 0 | | -50 | | 66.71 | | 26.86 | |
| 1 (Aperture diameter) | ∞ | 0.1 (φ3.65mm) | | 0.1 (φ2.77mm) | | 0.1 (φ2.30mm) | |
| 2 | 1.37808 | 2.60000 | 1.524461 | 2.60000 | 1.506634 | 2.60000 | 1.503453 |
| 3 | -2.48805 | 0.62 | 1.0 | 0.53 | 1 | 0.29 | 1.0 |
| 4 | ∞ | 0.0875 | 1.61829 | 0.6 | 1.577315 | 1.2 | 1.57063 |
| 5 | ∞ | | | | | | |

* Symbol di shows displacement from $i^{th}$ surface to $(i+1)^{th}$ surface.

Aspheric surface data

2nd surface

Aspheric surface coefficient

$\kappa$   -6.6478 × E-1

A4   +1.1830 × E-2

(continued)

| Aspheric surface data | |
| --- | --- |
| 2nd surface | |
| Aspheric surface coefficient | |
| A6 | +2.1368 × E-3 |
| A8 | +6.0478 × E-5 |
| A10 | +4.1813 × E-4 |
| A12 | -2.1208 × E-5 |
| A14 | -2.7978 × E-5 |
| A16 | +1.0515 × E-5 |
| A18 | +1.8451 × E-6 |
| A20 | -4.8060 × E-7 |
| 3rd surface | |
| Aspheric surface coefficient | |
| κ | -5.7511 × E+1 |
| A4 | +8.1811 × E-2 |
| A6 | -4.7203 × E-2 |
| A8 | +9.3444 × E-3 |
| A10 | +1.6660 × E-3 |
| A12 | -7.2478 × E-4 |

As shown in Tables 3-1 and 3-2, the objective lens in the present example is one compatible for BD, DVD and CD wherein focal length f1 is set to 2.20 mm and magnification m1 is set to 1/23.3 for wavelength λ1 408 nm, focal length f2 is set to 2.26 mm and magnification m2 is set to -1/28.9 for wavelength λ2 658 nm, and focal length f3 is set to 2.27 mm and magnification m3 is set to -1/11.2 for wavelength λ3 785 nm.

Each of a plane of incidence (second surface) and a plane of emergence of the objective lens is formed to be an aspheric surface which is stipulated by the numerical expression wherein a coefficient shown in Tables 3-1 and 3-2 is substituted in the Numeral 1, and is on an axial symmetry around optical axis L.

(Example 4)

Tables 4-1 and 4-2 show lens data in Example 4.

(Table 4-1)

Example 4 Lens data

| Focal length of objective lens | $f_1=2.6mm$ | $f_2=2.66mm$ | $f_3=2.69mm$ |
|---|---|---|---|
| Numerical aperture on image plane side | NA1:0.65 | NA2:0.65 | NA3:0.51 |
| Diffraction order number on the third surface | 10 | 6 | 5 |

| $i^{th}$ surface | ri | di (407nm) | ni (407nm) | di (655nm) | ni (655nm) | di (785nm) | ni (785nm) |
|---|---|---|---|---|---|---|---|
| 0 | | -100 | | -100 | | 74.66 | |
| 1 (Aperture diameter) | $\infty$ | 0.1 ($\phi$3.31mm) | | 0.1 ($\phi$3.394mm) | | 0.1 ($\phi$2.822mm) | |
| 2 | 5.4220 | 0.80 | 1.54277 | 0.80 | 1.52915 | 0.80 | 1.52915 |
| 3 | 16.7489 | 0.05 | 1.0 | 0.05 | 1.0 | 0.05 | 1.0 |
| 4 | 1.6288 | 1.20 | 1.54277 | 1.20 | 1.52915 | 1.20 | 1.52915 |
| 5 | 17.5499 | 1.20 | 1.0 | 1.24 | 1.0 | 1.04 | 1.0 |
| 6 | $\infty$ | 0.6 | 1.61869 | 0.6 | 1.57752 | 1.2 | 1.57752 |
| 7 | $\infty$ | | | | | | |

(Table 4-2)
Aspheric surface data

2nd surface
Aspheric surface coefficient
$\kappa$   -1.6812E+01

(continued)

| Aspheric surface data | |
| --- | --- |
| 2nd surface | |
| Aspheric surface coefficient | |
| A4 | 1.0785E-02 |
| A6 | -2.2098E-03 |
| A8 | 1.7714E-04 |
| A10 | 2.2112E-05 |
| 3rd surface | |
| Optical path difference function | |
| (blaze wavelength 407 nm) | |
| B2 | -1.0683E-03 |
| B4 | 1.5754E-04 |
| B6 | -9.3265E-06 |
| B8 | -1.9798E-05 |
| B10 | 5.0212E-06 |
| 4th surface | |
| Aspheric surface coefficient | |
| $\kappa$ | -8.0229E-01 |
| A4 | 2.0212E-02 |
| A6 | 1.7702E-03 |
| A8 | 3.2493E-03 |
| A10 | -1.6175E-03 |
| A12 | 7.1667E-04 |
| A14 | -1.1745E-04 |
| 5th surface | |
| Aspheric surface coefficient | |
| $\kappa$ | -3.6034E+01 |
| A4 | -2.9538E-03 |
| A6 | 1.7171E-02 |
| A8 | -1.1832E-02 |
| A10 | 3.9259E-03 |
| A12 | -8.4255E-04 |
| A14 | 1.0293E-04 |

The objective lens in the present example is one which is composed of two plastic lenses combined and is compatible for HD, DVD and CD wherein focal lengths f1, f2 and f3 are respectively set to 2.60 mm, 2.66 mm and 2.69 mm respectively for wavelengths $\lambda 1$ = 407 nm, $\lambda 2$ = 655 nm and $\lambda 3$ = 785 nm.

Each of a plane of incidence (second surface) and a plane of emergence (third surface) of the lens arranged on the light source side and a plane of incidence (fourth surface) and a plane of emergence (fifth surface) of the lens arranged on the optical disc side among two lenses constituting the objective lens, is formed to be an aspheric surface that is stipulated by a numerical expression in which a coefficient shown in Tables 4-1 and 4-2 is substituted, among two lenses constituting the objective lens and is on an axial symmetry around optical axis L.

On the third surface, there is formed diffractive structure DOE which is expressed by and optical path difference to be added to the transmission wavefront by the aforesaid diffractive structure. The optical path difference of this kind is expressed by optical path difference function $\varphi(h)$ (mm) that is defined by substituting a coefficient shown in Tables 4-1 and 4-2 in the Numeral 2.

Incidentally, a blaze wavelength of the diffractive structure DOE is 407 nm.

(Example 5)

Tables 5-1 and 5-2 show lens data of Example 5.

(Table 5-1)

Example 5  Lens data

| Diffraction order number on the third surface | 10 | 6 | 5 |
|---|---|---|---|
| Diffraction order number on the fourth surface | 2 | 1 | 1 |
| Magnification of total optical system | m1:6.8 | m2:6.8 | m2:5.1 |
| Focal length of objective lens | $f_1$=3.2mm | $f_2$=3.29mm | $f_3$=3.27mm |
| Numerical aperture on image plane side | NA1:0.65 | NA2:0.65 | NA3:0.51 |
| Optical system magnification of objective lens | m1:1/30.03 | m2:1/51.81 | m3:-1/31.15 |

| $i^{th}$ surface | ri | di (407nm) | ni (407nm) | di (655nm) | ni (655nm) | di (785nm) | ni (785nm) |
|---|---|---|---|---|---|---|---|
| 0 | | 1.00 | | 0.00 | | 0.00 | |
| 1 | ∞ | 6.25 | 1.529942 | 6.25 | | 6.25 | 1.51108 |
| 2 | ∞ | 17.42 | 1.0 | 17.42 | 1.514362 | 10.75 | 1.0 |
| 3 | 883.0746 | 1.70 | 1.559806 | 1.70 | 1.0 | 1.70 | 1.537237 |
| 4 | -21.4166 | 1.00 | 1.0 | 1.00 | 1.540725 | 1.00 | 1.0 |
| 5 | ∞ | 2.80 | 1.529942 | 2.80 | 1.0 | 2.80 | 1.51108 |
| 6 | ∞ | 5.00 | 1.0 | 5.00 | 1.514362 | 5.00 | 1.0 |
| 7 (Aperture diameter) | ∞ | 0.01 (φ3.901mm) | | 0.01 (φ4.082mm) | 1.0 | 0.01 (φ3.389mm) | |
| 8 | 1.9846 | 1.65000 | 1.581901 | 1.65000 | | 1.65000 | 1.58191 |
| 9 | -23.4721 | 1.65 | 1.0 | 1.77 | 1.586 | 1.57 | 1.0 |
| 10 | ∞ | 0.6 | 1.61869 | 0.6 | 1.0 | 1.2 | 1.57063 |
| 11 | ∞ | | | | 1.57752 | | |

* Symbol di shows displacement from $i^{th}$ surface to $(i+1)^{th}$ surface.

EP 1 587 090 B1

(Table 5-2)

Aspheric surface data

| 3rd surface | |
| --- | --- |
| Optical path difference function | |
| (blaze wavelength 407 nm) | |
| B2 | -6.3217E-04 |
| 4th surface | |
| Aspheric surface coefficient | |
| κ | -9.8321E-01 |
| A4 | -6.5493E-06 |
| Optical path difference function | |
| (blaze wavelength 407 nm) | |
| B2 | -4.0351E-03 |
| B4 | 3.7789E-06 |
| 8th surface | |
| Aspheric surface coefficient | |
| κ | -6.2316E-01 |
| A4 | 3.5193E-03 |
| A6 | -8.8455E-04 |
| A8 | 1.1392E-03 |
| A10 | -4.4959E-04 |
| A12 | 9.5050E-05 |
| A14 | -8.3859E-06 |
| 9th surface | |
| Aspheric surface coefficient | |
| κ | -1.1584E+03 |
| A4 | -2.3693E-03 |
| A6 | 7.4703E-03 |
| A8 | -4.4122E-03 |
| A10 | 1.3821E-03 |
| A12 | -2.3560E-04 |
| A14 | 1.6617E-05 |

Both an objective lens and a coupling lens in the present example are compatible for HD, DVD and CD as shown in Fig. 9, and a magnification of the optical system wherein the objective lens and the coupling lens are combined is set to be X6.8 for HD, X6.8 for DVD and X5.1 for CD.

In the case of an individual objective lens, focal length f1 is set to 3.20 mm and magnification m1 is set to 1/30.03 for HD, focal length f2 is set to 3.29 mm and magnification m2 is set to 1/51.81 for DVD, and focal length f3 is set to 3.27 mm and magnification m3 is set to -1/31.15 for CD.

Each of a plane of incidence (third surface) and a plane of emergence (fourth surface) of the coupling lens and a plane of incidence (eighth surface) and a plane of emergence (ninth surface) of the objective lens is formed to be an aspheric surface that is stipulated by a numerical expression in which a coefficient shown in Tables 5-1 and 5-2 is substituted in the Numeral 1 and is on an axial symmetry around optical axis L.

On each of the third surface and the fourth surface, there is formed diffractive structure DOE which is expressed by an optical path difference to be added to a transmission wavefront by this structure. The optical path difference of this kind is expressed by optical path difference function $\varphi(h)$ (mm) that is defined by substituting a coefficient shown in Tables 5-1 and 5-2 in the Numeral 2.

Incidentally, a blaze wavelength of the diffractive structure DOE on each of the third surface and the fourth surface is 407 nm.

This diffractive structure DOE is designed so that a sensor may be made common for HD and DVD, and chromatic aberration may be corrected by combination of the objective lens and the coupling lens in the case of HD. Since both sides of the objective lens are of the refracting interface, when light resistance and heat resistance are feared, the objective lens may be made of glass. When using resins advantageous in terms of low cost and light in weight, if a diffractive structure is provided on the objective lens, the same pickup structure can be obtained simply by providing a diffractive structure only on one side of the coupling lens.

(Example 6)

Tables 6-1 and 6-2 show lens data in Example 6.

Example 6 Lens data

(Table 6-1)

| | | | |
|---|---|---|---|
| Diffraction order number on the 3rd surface | 1 | 1 | 2 |
| Diffraction order number on the 6th surface | 5 | 6 | 10 |
| Diffraction order number on the 6' surface | | 3 | 5 |
| Magnification of total optical system | m3:6.4 | m2:7.3 | m1:7.1 |
| Focal length of coupling lens | $f_3$=10.7mm | $f_2$=10.4mm | $f_1$=9.8mm |
| Focal length of objective lens | $f_3$=1.91mm | $f_2$=1.90mm | $f_1$=1.85mm |
| Numerical aperture on image plane side | NA3:0.51 | NA2:0.65 | NA1:0.67 |
| Optical system magnification of objective lens | m3:-1/24.9 | m2:1/23.0 | m1:1/18.2 |

| $i^{th}$ surface | ri | di (407nm) | ni (407nm) | di (655nm) | ni (655nm) | di (785nm) | ni (785nm) |
|---|---|---|---|---|---|---|---|
| 0 | | 0.00 | | 0.00 | | 0.00 | |
| 1 | ∞ | 5.15 | 1.5299 | 5.15 | 1.5144 | 5.15 | 1.5111 |
| 2 | ∞ | 9.70 | 1.0 | 9.70 | 1.0 | 7.70 | 1.0 |
| 3 | 16.586 | 0.90 | 1.5428 | 0.90 | 1.5292 | 0.90 | 1.5254 |
| 4 | -10.144 | 3.50 | 1.0 | 3.50 | 1.0 | 3.50 | 1.0 |
| 5 (Aperture diameter) | ∞ | 0.0 (φ2.3mm) | | 0.0 (φ2.3mm) | | 0.0 (φ2.3mm) | |
| 6 | 1.1268 | 1.00000 | 1.5428 | 1.00000 | 1.5292 | 1.00000 | 1.5254 |
| 6' | 1.1268 | 0.00000 | 1.5428 | 0.00000 | 1.5292 | 0.00000 | 1.5254 |
| 7 | -5.8696 | 0.76 | 1.0 | 0.81 | 1.0 | 0.59 | 1.0 |
| 8 | ∞ | 0.6 | 1.6187 | 0.6 | 1.5775 | 1.2 | 1.5706 |
| 9 | ∞ | | | | | | |

\* Symbol di shows displacement from $i^{th}$ surface to $(i+2)^{th}$ surface.i.

(Table 6-2)

| 3rd surface | |
| --- | --- |
| Aspheric surface coefficient | |
| κ | -1.0000E+00 |
| A1 | 1.2630E-04 |
| Optical path difference function | |
| (blaze wavelength 407 nm) | |
| B2 | -4.2815E-03 |
| B4 | 2.264SE-05 |
| 6th surface (0 mm≤h≤0.993 mm) | |
| Aspheric surface coefficient | |
| κ | -3.5439E-01 |
| A1 | 9.3103E-04 |
| A2 | -2.2020E-02 |
| A3 | 1.9563E-02 |
| A4 | 2.1640E-03 |
| A5 | -9.0776E-03 |
| A6 | 8.9517E-04 |
| Optical path difference function | |
| (blaze wavelength 407 nm) | |
| B2 | -5.4634E-04 |
| B4 | -5.2429E-05 |
| B6 | -3.6016E-04 |
| B8 | 7.4264E-04 |
| B10 | -3.9449E-04 |
| 6'th surface (0.993 mm≤h) | |
| Aspheric surface coefficient | |
| κ | -3.5439E-01 |
| A1 | 9.3103E-04 |
| A2 | -2.2020E-02 |
| A3 | 1.9563E-02 |
| A4 | 21640E-03 |
| A5 | -9.0776E-03 |
| A6 | 8.9517E-04 |
| Optical path difference function | |
| (blaze wavelength 407 nm) | |
| B2 | -1.0927E-03 |
| B4 | -1.0486E-04 |
| B6 | -7.2032E-04 |
| B8 | 1.4853E-03 |
| B10 | -7.8897E-04 |
| 7th surface | |
| Aspheric surface coefficient | |
| κ | -2.8046E+02 |

(continued)

7$^{th}$ surface

Aspheric surface coefficient

| | |
|---|---|
| A1 | -4.6928E-02 |
| A2 | 1.5971E-01 |
| A3 | -1.8631E-01 |
| A4 | 1.0705E-01 |
| A5 | -2.6542E-02 |
| A6 | 1.1769E-03 |

Both an objective lens and a coupling lens in the present example are compatible for HD, DVD and CD and a magnification of the optical system wherein the objective lens and the coupling lens are combined is set to be X7.1 for HD, X7.3 for DVD and X6.4 for CD.

In the case of an individual objective lens, focal length f1 is set to 1.85 mm and magnification m1 is set to 1/18.2 for HD, focal length f2 is set to 1.90 mm and magnification m2 is set to 1/23.0 for DVD, and focal length f3 is set to 1.91 mm and magnification m3 is set to -1/24.9 for CD.

In the case of an individual coupling lens, focal length f1 is set to 9.80 mm for HD, focal length f2 is set to 10.4 mm for DVD, and focal length f3 is set to 10.7 mm for CD.

Each of a plane of incidence (3$^{rd}$ surface) of coupling lens, a plane of incidence (6$^{th}$ surface, 6'$^{th}$ surface) and a plane of emergence (7$^{th}$ surface) of the objective lens is formed to be an aspheric surface that is stipulated by the numerical expression wherein a coefficient shown in Tables 6-1 and 6-2 is substituted in the Numeral 1 and is on an axial symmetry around optical axis L.

On each of the third surface, sixth surface and 6'$^{th}$ surface, there is formed diffractive structure DOE which is expressed by an optical path difference to be added to transmission wavefront by the aforesaid structure. The optical path difference of this kind is expressed by optical path difference function $\varphi$(h) (mm) that is defined by substituting a coefficient shown in Tables 6-1 and 6-2 in the Numeral 2.

Incidentally, a blaze wavelength of the diffractive structure DOE on each of the third surface, sixth surface and 6'$^{th}$ surface is 407 nm.

(Example 7)

Tables 7-1 and 7-2 show lens data in Example 7.

(Table 7-1)

Example 7  Lens data

| Diffraction order number on the 3rd surface | 2 | 1 | 1 |
|---|---|---|---|
| Diffraction order number on the 4th surface | 0 | 1 | 0 |
| Magnification of total optical system | m1:7.0 | m2:6.9 | m3:4.7 |
| Focal length of coupling lens | $f_1$=10.0mm | $f_2$=10.5mm | $f_3$=10.4mm |
| Focal length of objective lens | $f_1$=1.80mm | $f_2$=1.86mm | $f_3$=1.87mm |
| Numerical aperture on image plane side | NA1:0.65 | NA2:0.65 | NA3:0.51 |
| Optical system magnification of objective lens | m1:1/18.7 | m2:1/22.8 | m3:-1/26.4 |

| $i^{th}$ surface | ri | di (407nm) | ni (407nm) | di (655nm) | ni (655nm) | di (785nm) | ni (785nm) |
|---|---|---|---|---|---|---|---|
| 0 | | 0.00 | | 0.00 | | 0.00 | |
| 1 | ∞ | 5.15 | 1.5299 | 5.15 | 1.5144 | 5.15 | 1.5111 |
| 2 | ∞ | 9.84 | 1.0 | 9.84 | 1.0 | 4.67 | 1.0 |
| 3 | 38.005 | 0.90 | 1.5428 | 0.90 | 1.5292 | 0.90 | 1.5254 |
| 4 | -10.360 | 3.50 | 1.0 | 3.50 | 1.0 | 3.50 | 1.0 |
| 5 | ∞ | 0.50 | 1.5299 | 0.50 | 1.5144 | 0.50 | 1.5111 |
| 6 | ∞ | 0.00 | 1.0 | 0.00 | 1.0 | 0.00 | 1.0 |
| 7 (Aperture diameter) | ∞ | 0.0 ($\phi$3.35mm) | | 0.0 ($\phi$3.41mm) | | 0.0 ($\phi$2.81mm) | |
| 8 | 1.1688 | 1.61 | 1.5428 | 1.00 | 1.5860 | 1.00 | 1.5819 |
| 9 | -10.8190 | 0.75 | 1.0 | 0.81 | 1.0 | 0.59 | 1.0 |
| 10 | ∞ | 0.60 | 1.6187 | 0.60 | 1.5775 | 1.20 | 1.5706 |
| 11 | ∞ | | | | | | |

* Symbol di shows displacement from $i^{th}$ surface to $(i+2)^{th}$ surface.

EP 1 587 090 B1

(Table 7-2)

3rd surface

| Optical path difference function | |
| --- | --- |
| (blaze wavelength 407 nm) | |
| B2 | -4.2815E-03 |

4th surface

| Aspheric surface coefficient | |
| --- | --- |
| $\kappa$ | -1.0080E+00 |
| A1 | 1.6438E-04 |

| Optical path difference function | |
| --- | --- |
| (Manufacturing wavelength 655 nm) | |
| B2 | -1.5106E-03 |
| B4 | -1.4920E-05 |

8th surface

| Aspheric surface coefficient | |
| --- | --- |
| $\kappa$ | -3.9716E-01 |
| A1 | 4.6474E-03 |
| A2 | -1.5718E-02 |
| A3 | 1.7397E-02 |
| A4 | -1.0620E-03 |
| A5 | -6.3364E-03 |
| A6 | 1.3825E-03 |

9th surface

| Aspheric surface coefficient | |
| --- | --- |
| $\kappa$ | -1.3755E+03 |
| A1 | -3.6840E-02 |
| A2 | 1.5170E-01 |
| A3 | -1.8213E-01 |
| A4 | 8.4255E-02 |
| A5 | -1.6139E-04 |
| A6 | -8.1375E-03 |

Both an objective lens and a coupling lens in the present example are compatible for HD, DVD and CD and a magnification of the optical system wherein the objective lens and the coupling lens are combined is set to be X7.0 for HD, X6.9 for DVD and X4.7 for CD.

In the case of an individual objective lens, focal length f1 is set to 1.80 mm and magnification m1 is set to 1/18.7 for HD, focal length f2 is set to 1.86 mm and magnification m2 is set to 1/22.8 for DVD, and focal length f3 is set to 1.87 mm and magnification m3 is set to -1/26.4 for CD.

In the case of an individual coupling lens, focal length f1 is set to 10.0 mm for HD, focal length f2 is set to 10.5 mm for DVD, and focal length f3 is set to 10.4 mm for CD.

Each of a plane of emergence (4th surface) of a coupling lens, a plane of incidence (8th surface) and a plane of emergence (9th surface) of the objective lens is formed to be an aspheric surface that is stipulated by the numerical expression wherein a coefficient shown in Tables 7-1 and 7-2 is substituted in the Numeral 1 and is on an axial symmetry around optical axis L.

In this case, x represents an axis in the optical axis direction (the direction of the advance of light is positive), $\kappa$ represents a conic constant and $A_{2i}$ represents an aspheric surface coefficient.

Further, diffractive structure DOE is formed on each of the third surface and the fourth surface, and this diffractive structure DOE is expressed by an optical path difference to be added to transmission wavefront by this structure. The optical path difference of this kind is expressed by optical path difference function $\phi$ (h)(mm) defined by substituting a coefficient shown in Tables 7-1 and 7-2 in the Numeral 2 above.

Incidentally, a blaze wavelength of the diffractive structure DOE on the third surface is 407 nm and a manufacturing wavelength of the diffractive structure DOE on the fourth surface is 655 nm. On the fourth surface, there is formed a wavelength selecting type diffractive structure whose cross section is in a form of steps, by which the ray of light with wavelength λ2 is subjected to diffracting actions, although the light fluxes respectively with wavelength λ1 and wavelength λ3 passing through the diffractive structure are transmitted.

Since the objective lens in the present example is a double-sided aspheric and refractive lens, glass may be used as a material and thereby, an objective lens excellent in heat resistance and light resistance can be obtained.

(Example 8)

Tables 8-1 and 8-2 show lens data in Example 8.

(Table 8-1)

Example 8  Lens data

| Diffraction order number on the 4th surface | 2 | | |
|---|---|---|---|
| Diffraction order number on the 6th surface | 10 | 6 | 5 |
| Magnification of total optical system | m1:7.0 | m2:6.9 | m3:4.9 |
| Focal length of coupling lens | $f_1$=9.8mm | $f_2$=10.4mm | $f_3$=11.9mm |
| Focal length of objective lens | $f_1$=1.80mm | $f_2$=1.86mm | $f_3$=1.87mm |
| Numerical aperture on image plane side | NA1:0.65 | NA2:0.65 | NA3:0.51 |
| Optical system magnification of objective lens | m1:1/18.7 | m2:1/22.8 | m3:-1/26.4 |

| ith surface | ri | di (407nm) | ni (407nm) | ri | di (655nm) | ni (655nm) | di (785nm) | ni (785nm) | |
|---|---|---|---|---|---|---|---|---|---|
| 0 | | 0.00 | | | 0.00 | | 0.00 | | |
| 1 | ∞ | 5.15 | 1.5299 | ∞ | 5.15 | 1.5144 | 5.15 | 1.5111 | Beam splitter |
| 2 | ∞ | 3.00 | 1.0 | ∞ | 10.45 | 1.0 | 5.34 | 1.0 | |
| 3 | ∞ | 1.00 | 1.5428 | | | | | | Color correction element |
| 4 | -137.91 | 8.28 | 1.0 | | | | | | |
| 5 | 16.045 | 0.90 | 1.5428 | | 0.90 | 1.5292 | 0.90 | 1.5254 | Coupling lens |
| 6 | -9.8179 | 3.50 | 1.0 | | 3.50 | 1.0 | 3.50 | 1.0 | |
| 7 | ∞ | 0.50 | 1.5299 | | 0.50 | 1.5144 | 0.50 | 1.5111 | Wavelength plate |
| 8 | ∞ | 0.00 | 1.0 | | 0.00 | 1.0 | 0.00 | 1.0 | |
| 9 (Aperture diameter) | ∞ | 0.0 (φ3.35mm) | | | 0.0 (φ3.41mm) | | 0.0 (φ2.81mm) | | |
| 10 | 1.1688 | 1.61 | 1.5428 | | 1.00 | 1.5860 | 1.00 | 1.5819 | Objective lens |
| 11 | -10.8190 | 0.75 | 1.0 | | 0.81 | 1.0 | 0.59 | 1.0 | |
| 12 | ∞ | 0.60 | 1.6187 | | 0.60 | 1.5775 | 1.20 | 1.5706 | |
| 13 | ∞ | | | | | | | | |

* Symbol di shows displacement from ith surface to (i+2)th surface.

EP 1 587 090 B1

(Table 8-2)

4th surface

Optical path difference function
(blaze wavelength 407 nm)

| | |
|---|---|
| B2 | -1.0675E-02 |

6th surface

Aspheric surface coefficient

| | |
|---|---|
| $\kappa$ | -1.0291E+00 |
| A1 | 1.8107E-04 |

Optical path difference function
(blaze wavelength 407 nm)

| | |
|---|---|
| B2 | 7.1710E-04 |
| B4 | -4.4438E-06 |

10th surface

Aspheric surface coefficient

| | |
|---|---|
| $\kappa$ | -3.9716E-01 |
| A1 | 4.6474E-03 |
| A2 | -1.5718E-02 |
| A3 | 1.7397E-02 |
| A4 | -1.0620E-03 |
| A5 | -6.3364E-03 |
| A6 | 1.3825E-03 |

11th surface

Aspheric surface coefficient

| | |
|---|---|
| $\kappa$ | -1.3755E+03 |
| A1 | -3.6840E-02 |
| A2 | 1.5170E-01 |
| A3 | -1.8213E-01 |
| A4 | 8.4255E-02 |
| A5 | -1.6139E-04 |
| A6 | -8.1375E-03 |

The objective lens and the coupling lens in the present example are compatible for HD, DVD and CD, and the chromatic aberration correcting element is exclusively for HD. A magnification of the total optical system including the chromatic aberration correcting element, the coupling lens and the objective lens for HD is set to X7.0, while, a magnification of the coupling lens and a magnification of the objective lens both for DVD and CD are set respectively to X6.9 and X4.9.

Further, in the case of the individual objective lens, focal length f1 is set to 1.80 mm and magnification m1 is set to 1/18.7 for HD, focal length f2 is set to 1.86 mm and magnification m2 is set to 1/22.8 for DVD, and focal length f3 is set to 1.87 mm and magnification m3 is set to 1/26.4 for CD.

In the case of an individual coupling lens, focal length f1 is set to 9.80 mm for HD, focal length f2 is set to 10.4 mm for DVD, and focal length f3 is set to 11.9 mm for CD.

Each of a plane of emergence (6th surface) of the coupling lens, a plane of incidence (10th surface) and a plane of emergence (7th surface) of the objective lens is formed to be an aspheric surface that is stipulated by the numerical expression wherein a coefficient shown in Tables 8-1 and 8-2 is substituted in the Numeral 1 and is on an axial symmetry around optical axis L.

On each of the fourth surface and sixth surface, there is formed diffractive structure DOE which is expressed by an optical path difference to be added to transmission wavefront by the aforesaid structure. The optical path difference of this kind is expressed by optical path difference function $\varphi(h)$ (mm) that is defined by substituting a coefficient shown in Tables 8-1 and 8-2 in the Numeral 2.

Incidentally, a blaze wavelength of the diffractive structure DOE on each of the fourth surface and sixth surface is 407 nm.

Since the objective lens in the present example is a double-sided aspheric and refractive lens, glass may be used as a material and thereby, an objective lens excellent in heat resistance and light resistance can be obtained.

(Example 9)

Tables 9-1 and 9-2 show lens data in Example 9.

(Table 9-1)

Example 9 Lens data

|  | $f_1$=3.10mm NA1:0.673 | $f_2$=3.18mm NA2:0.65 | $f_3$=3.20mm NA3:0.51 |
|---|---|---|---|
| Focal length of objective lens | | | |
| Numerical aperture on image plane side | | | |
| Optical system magnification of objective lens | m1:1/29.9 | m2:1/55.6 | m3:-1/25.5 |

| $i^{th}$ surface | ri | di (407nm) | ni (407nm) | di (655nm) | ni (655nm) | di (785nm) | ni (785nm) |
|---|---|---|---|---|---|---|---|
| 0 | ∞ | -90 | | -173.32 | | 87.91 | |
| 1 (Aperture diameter) | | 0.0 (φ2.02mm) | | 0.0 (φ2.02mm) | | 0.0 (φ2.02mm) | |
| 2 | 1.8260 | 1.70000 | 1.5428 | 1.70000 | 1.5292 | 1.70000 | 1.5254 |
| 2' | 1.8098 | -0.04392 | 1.5428 | -0.04392 | 1.5292 | -0.04392 | 1.5254 |
| 3 | -10.8700 | 1.69 | 1.0 | 1.80 | 1.0 | 1.61 | 1.0 |
| 4 | ∞ | 0.6 | 1.6187 | 0.6 | 1.5775 | 1.2 | 1.5706 |
| 5 | ∞ | | | | | | |

* Symbol di shows displacement from $i^{th}$ surface to $(i+2)^{th}$ surface.

(Table 9-2)

2nd surface (0 mm≤h≤1.73 mm)

| Aspheric surface coefficient | |
|---|---|
| κ | **-1.0013E+00** |
| A1 | **-1.9929E-02** |
| A2 | **1.6960E-02** |
| A3 | **-3.2510E-03** |
| A4 | **-1.2679E-04** |
| A5 | **1.0129E-04** |
| A6 | **-8.8567E-06** |

Optical path difference function

(HD DVD: 10th order DVD: 6th-order

CD: 5th-order Manufacturing wavelength 407 nm)

| | |
|---|---|
| B2 | **4.3607E-04** |
| B4 | **-1.7745E-03** |
| B6 | **1.0655E-03** |
| B8 | **-2.8475E-04** |
| B10 | **2.5699E-05** |

2'nd surface (1.73 mm≤h)

| Aspheric surface coefficient | |
|---|---|
| κ | **-7.1254E-01** |
| A1 | **-1.0163E-02** |
| A2 | **5.3796E-03** |
| A3 | **4.6039E-04** |
| A4 | **-7.3796E-04** |
| A5 | **2.0228E-04** |
| A6 | **-2.2545E-05** |

Optical path difference function

(HD DVD: 5th-order DVD: 3rd-order

Manufacturing wavelength 407 nm)

| | |
|---|---|
| B2 | **-3.2170E-03** |
| B4 | **-8.8993E-04** |
| B6 | **1.1991E-03** |
| B8 | **-3.2240E-04** |
| B10 | **2.3826E-05** |

3rd surface

| Aspheric surface coefficient | |
|---|---|
| κ | **-2.6305E+02** |
| A1 | **-2.6697E-03** |
| A2 | **5.2741 E-03** |
| A3 | **-2.7900E-03** |
| A4 | **9.0361 E-04** |
| A5 | **-1.8256E-04** |
| A6 | **1.4142E-05** |

The objective lens in the present example is compatible for HD, DVD and CD.

In the case of the objective lens, focal length f1 is set to 3.10 mm and magnification m1 is set to 1/29.9 for HD, focal length f2 is set to 3.18 mm and magnification m2 is set to 1/55.6 for DVD, and focal length f3 is set to 3.20 mm and magnification m3 is set to -1/25.5 for CD.

On each of the second surface and 2'nd surface, there is formed diffractive structure DOE which is expressed by an optical path difference to be added to transmission wavefront by the aforesaid structure. The optical path difference of this kind is expressed by optical path difference function $\varphi(h)$ (mm) that is defined by substituting a coefficient shown in Tables 9-1 and 9-2 in the Numeral 2.

Incidentally, a manufacturing wavelength of the diffractive structure DOE on each of the second surface and 2'nd surface is 407 nm.

Each of figs. 16(a) and 16(b) is a diagram showing characteristics of the objective lens in Example 9, and Fig. 16(a) is a longitudinal spherical aberration diagram in the case where a light flux in which a wavelength of the light flux emitted from the first light source is changed by +10 nm enters the objective lens, wherein paraxial light-converging position PO, light-converging position P1 of a light flux having passed through the area farthest from the optical axis among the first area AREA1, light-converging position P2 of a light flux having passed through the area closest to the optical axis among the second area AREA2, and light-converging position P3 of a light flux having passed through the area farthest from the optical axis are shown, while, Fig. 16(b) shows a longitudinal spherical aberration of the third light flux. As shown in Fig. 16(a), the expression of $|P2 - P3| = 0.011$ mm stands, and $P1 \leq P2 \leq P0$ and $1.7 \times 10^{-3} \leq |P2 - P3| \leq 7.0 \times 10^{-3}$ are satisfied. AS shown in Fig. 16(b), therefore, light-converging positions a2 and a3 of diffracted light of the third light flux having passed through the second area AREA2 turn out to be nonlinear to be defocused from light-converging position a1 of the third light flux having been transmitted through the first area AREA1. In this case, light converged at light-converging position a2 is distributed, on a recording surface, to be in a form of a doughnut whose center is on the optical axis. Namely, doughnut-formed light distribution (flare) is generated. Light converged at light-converging position a3 also generates another doughnut-formed light distribution on the recording surface. An inside diameter of the doughnut-formed light distribution resulted from these two overlapped doughnut-formed light distributions is 0.012 mm. When inclination of the spherical aberration is smaller to be leveling off though light-converging positions a2 and a3 of the third light flux having passed through the second area AREA2 are not away from light-converging position a1 of the third light flux having passed through the first area AREA1, an influence on wavelength characteristics and temperature characteristics is greater. However, light is less dense and an influence of flare is small.

On the other hand, when inclination of spherical aberration is greater than that of the light-converging positions a2 and a3, as in light-converging positions a4 and a5 of the third light flux having passed through the second area AREA2, light density on the recording surface is high, and aberration deterioration caused by changes in wavelength and temperature becomes small.

If the light-converging positions a4 and a5 part from the light-converging position a1 while the inclination remains unchanged, a light flux does not enter the main sensor of a detector, which is preferable. However, if they part excessively, chromatic aberration for the first light flux becomes greater, a width of ring-shaped zone in the direction perpendicular to the optical axis becomes narrow, thus, workability is declined and a loss of an mount of light increases.

(Comparative example 10)

Tables 10-1 and 10-2 show lens data of the objective lens as a comparative example.

(Table 10-1)

Comparative Example Lens data

| Focal length of objective lens | f₁=3.10mm | f₂=3.18mm | f₃=3.20mm |
|---|---|---|---|
| Numerical aperture on image plane side | NA1:0.673 | NA2:0.65 | NA3:0.51 |
| Optical system magnification of objective lens | m1:1/30.0 | m2:1/43.1 | m3:-1/33.8 |

| i$^{th}$ surface | ri | di (407nm) | ni (407nm) | di (655nm) | ni (655nm) | di (785nm) | ni (785nm) |
|---|---|---|---|---|---|---|---|
| 0 | | -90 | | -134.07 | | 11.33 | |
| 1 (Aperture diameter) | ∞ | 0.0 (φ2.02mm) | | 0.0 (φ2.02mm) | | 0.0 (φ2.02mm) | |
| 2 | 1.8010 | 1.70000 | 1.5428 | 1.70000 | 1.5292 | 1.70000 | 1.5254 |
| 2' | 1.7937 | -0.02300 | 1.5428 | -0.02300 | 1.5292 | -0.02300 | 1.5254 |
| 3 | -13.3097 | 1.67 | 1.0 | 1.76 | 1.0 | 1.56 | 1.0 |
| 4 | ∞ | 0.6 | 1.6187 | 0.6 | 1.5775 | 1.2 | 1.5706 |
| 5 | ∞ | | | | | | |

* Symbol di shows displacement from i$^{th}$ surface to (i+2)$^{th}$ surface.

(Table 10-2)

2$^{nd}$ surface (0 mm≤h≤1.73 mm)

Aspheric surface coefficient

κ   -9.5975E-01

A1   -1.9249E-02

(continued)

2nd surface (0 mm≤h≤1.73 mm)

| Aspheric surface coefficient | |
|---|---|
| A2 | 1.8179E-02 |
| A3 | -3.7756E-03 |
| A4 | 1.3915E-04 |
| A5 | 3.8291 E-05 |
| A6 | -3.6421 E-06 |

Optical path difference function

(HD DVD: 10th-order DVD: 6th-order

CD: 5th-order Manufacturing wavelength 407 nm)

| C2 | 3.1537E-04 |
|---|---|
| C4 | -1.5497E-03 |
| C6 | 1.0384E-03 |
| C8 | -2.7555E-04 |
| C10 | 2.4383E-05 |

2'nd surface (1.73 mm≤h)

| Aspheric surface coefficient | |
|---|---|
| κ | -6.9211 E-01 |
| A1 | -9.5032E-03 |
| A2 | 5.4615E-03 |
| A3 | 4.4722E-04 |
| A4 | -7.4676E-04 |
| A5 | 2.0247E-04 |
| A6 | -1.9628E-05 |

Optical path difference function

(HD DVD: 5th-order DVD: 3rd-order

Manufacturing wavelength 407 nm)

| C2 | -1.5882E-03 |
|---|---|
| C4 | -1.0627E-03 |
| C6 | 1.1232E-03 |
| C8 | -3.2858E-04 |
| C10 | 3.2113E-05 |

3rd surface

| Aspheric surface coefficient | |
|---|---|
| κ | -9.8864E+01 |
| A1 | 6.7144E-04 |
| A2 | 5.3244E-03 |
| A3 | -3.0571E-03 |
| A4 | 8.7675E-04 |
| A5 | -1.5241E-04 |
| A6 | 1.1280E-05 |

The objective lens in the present comparative example is compatible for HD, DVD and CD.

In the case of the objective lens, focal length f1 is set to 3.10 mm and magnification m1 is set to 1/30.0 for HD, focal length f2 is set to 3.18 mm and magnification m2 is set to 1/43.1 for DVD, and focal length f3 is set to 3.20 mm and magnification m3 is set to -1/33.8 for CD.

On each of the second surface and 2'nd surface, there is formed diffractive structure DOE which is expressed by an optical path difference to be added to transmission wavefront by the aforesaid structure. The optical path difference of this kind is expressed by optical path difference function φ(h) (mm) that is defined by substituting a coefficient shown in Tables 10-1 and 10-2 in the Numeral 2.

Incidentally, a manufacturing wavelength of the diffractive structure DOE on each of the second surface and 2'nd surface is 407 nm.

Each of figs. 17(a) and 17(b) is a diagram showing characteristics of the objective lens in the comparative example, and Fig. 17(a) shows paraxial light-converging position P0 in the case where a wavelength of the first light flux is changed by +10 nm, light-converging position P1 of a light flux having passed through the area farthest from the optical axis in the first area AREA1, light-converging position P2 of a light flux having passed through the area closest to the optical axis in the second area AREA2, and light-converging position P3 of a light flux having passed through the area farthest from the optical axis, and Fig. 17(b) shows longitudinal spherical aberration of the third light flux. As shown in Fig. 17(a), the expression of |P2 - P3| = 0.0015 mm stands, and $1.7 \times 10^{-3} \leq |P2 - P3| < 7.0 \times 10^{-3}$ is not satisfied although P1 ≤ P2 ≤ P0 is satisfied. Therefore, chromatic aberrations A2 and A3 of the third light flux having passed through the second area AREA2 are defocused, following the chromatic aberration A1 of the third light flux having been transmitted through the first area AREA1, as shown in Fig. 17(b). If the defocusing is continuous like this, flare is generated undesirably near the position identical to the light-convergent spot.

(Example 11)

Tables 11-1 through 11-3 shows lens data in Example 11.

(Table 11-1)

Example 11  Lens data

| Focal length of objective lens | $f_1$=3.00mm | $f_2$=3.10mm | $f_3$=3.12mm |
|---|---|---|---|
| Numerical aperture on image plane side | NA1:0.65 | NA2:0.65 | NA3:0.51 |
| $6^{th}$ surface diffraction order number | n1:8 | n2:5 | n3:4 |
| $4^{th}$ surface diffraction order number | n1:10 | n2:6 | n3:5 |
| $6'^{th}$ surface diffraction order | n1:5 | n2:3 | |
| Total optical system magnification | m1:7.22 | m2:7.26 | m3:8.12 |
| Objective lens magnification | m1:1/31.0 | m2:1/54.3 | m3:-1/29.9 |

| $i^{th}$ surface | ri | di (407nm) | ni (407nm) | di (655nm) | ni (655nm) | di (785nm) | ni (785nm) | Optical element name |
|---|---|---|---|---|---|---|---|---|
| 0 | | 16.56 | | 16.56 | | 16.56 | | |
| 1 | 20.227 | 1.50 | 1.559806 | 1.50 | 1.540725 | 1.50 | 1.537237 | Coupling lens |
| 2 | 7.5605 | 4.00 | 1.0 | 3.59 | 1.0 | 0.70 | 1.0 | |
| 3 | 22.654 | 1.70 | 1.559806 | 1.70 | 1.540725 | 1.70 | 1.537237 | |
| 4 | -11.139 | 20.00 | 1.0 | 20.41 | 1.0 | 23.30 | 1.0 | |
| 5 (Aperture diameter) | ∞ | 0.01 ($\phi$3.964mm) | 1.0 | 0.01 ($\phi$3.964mm) | 1.0 | 0.01 ($\phi$3.288mm) | 1.0 | |
| 6 | 1.92355 | 1.65000 | 1.559806 | 1.65000 | 1.540725 | 1.65000 | 1.537237 | Objective lens |
| 6' | 1.98118 | 0.00583 | 1.559806 | 0.00583 | 1.540725 | 0.00583 | 1.537237 | |
| 7 | -16.03440 | 1.55 | 1.0 | 1.67 | 1.0 | 1.47 | 1.0 | |
| 7' | -13.18912 | 0.00000 | 1.0 | 0.00000 | 1.0 | 0.00000 | 1.0 | |
| 8 | ∞ | 0.6 | 1.61869 | 0.6 | 1.57752 | 1.2 | 1.57063 | Optical disc |
| 9 | ∞ | | | | | | | |

* Symbol di shows displacement from $i^{th}$ surface to $(i+1)^{th}$ surface.
* Symbol d6' and d7' show displacements respectively from $6^{th}$ surface to $6'^{th}$ surface and from $7^{th}$ surface to $7'^{th}$ surface.

**EP 1 587 090 B1**

(Table 11-2)

Aspheric surface data

1st surface

Aspheric surface coefficient

| | |
|---|---|
| κ | **-6.6320 × E-1** |
| **A1** | **-1.9246 × E-3** |

2nd surface

Aspheric surface coefficient

| | |
|---|---|
| κ | **-4.8851** |
| **A1** | **-1.1656 × E-3** |

3rd surface

Aspheric surface coefficient

| | |
|---|---|
| κ | **-1.1684** |
| **A1** | **-1.3579 × E-4** |

4th surface

Aspheric surface coefficient

| | |
|---|---|
| κ | **-1.0547** |
| **A1** | **-7.5635 × E-5** |

Optical path difference function

| | |
|---|---|
| **B2** | **9.0203 × E-1** |

6th surface (0<h≤1.662 mm: HD DVD/DVD/CD common area)

Aspheric surface coefficient

| | |
|---|---|
| κ | **-4.4662 × E-1** |
| **A1** | **+8.7126 × E-4** |
| **A2** | **-1.9063 × E-3** |
| **A3** | **+9.2646 × E-4** |
| **A4** | **-2.1198 × E-4** |
| **A5** | **+1.6273 × E-7** |
| **A6** | **+1.3793 × E-6** |

Optical path difference function

| | |
|---|---|
| **B2** | **-2.3141 × E-1** |
| **B4** | **-2.0141 × E-2** |
| **B6** | **-7.5021 × E-3** |
| **B8** | **+1.3559 × E-3** |
| **B10** | **-4.0867 × E-4** |

(Table 11-3)

Aspheric surface data

6'th surface (1.662 mm<h: HD DVD/DVD common area)

Aspheric surface coefficient

| | |
|---|---|
| κ | **-4.1961 × E-1** |
| **A1** | **+3.0725 × E-3** |
| **A2** | **-2.5861 × E-3** |
| **A3** | **+9.6551 × E-4** |
| **A4** | **-1.3826 × E-4** |
| **A5** | **+7.5482 × E-6** |
| **A6** | **-7.5795 × E-7** |

Optical path difference function

| | |
|---|---|
| **B2** | **-5.4710 × E-1** |

68

(continued)

Optical path difference function

| | |
|---|---|
| B4 | -2.6404 × E-2 |
| B6 | -1.5524 × E-2 |
| B8 | -1.0308 × E-3 |
| B10 | +1.1379 × E-3 |

7th surface (0<h≤1.362 mm HD DVD/DVD/CD common area)

Aspheric surface coefficient

| | |
|---|---|
| κ | -8.0653 × E+2 |
| A1 | -5.5926 × E-3 |
| A2 | +1.1660 × E-2 |
| A3 | -6.4291 × E-3 |
| A | +1.5528 × E-3 |
| A5 | -1.3029 × E-4 |
| A6 | -3.4460 × E-6 |

7'th surface (1.362 mm<h HD DVD/DVD common area)

Aspheric surface coefficient

| | |
|---|---|
| κ | -1.2782 × E+3 |
| A1 | -7.3881 × E-3 |
| A2 | +1.1800 × E-2 |
| A3 | -6.0862 × E-3 |
| A4 | +1.6068 × E-3 |
| A5 | -2.3565 × E-4 |
| A6 | +1.5370 × E-5 |

The objective lens and the coupling lens in the present example are compatible for HD, DVD and CD as shown in Fig. 15

The objective lens in Example 1 is used as an objective lens.

Each of the first surface, the second surface, the third surface and the fourth surface of the coupling lens is formed to be an aspheric surface that is stipulated by the numerical expression wherein a coefficient shown in Tables 11-1 through 11-3 is substituted in the Numeral 1 and is on an axial symmetry around optical axis L.

On the fourth surface, there is formed diffractive structure DOE which is expressed by an optical path difference to be added to transmission wavefront by the aforesaid structure. The optical path difference of this kind is expressed by optical path difference function $\varphi(h)$ (mm) that is defined by substituting a coefficient shown in Tables 11-1 through 11-3 in the Numeral 2. Incidentally, a blaze wavelength is set to 1 mm. This structure corrects chromatic aberration in HD.

If an optical system is formed as in Example 11, optical paths for the first light flux, the second light flux and the third light flux each being reflected on the information recording surface can be made uniform.

Incidentally, in Example 11, when position P1 of the first lens L1 is made to be a standard, a distance from position P1 to position P2 is set to 0.41 mm and a distance from position P1 to position P3 is set to 3.3 mm.

**Claims**

1.  An optical pickup apparatus comprising:

    a first light source (LD1) for emitting a first light flux with a wavelength λ1 for recording and/or reproducing information on a first optical disc having a protective substrate (PL3) with a thickness t1;
    a third light source (LD3) for emitting a third light flux with a wavelength λ3 (1.8 x λ1 ≤ λ3 ≤ 2.2 x λ1) for recording and/or reproducing information on a third optical disc having a protective substrate (PL3) with a thickness t3 (t1 < t3); and
    an objective lens (OBJ) arranged in a common optical path of the first light flux and the third light flux when the optical pickup apparatus records and/or reproduces information on each of the first and third optical discs, and wherein
    a magnification m3 of the objective lens (OBJ) for the third light flux satisfies

$$-1/10 \leq m3 < 0$$

**characterized in that** the optical pickup apparatus employs a structure in which the first light flux enters into the objective lens (OBJ) as a converging light flux.

2. The optical pickup apparatus of claim 1, **characterized in that** a magnification m1 of the objective lens (OBJ) for the first light flux satisfies

$$0 < m1 \leq 1/10.$$

3. The optical pickup apparatus of claim 2, **characterized in that** the magnification m1 of the objective lens (OBJ) for the first light flux satisfies

$$0 < m1 \leq 1/15.$$

4. The optical pickup apparatus of claim 1, **characterized in that** the magnification m3 of the objective lens (OBJ) for the third light flux satisfies

$$-1/15 \leq m3 < 0.$$

5. The optical pickup apparatus of claim 1, further **characterized by** comprising:

   a second light source for emitting a second light flux with a wavelength λ2 ($1.5 \times \lambda1 \leq \lambda2 \leq 1.7 \times \lambda1$) for recording and/or reproducing information on a second optical disc having a protective substrate (PL3) with a thickness t2 ($0.9 \times t1 \leq t2$).

6. The optical pickup apparatus of claim 1, further **characterized by** comprising:

   a phase structure arranged on a first optical surface of the objective lens (OBJ).

7. The optical pickup apparatus of claim 6, **characterized in that** the phase structure is a diffractive structure.

8. The optical pickup apparatus of claim 7, **characterized in that** an Abbe constant νd satisfies $40 \leq \nu d \leq 90$, the diffractive structure comprises ring-shaped zones arranged on an area on the first optical surface of the objective lens (OBJ) and the area is not used for information recording or reproducing for the third optical disc, and a step difference of each of the ring-shaped zones $d_{out}$ along a parallel direction to an optical axis satisfies

$$(2k - 1) \times \lambda1/(n1 - 1) \leq d_{out} < 2k \times \lambda1/(n1 - 1)$$

   where k is a positive integer value and n1 is a refractive index of the objective lens (OBJ) for a first light flux.

9. The optical pickup apparatus of claim 8, **characterized in that** the step difference of each of the ring-shaped zones $d_{out}$ along a parallel direction to an optical axis satisfies

$$5 \times \lambda1/(n1 - 1) \leq d_{out} < 6 \times \lambda1 /(n1 - 1).$$

10. The optical pickup apparatus of claim 8, **characterized in that** the objective lens (OBJ) includes on at least one surface thereof:

a first area for recording and/or reproducing information of the third light flux;
a second area arranged outside of the first area; and
wherein when the first light flux whose wavelength changes +10 nm is emitted by the first light source (LD1) and enters into the objective lens (OBJ), the objective lens (OBJ) satisfies

$$1.7 \times 10^{-3} \leq |P2 - P3| \leq 7.0 \times 10^{-3}$$

and

$$P0 \leq P2 \leq P1 \text{ or } P1 \leq P2 \leq P0$$

where P0 is a paraxial converging position of a light flux passing through the objective lens (OBJ),
P1 is a converging position of a light flux passing through a farthest area from the optical axis in the first area,
P2 is a converging position of a light flux passing through a closest area to the optical axis in the second area,
P3 is a converging position of a light flux passing through farthest area from the optical axis in the objective lens (OBJ).

11. The optical pickup apparatus of claim 8, **characterized in that** when the first light source (LD1) is adapted to emits the first light flux whose wavelength changes, a longitudinal aberration in the first area and a longitudinal aberration in the second area are inclined to a same direction.

12. The optical pickup apparatus of claim 7, **characterized in that** when the third light flux enters in the objective lens (OBJ), the objective lens (OBJ) is adapted to converges a light flux passing through an area which is outside of a numerical aperture of the third light flux on the first optical surface of the objective lens (OBJ), at a position which is apart 0.01 mm or more from a position of a converging spot on the third optical disc.

13. The optical pickup apparatus of claim 7, **characterized in that**
a third order spherical aberration of the objective lens (OBJ) is a wavefront aberration component of a converging spot formed on an information recording surface of at least one of the first through third discs and
a change amount of the third order spherical aberration of the objective lens (OBJ) generated when a temperature is increased has a positive value.

14. The optical pickup apparatus of claim 7, **characterized in that** a power of the phase structure has a negative value.

15. The optical pickup apparatus of claim 6, **characterized in that** the phase structure is arranged on the area on the first optical surface on the objective lens (OBJ) where the second light flux passes through.

16. The optical pickup apparatus of claim 7, **characterized in that**
the phase structure is adapted to transmit the first light flux without providing a phase difference and
to diffract the second light flux with providing a phase difference.

17. The optical pickup apparatus of claim 14, **characterized in that**
the optical pickup apparatus satisfies

$$|dfb/d\lambda| \leq 0.1 \ [\mu m/nm],$$

where $dfb/d\lambda$ is a change amount of position along an optical axis on which a wavefront aberration is minimum corresponding to a wavelength variation with 1 nm of the first light flux in a converged spot formed on the information recording surface of the first optical information medium.

**18.** The optical pickup apparatus of claim 14, **characterized in that**

$$\left|dfb/d\lambda\right| \leq 0.2 \; [\mu m/nm]$$

is satisfied,
where dfb/dλ is a change amount of position along an optical axis on which a wavefront aberration is minimum corresponding to a wavelength variation with 1 nm of the second light flux in a converged spot formed on the information recording surface of the second optical information medium.

**19.** The optical pickup apparatus of claim 6, **characterized in that**
the phase structure is a diffractive structure having a plurality of ring-shaped zones and having a serrated cross section including a optical axis,
a center of each of the plurality of ring-shaped zones is arranged on an optical axis, and
the optical pickup apparatus satisfies a following expression,

$$10 \; x \; \lambda1/(n1 - 1) \leq d < 12 \; x \; \lambda1/(n1 - 1)$$

wherein n1 is a refractive index of the objective lens (OBJ) for a wavelength λ1, and
d is a step difference along the optical axis of each of the ring-shaped zones.

**20.** The optical pickup apparatus of claim 5, **characterized in that** the optical pickup apparatus satisfies t1 = t2.

**21.** The optical pickup apparatus of claim 5, **characterized in that** the optical pickup apparatus satisfies m2 = 0, where m2 is a magnification of the objective lens (OBJ) for the second light flux.

**22.** The optical pickup apparatus of claim 1, **characterized in that** the objective lens (OBJ) is made of a glass material.

**23.** The optical pickup apparatus of claim 1, further **characterized by** comprising:

an numerical aperture limiting element arranged in an optical path of the third light flux.

**24.** The optical pickup apparatus of claim 23, **characterized in that** the numerical aperture limiting element is a liquid crystal element or a wavelength selective filter.

**25.** The optical pickup apparatus of claim 1, further **characterized by** comprising:

a chromatic aberration correcting element arranged in an optical path of the first light flux for correcting a chromatic aberration of the first light flux.

**26.** The optical pickup apparatus of claim 5, further **characterized by** comprising:

a photodetector for receiving the first light flux reflected on an information recording surface of the first optical disc when the optical pickup apparatus reproduces or records information on the first optical disc,
for receiving the second light flux reflected on an information recording surface of the second optical disc when the optical pickup apparatus reproduces or records information on the second optical disc, and
for receiving the third light flux reflected on an information recording surface of the third optical disc when the optical pickup apparatus reproduces or records information on the third optical disc.

**27.** The optical pickup apparatus of claim 26, further **characterized by** comprising:

a coupling lens arranged in a common optical path of the first to third light fluxes; and
an actuator arranged in a common optical path of the first to third light fluxes for actuating the coupling lens.

**28.** The optical pickup apparatus of claim 27, **characterized in that** the coupling lens has a diffractive structure on at least one surface thereof.

**29.** The optical pickup apparatus of claim 28, **characterized in that** the diffractive structure of the coupling lens satisfies

$$|\mathrm{dfb/d\lambda}| \leq 0.1 \ [\mu m/nm]$$

where dfb/dλ is a change amount of a position along an optical axis on which a wavefront aberration is minimum corresponding to a wavelength variation with 1 nm of the first light flux in a converged spot formed on the information recording surface of the first optical information medium.

**30.** The optical pickup apparatus of claim 27, **characterized in that** the coupling lens comprises a diffraction grating and the diffraction grating is adapted to detects a movement of the objective lens (OBJ) in a direction perpendicular to an optical axis.

**31.** The optical pickup apparatus of claim 26, further **characterized by** comprising:

a coupling lens arranged in a common optical path of the first to third light fluxes and
a liquid crystal element arranged in a common optical path of the first to third light fluxes.

**32.** The optical pickup apparatus of claim 31, **characterized in that** the coupling lens has a diffractive structure on at least one surface thereof.

**33.** The optical pickup apparatus of claim 32, **characterized in that** the diffractive structure of the coupling lens satisfies

$$|\mathrm{dfb/d\lambda}| \leq 0.1 \ [\mu m/nm]$$

where dfb/dλ is a change amount of a position along an optical axis on which a wavefront aberration is minimum corresponding to a wavelength variation with 1 nm of the first light flux in a converged spot formed on the information recording surface of the first optical information medium.

**34.** The optical pickup apparatus of claim 31, **characterized in that** the coupling lens comprises a diffraction grating and the diffraction grating is adapted to detects a movement of the objective lens (OBJ) in a direction perpendicular to an optical axis.

**35.** The optical pickup apparatus of claim 26, **characterized in that** the second light source and the third light source (LD3) are packaged in one body with arranged in one case.

**36.** The optical pickup apparatus of claim 5, further **characterized by** comprising:

a first photodetector for receiving the first light flux reflected on an information recording surface of the first optical disc, and
the second light flux reflected on an information recording surface of the second optical disc; and
a second photodetector for receiving the third light flux reflected on an information recording surface of the third optical disc.

**37.** The optical pickup apparatus of claim 36, further **characterized by** comprising:

a coupling lens arranged in a common optical path of the first to third light fluxes and
the coupling lens has a diffractive structure on at least one surface thereof.

**38.** The optical pickup apparatus of claim 37, further **characterized by** comprising:

a chromatic aberration correcting element arranged in an optical path where only the first light flux passing through for correcting a chromatic aberration of the first light flux.

**39.** The optical pickup apparatus of claim 37, further **characterized by** comprising:

a astigmatism generating plate arranged in an optical path between the coupling lens and the first photodetector; and

wherein at lest one of the first light flux and the second light flux enters into the coupling lens after being reflected by the astigmatism generating plate.

**40.** The optical pickup apparatus of claim 37, further **characterized by** comprising:

a compound beam splitter arranged in an optical path between the coupling lens and the first photodetector, wherein the compound beam splitter is adapted to merges optical paths of the first light flux and second light flux, means for making the first and second light fluxes whose optical paths are merged by the compound beam splitter enters into the coupling lens, and

the compound beam splitter is adapted to make a difference between forward optical paths of the first and second light fluxes and backward optical paths of the first and second light fluxes.

**41.** The optical pickup apparatus of claim 40, **characterized in that**

the composite beam splitter comprises a first surface having a dichroic function which is adapted to transmit or reflects an entering light flux according to a wavelength of the entering light flux,

a second surface having a beam splitter function which is adapted to transmit or reflects an entering light flux according to a polarization direction of the entering light flux, and

a third surface for reflecting an entering light flux.

**42.** The optical pickup apparatus of claim 41, **characterized in that**

arranged so that the second light flux emitted by the second light source goes out from the composite beam splitter after passing through the first and second surfaces,

the second light flux emitted by the coupling lens goes out from the composite beam splitter after being reflected by the second and third surfaces,

the first light flux emitted by the first light source (LD1) goes out from the composite beam splitter after being reflected by the first surface and passing through the second surfaces successively,

the first light flux emitted by the coupling lens goes out from the composite beam splitter after being reflected by the second and third surfaces.

**43.** The optical pickup apparatus for claim 37, **characterized in that**

the diffractive structure of the coupling lens has a plurality of ring-shaped zones whose centers are arranged at the optical axis and has a serrated cross section including the optical axis, and

the optical pickup apparatus satisfies a following expression,

$$2 \times \lambda 1/(n1 - 1) \leq d < 3 \times \lambda 1/(n1 - 1)$$

wherein n1 is a refractive index of the objective lens (OBJ) for a wavelength λ1, and

d is a step difference along the optical axis of each of the ring-shaped zones.

**44.** The optical pickup apparatus of claim 37, **characterized in that** the diffractive structure is arranged on each of an optical disc side of an optical surface on the coupling lens and an optical disc side of an optical surface on the coupling lens.

**45.** The optical pickup apparatus of claim 44, **characterized in that**

the diffractive structure of the coupling lens has a plurality of ring-shaped zones whose centers are arranged at the optical axis and has a serrated cross section including the optical axis, and

the optical pickup apparatus satisfies a following expression,

$$10 \times \lambda 1/(n1 - 1) \leq d < 12 \times \lambda 1/(n1 - 1)$$

**EP 1 587 090 B1**

wherein n1 is a refractive index of the objective lens (OBJ) for a wavelength λ1, and
d is a step difference along the optical axis of each of the ring-shaped zones.

46. The optical pickup apparatus of claim 44, **characterized in that**
the diffractive structure arranged on the light source side of the optical surface on the coupling lens is adapted to transmit the first light flux without providing a phase difference, and to diffract the second light flux with providing a phase difference.

47. The optical pickup apparatus of claim 37, **characterized in that** the coupling lens comprises a diffraction grating and the diffraction grating is adapted to detects a movement of the objective lens (OBJ) in a direction perpendicular to an optical axis.

48. The optical pickup apparatus of claim 37, further comprising:

a first coupling lens arranged in a common optical path of the first and second light fluxes,
a second coupling lens arranged in an optical path of the third light fluxes, and
a diffractive structure arranged on at least one surface of the first and second coupling lenses.

49. The optical pickup apparatus of claim 36, **characterized in that** the second photodetector is a hologram laser.

50. The optical pickup apparatus of claim 48, **characterized in that**
the coupling lenses has a diffraction grating on at least one optical surface thereof and
the diffraction grating is adapted to detect a movement of the objective lens (OBJ) in a direction perpendicular to an optical axis.

51. The optical pickup apparatus of claim 5, further **characterized by** comprising:

a first photodetector for receiving the second light flux reflected on an information recording surface of the second optical disc, and
the third light flux reflected on an information recording surface of the third optical disc; and
a second photodetector for receiving the first light flux reflected on an information recording surface of the first optical disc.

52. The optical pickup apparatus of claim 51, further **characterized by** comprising:

a coupling lens having a diffractive structure and arranged in a common optical path of the second light flux and the third light flux.

53. The optical pickup apparatus of claim 51, **characterized in that** the first photodetector, the second light source and the third light source (LD3) are packaged in one body by being arranged in one case.

54. The optical pickup apparatus of claim 52, **characterized in that**
the coupling lens has a diffraction grating and
the diffraction grating is adapted to detect a movement of the objective lens (OBJ) in a direction perpendicular to an optical axis.

55. The optical pickup apparatus of claim 5, further **characterized by** comprising:

a photodetector for receiving the first light flux reflected by an information recording surface of the first optical disc;
a first laser in which a photodetector for receiving the second light flux reflected by an information recording surface of the second optical disc and the second light source are packaged in one body; and
a second laser in which a photodetector for receiving the third light flux reflected by an information recording surface of the third optical disc and the third light source (LD3) are packaged in one body.

56. The optical pickup apparatus of claim 5, further **characterized by** comprising:

a laminated prism having a plurality of prism functions arranged on an common optical path of at least two of the first to third light fluxes.

**57.** The optical pickup apparatus of claim 5, further **characterized by** comprising:

a coupling lens having a diffraction grating on an common optical path of the first to third light fluxes, and the diffraction grating is adapted to detects a movement of the objective lens (OBJ) in a direction perpendicular to an optical axis.

**Patentansprüche**

**1.** Optische Aufnahmevorrichtung, mit:

einer ersten Lichtquelle (LD1) zum Emittieren eines ersten Lichtflusses mit einer Wellenlänge $\lambda 1$ zum Aufzeichnen und/oder Wiedergeben von Information auf einer ersten Optikplatte, die ein Schutzsubstrat (PL3) mit einer Dicke t1 aufweist;
einer dritten Lichtquelle (LD3) zum Emittieren eines dritten Lichtflusses mit einer Wellenlänge $\lambda 3$ ($1,8 \times \lambda 1 \leq \lambda 3 \leq 2,2 \times \lambda 1$) zum Aufzeichnen und/oder Wiedergeben von Information auf einer dritten Optikplatte, die ein Schutzsubstrat (PL3) mit einer Dicke t3 (t1 < t3) aufweist; und
einer Objektivlinse (OBJ), die in einem gemeinsamen optischen Pfad des ersten Lichtflusses und des dritten Lichtflusses angeordnet ist, wenn die optische Aufnahmevorrichtung Information auf jeder der ersten und dritten Optikplatten aufzeichnet und/oder wiedergibt, und wobei
eine Vergrößerung m3 die Objektivlinse (OBJ) für den dritten Lichtfluss

$$-1/10 \leq m3 < 0$$

erfüllt,

**dadurch gekennzeichnet, dass**
die optische Aufnahmevorrichtung eine Struktur benutzt, bei der erste Lichtfluss in die Objektivlinse (OBJ) als ein konvergierender Lichtfluss eintritt.

**2.** Optische Aufnahmevorrichtung gemäß Anspruch 1, **dadurch gekennzeichnet, dass** eine Vergrößerung m1 der Objektivlinse (OBJ) für den ersten Lichtfluss

$$0 < m1 \leq 1/10$$

erfüllt.

**3.** Optische Aufnahmevorrichtung gemäß Anspruch 2, **dadurch gekennzeichnet, dass** die Vergrößerung m1 der Objektivlinse (OBJ) für den ersten Lichtfluss

$$0 < m1 \leq 1/15$$

erfüllt.

**4.** Optische Aufnahmevorrichtung gemäß Anspruch 1, **dadurch gekennzeichnet, dass** die Vergrößerung m3 die Objektivlinse (OBJ) für den dritten Lichtfluss

$$-1/15 \leq m3 < 0$$

erfüllt.

**5.** Optische Aufnahmevorrichtung gemäß Anspruch 1, ferner **gekennzeichnet durch**:

eine zweite Lichtquelle zum Emittieren eines zweiten Lichtflusses mit einer Wellenlänge λ2 (1,5 × λ1 ≤ λ2 ≤ 1,7 × λ1) zum Aufzeichnen und/oder Wiedergeben von Information auf einer zweiten Optikplatte, die ein Schutzsubstrat (PL3) mit einer Dicke t2 (0,9 × t1 ≤ t2) aufweist.

**6.** Optische Aufnahmevorrichtung gemäß Anspruch 1, ferner **gekennzeichnet durch**:

eine Phasenstruktur, die auf einer ersten optischen Oberfläche der Objektivlinse (OBJ) angeordnet ist.

**7.** Optische Aufnahmevorrichtung gemäß Anspruch 6, **dadurch gekennzeichnet, dass** die Phasenstruktur eine Beugungsstruktur ist.

**8.** Optische Aufnahmevorrichtung gemäß Anspruch 7, **dadurch gekennzeichnet, dass** die Abbeschen Konstante νd die Bedeutung 40 ≤ νd ≤ 90 erfüllt.
die Beugungsstruktur ringförmige Zonen umfasst, die auf einem Bereich auf der ersten optischen Oberfläche der Objektivlinse (OBJ) angeordnet sind, und der Bereich nicht zum Aufzeichnen oder Wiedergeben von Information für die dritte Optikplatte verwendet wird, und
eine Stufendifferenz jeder der ringförmigen Zonen $d_{out}$ entlang einer parallelen Richtung zu einer optischen Achse

$$(2k - 1) \times \lambda1/(n1 - 1) \leq d_{out} < 2k \times \lambda1/(n1 - 1)$$

erfüllt, wobei k ein positiver ganzzahliger Wert und n1 ein Brechungsindex der Objektivlinse (OBJ) für einen ersten Lichtfluss ist.

**9.** Optische Aufnahmevorrichtung gemäß Anspruch 8, **dadurch gekennzeichnet, dass** die Stufendifferenz jeder der ringförmigen Zonen $d_{out}$ entlang einer parallelen Richtung zu einer optischen Achse

$$5 \times \lambda1/(n1 - 1) \leq d_{out} < 6 \times \lambda1/(n1 - 1)$$

erfüllt.

**10.** Optische Aufnahmevorrichtung gemäß Anspruch 8, **dadurch gekennzeichnet, dass** die Objektivlinse (OBJ) auf mindestens einer Oberfläche davon aufweist:

einen ersten Bereich zum Aufzeichnen und/oder Wiedergeben von Information des dritten Lichtflusses;
einen zweiten Bereich, der außerhalb des ersten Bereichs angeordnet ist; und

wobei, wenn der erste Lichtfluss, dessen Wellenlänge sich um +10 nm ändert, durch die erste Lichtquelle (LD1) emittiert wird und in die Objektivlinse (OBJ) eintritt, die Objektivlinse (OBJ)

$$1,7 \times 10^{-3} \leq |P2 - P3| \leq 7,0 \times 10^{-3}$$

erfüllt, und

$$P0 \leq P2 \leq P1 \text{ oder } P1 \leq P2 \leq P0,$$

wobei P0 eine paraxiale konvergierende Position eines durch die Objektivlinse (OBJ) laufenden Lichtflusses ist,
P1 eine Konvergenz-Position eines Lichtflusses ist, der durch einen Bereich am weitesten entfernt von der optischen Achse in dem ersten Bereich läuft,
P2 eine Konvergenz-Position eines Lichtflusses ist, der durch einen Bereich am nächsten zu der optischen Achse in dem zweiten Bereich läuft, und
P3 eine Konvergenz-Position eines Lichtflusses ist, der durch einen Bereich am weitesten entfernt von der optischen Achse in der Objektivlinse (OBJ) läuft.

**11.** Optische Aufnahmevorrichtung gemäß Anspruch 8, **dadurch gekennzeichnet, dass**, wenn die erste Lichtquelle (LD1) angepasst ist, um den ersten Lichtfluss zu emittieren, dessen Wellenlänge sich ändert, eine longitudinale Aberration in dem ersten Bereich und eine longitudinale Aberration in dem zweiten Bereich in einer gleichen Richtung geneigt sind.

**12.** Optische Aufnahmevorrichtung gemäß Anspruch 7, **dadurch gekennzeichnet, dass**, wenn der dritte Lichtfluss in die Objektivlinse (OBJ) eintritt, die Objektivlinse (OBJ) angepasst ist, um einen Lichtfluss, der durch einen Bereich läuft, der außerhalb einer numerischen Apertur des dritten Lichtflusses auf der ersten optischen Oberfläche der Objektivlinse (OBJ) ist, an einer Position zu konvergieren, die 0,01 mm oder mehr von einer Position eines Konvergenz-Punktes der dritten Optikplatte entfernt ist.

**13.** Optische Aufnahmevorrichtung gemäß Anspruch 7, **dadurch gekennzeichnet, dass**
eine sphärische Aberration dritter Ordnung der Objektivlinse (OBJ) eine Wellenfrontaberrationskomponente eines Konvergenz-Punktes ist, der auf einer Informationsaufzeichnungsoberfläche von mindestens einer der ersten bis dritten Platten gebildet ist, und
ein Änderungsbetrag der sphärischen Aberration dritter Ordnung der Objektivlinse (OBJ), der erzeugt wird, wenn eine Temperatur erhöht wird, einen positiven Wert aufweist.

**14.** Optische Aufnahmevorrichtung gemäß Anspruch 7, **dadurch gekennzeichnet, dass** eine Potenz der Phasenstruktur einen negativen Wert aufweist.

**15.** Optische Aufnahmevorrichtung gemäß Anspruch 6, **dadurch gekennzeichnet, dass** die Phasenstruktur auf dem Bereich auf der ersten optischen Oberfläche auf der Objektivlinse (OBJ) angeordnet ist, durch den der zweite Lichtfluss durchläuft.

**16.** Optische Aufnahmevorrichtung gemäß Anspruch 7, **dadurch gekennzeichnet, dass**
die Phasenstruktur angepasst ist, um den ersten Lichtfluss ohne Bereitstellen einer Phasendifferenz durchzulassen, und
um den zweiten Lichtfluss mit Bereitstellen einer Phasendifferenz zu beugen.

**17.** Optische Aufnahmevorrichtung gemäß Anspruch 14, **dadurch gekennzeichnet, dass**
die optische Aufnahmevorrichtung

$$|dfb/d\lambda| \le 0{,}1 \ [\mu m/nm]$$

erfüllt,
wobei $dfb/d\lambda$ ein Änderungsbetrag der Position entlang einer optischen Achse ist, auf der eine Wellenfrontaberration minimal ist, entsprechend einer Wellenlängenvariation mit 1 nm des ersten Lichtflusses in einem Konvergenz-Punkt, der auf der Informationsaufzeichnungsoberfläche des ersten optischen Informationsmediums gebildet ist.

**18.** Optische Aufnahmevorrichtung gemäß Anspruch 14, **dadurch gekennzeichnet, dass**

$$|dfb/d\lambda| \le 0{,}2 \ [\mu m/nm]$$

erfüllt wird,
wobei $dfb/d\lambda$ einen Änderungsbetrag der Position entlang einer optischen Achse ist, auf der eine Wellenfrontaberration minimal ist, entsprechend einer Wellenlängenvariation mit 1 nm des zweiten Lichtflusses in einem Konvergenz-Punkt, der auf der Informationsaufzeichnungsoberfläche des zweiten optischen Informationsmediums gebildet ist.

**19.** Optische Aufnahmevorrichtung gemäß Anspruch 6, **dadurch gekennzeichnet, dass**
die Phasenstruktur eine Beugungsstruktur mit einer Mehrzahl von ringförmigen Zonen ist, und
einen gezackten Querschnitt mit einer optischen Achse aufweist,
eine Mitte von jeder der Mehrzahl von ringförmigen Zonen an einer optischen Achse angeordnet ist, und
die optische Aufnahmevorrichtung einen folgenden Ausdruck

$$10 \times \lambda1/(n1 - 1) \leq d < 12 \times \lambda1/(n1 - 1)$$

erfüllt,
wobei n1 ein Brechungsindex der Objektivlinse (OBJ) für eine Wellenlänge λ1 ist, und
d eine Stufendifferenz entlang der optischen Achse jeder der ringförmigen Zonen ist.

**20.** Optische Aufnahmevorrichtung gemäß Anspruch 5, **dadurch gekennzeichnet, dass** die optische Aufnahmevorrichtung t1 = t2 erfüllt.

**21.** Optische Aufnahmevorrichtung gemäß Anspruch 5, **dadurch gekennzeichnet, dass** die optische Aufnahmevorrichtung m2 = 0 erfüllt, wobei m2 eine Vergrößerung der Objektivlinse (OBJ) für den zweiten Lichtfluss ist.

**22.** Optische Aufnahmevorrichtung gemäß Anspruch 1, **dadurch gekennzeichnet, dass** die Objektivlinse (OBJ) aus einem Glasmaterial hergestellt ist.

**23.** Optische Aufnahmevorrichtung gemäß Anspruch 1, ferner **gekennzeichnet durch**:

ein Begrenzungselement für eine numerische Apertur, das in einem optischen Pfad des dritten Lichtflusses angeordnet ist.

**24.** Optische Aufnahmevorrichtung gemäß Anspruch 23, **dadurch gekennzeichnet, dass** das Begrenzungselement für die numerische Apertur ein Flüssigkristallelement oder ein wellenlängenselektives Filter ist.

**25.** Optische Aufnahmevorrichtung gemäß Anspruch 1, ferner **gekennzeichnet durch**:

ein Korrekturelement für chromatische Aberration, das in einem optischen Pfad des ersten Lichtflusses zum Korrigieren einer chromatischen Aberration des ersten Lichtflusses angeordnet ist.

**26.** Optische Aufnahmevorrichtung gemäß Anspruch 5, ferner **gekennzeichnet durch**:

einen Photodetektor zum Empfangen des ersten Lichtflusses, der an einer Informationsaufzeichnungsoberfläche der ersten Optikplatte reflektiert wird, wenn die optische Aufnahmevorrichtung Information von der ersten Optikplatte wiedergibt oder darauf aufzeichnet,
zum Empfangen des zweiten Lichtflusses, der an einer Informationsaufzeichnungsoberfläche der zweiten Optikplatte reflektiert wird, wenn die optische Aufnahmevorrichtung Information von der zweiten Optikplatte wiedergibt oder darauf aufzeichnet, und
zum Empfangen des dritten Lichtflusses, der an einer Informationsaufzeichnungsoberfläche der dritten Optikplatte reflektiert wird, wenn die optische Aufnahmevorrichtung Information von der dritten Optikplatte wiedergibt oder darauf aufzeichnet.

**27.** Optische Aufnahmevorrichtung gemäß Anspruch 26, ferner **gekennzeichnet durch**:

eine Koppellinse, die in einem gemeinsamen optischen Pfad der ersten bis dritten Lichtflüsse angeordnet ist, und einen Aktuator, der in einem gemeinsamen optischen Pfad der ersten bis dritten Lichtflüsse zum Betätigen der Koppellinse angeordnet ist.

**28.** Optische Aufnahmevorrichtung gemäß Anspruch 27, **dadurch gekennzeichnet, dass** die Koppellinse eine Beugungsstruktur auf mindestens einer ihrer Oberflächen aufweist.

**29.** Optische Aufnahmevorrichtung gemäß Anspruch 28, **dadurch gekennzeichnet, dass** die Beugungsstruktur der Koppellinse

$$|dfb/d\lambda| \leq 0{,}1 \ [\mu m/nm]$$

erfüllt,
wobei dfb/dλ ein Änderungsbetrag einer Position entlang einer optischen Achse ist, auf der eine Wellenfrontaberration minimal ist, entsprechend einer Wellenlängenvariation mit 1 nm des ersten Lichtflusses in einem Konvergenz-Punkt, der auf der Informationsaufzeichnungsoberfläche des ersten optischen Informationsmediums ausgebildet ist.

30. Optische Aufnahmevorrichtung gemäß Anspruch 27, **dadurch gekennzeichnet, dass** die Koppellinse ein Beugungsgitter umfasst, und dass das Beugungsgitter angepasst ist, um eine Bewegung der Objektivlinse (OBJ) in einer Richtung senkrecht zu einer optischen Achse zu erfassen.

31. Optische Aufnahmevorrichtung gemäß Anspruch 26, ferner **kennzeichnet durch**:

    eine Koppellinse, die in einem gemeinsamen optischen Pfad der ersten bis dritten Lichtflüsse angeordnet ist, und ein Flüssigkristallelement, das in einem gemeinsamen optischen Pfad der ersten bis dritten Lichtflüsse angeordnet ist.

32. Optische Aufnahmevorrichtung gemäß Anspruch 31, **dadurch gekennzeichnet, dass** die Koppellinse eine Beugungsstruktur auf mindestens einer ihrer Oberflächen aufweist.

33. Optische Aufnahmevorrichtung gemäß Anspruch 32, **dadurch gekennzeichnet, dass** die Beugungsstruktur der Koppellinse

$$|\mathrm{dfb/d}\lambda\ |\ \leq\ 0,1\ [\mu m/nm]$$

erfüllt,
wobei dfb/dλ ein Änderungsbetrag einer Position entlang einer optischen Achse ist, auf der eine Wellenfrontaberration minimal ist, entsprechend einer Wellenlängenvariation mit 1 nm des ersten Lichtflusses in einem Konvergenz-Punkt, der auf der Informationsaufzeichnungsoberfläche des ersten optischen Informationsmediums ausgebildet ist.

34. Optische Aufnahmevorrichtung gemäß Anspruch 31, **dadurch gekennzeichnet, dass** die Koppellinse ein Beugungsgitter umfasst und das Beugungsgitter angepasst ist, um eine Bewegung der Objektivlinse (OBJ) in einer Richtung senkrecht zu einer optischen Achse zu erfassen.

35. Optische Aufnahmevorrichtung gemäß Anspruch 26, **dadurch gekennzeichnet, dass** die zweite Lichtquelle und die dritte Lichtquelle (LD3) in einem Körper verpackt sind, wobei sie in einem Gehäuse angeordnet sind.

36. Optische Aufnahmevorrichtung gemäß Anspruch 5, ferner **gekennzeichnet durch**:

    einen ersten Photodetektor zum Empfangen des ersten Lichtflusses, der an einer Informationsaufzeichnungsoberfläche der ersten Optikplatte reflektiert wurde, und des zweiten Lichtflusses, der an einer Informationsaufzeichnungsoberfläche der zweiten Optikplatte reflektiert wurde; und einen zweiten Photodetektor zum Empfangen des dritten Lichtflusses, der an einer Informationsaufzeichnungsoberfläche der dritten Optikplatte reflektiert wurde.

37. Optische Aufnahmevorrichtung gemäß Anspruch 36, ferner **gekennzeichnet durch**:

    eine Koppellinse, die in einem gemeinsamen optischen Pfad der ersten bis dritten Lichtflüsse angeordnet ist, und die Koppellinse eine Beugungsstruktur auf mindestens einer Oberfläche davon aufweist.

38. Optische Aufnahmevorrichtung gemäß Anspruch 37, ferner **gekennzeichnet durch**:

    ein Korrekturelement für chromatische Aberration, das in einem optischen Pfad angeordnet ist, wobei lediglich der erste Lichtfluss durchläuft, zum Korrigieren einer chromatischen Aberration des ersten Lichtflusses.

39. Optische Aufnahmevorrichtung gemäß Anspruch 37, ferner **gekennzeichnet durch**:

eine Astigmatismus erzeugende Platte, die in einem optischen Pfad zwischen der Koppellinse und dem ersten Photodetektor angeordnet ist, und

wobei mindestens einer von dem ersten Lichtfluss und dem zweiten Lichtfluss in die Koppellinse eintritt, nachdem er durch die Astigmatismus erzeugende Platte reflektiert wurde.

**40.** Optische Aufnahmevorrichtung gemäß Anspruch 37, ferner **gekennzeichnet durch**:

einen Compound Strahlenteiler, der in einem optischen Pfad zwischen der Koppellinse und dem ersten Photodetektor angeordnet ist,
wobei der Compound Strahlenteiler angepasst ist, um optische Pfade des ersten Lichtflusses und des zweiten Lichtflusses zu mischen,
ein Mittel, um die ersten und zweiten Lichtflüsse, deren optische Pfade **durch** den Compound Strahlenteiler gemischt werden, dazu zu bringen, in die Koppellinse einzutreten, und
der Compound Strahlenteiler angepasst ist, um eine Differenz zwischen optischen Vorwärtspfaden der ersten und zweiten Lichtflüsse und optischen Rückwärtspfaden der ersten und zweiten Lichtflüsse herzustellen.

**41.** Optische Aufnahmevorrichtung gemäß Anspruch 40, **dadurch gekennzeichnet, dass**
der Compound Strahlenteiler eine erste Oberfläche mit einer dichroitischen Funktion umfasst, die angepasst ist, um einen eintretenden Lichtfluss gemäß einer Wellenlänge des eintretenden Lichtflusses durchzulassen oder zu reflektieren,
eine zweite Oberfläche mit einer Strahlenteilerfunktion, die angepasst ist, um einen eintretenden Lichtfluss gemäß einer Polarisationsrichtung des eintretenden Lichtflusses durchzulassen oder zu reflektieren, und
eine dritte Oberfläche zum Reflektieren eines eintretenden Lichtflusses.

**42.** Optische Aufnahmevorrichtung gemäß Anspruch 41, **dadurch gekennzeichnet, dass** sie
angeordnet ist, so dass der zweite Lichtfluss, der durch die zweite Lichtquelle emittiert wurde, von dem Compound Strahlenteiler nach Laufen durch die ersten und zweiten Oberflächen herausgeht,
der zweite Lichtfluss, der durch die Koppellinse emittiert wurde, von dem Compound Strahlenteiler herausgeht, nachdem er durch die zweiten und dritten Oberflächen reflektiert wurde,
der erste Lichtfluss, der durch die erste Lichtquelle (LD1) emittiert wurde, von dem Compound Strahlenteiler herausgeht, nachdem er durch die erste Oberfläche reflektiert wurde und durch die zweiten Oberflächen sukzessiv gelaufen ist,
der erste Lichtfluss, der durch die Koppellinse emittiert wurde, von dem Compound Strahlenteiler herausgeht, nachdem er durch die zweiten und dritten Oberflächen reflektiert wurde.

**43.** Optische Aufnahmevorrichtung gemäß Anspruch 37, **dadurch gekennzeichnet, dass**
die Beugungsstruktur der Koppellinse eine Mehrzahl von ringförmigen Zonen aufweist, deren Mitten an der optischen Achse angeordnet sind, und sie einen gezackten Querschnitt aufweist, der die optischen Achse einschließt, und
die optische Aufnahmevorrichtung folgenden Ausdruck

$$2 \times \lambda1/(n1 - 1) \leq d < 3 \times \lambda1/(n1 - 1)$$

erfüllt,
wobei n1 ein Brechungsindex der Objektivlinse (OBJ) für eine Wellenlänge $\lambda1$ und d eine Stufendifferenz entlang der optischen Achse jeder der ringförmigen Zonen ist.

**44.** Optische Aufnahmevorrichtung gemäß Anspruch 37, **dadurch gekennzeichnet, dass** die Beugungsstruktur sowohl an einer Optikplattenseite einer optischen Oberfläche auf der Koppellinse als auch an einer Optikplattenseite einer optischen Oberfläche auf der Koppellinse angeordnet ist.

**45.** Optische Aufnahmevorrichtung gemäß Anspruch 44, **dadurch gekennzeichnet, dass**
die Beugungsstruktur der Koppellinse eine Mehrzahl von ringförmigen Zonen aufweist, deren Mitten an der optischen Achse angeordnet sind, und sie einen gezackten Querschnitt aufweist, der die optischen Achse einschließt, und
die optische Aufnahmevorrichtung folgenden Ausdruck

$$10 \times \lambda1/(n1 - 1) \leq d < 12 \times \lambda1/(n1 - 1)$$

erfüllt,

wobei n1 ein Brechungsindex der Objektivlinse (OBJ) für eine Wellenlänge λ1 und d eine Stufendifferenz entlang der optischen Achse jeder der ringförmigen Zonen ist.

**46.** Optische Aufnahmevorrichtung gemäß Anspruch 44, **dadurch gekennzeichnet, dass**

die Beugungsstruktur, die an der Lichtquellenseite der optischen Oberfläche auf der Koppellinse angeordnet ist, angepasst ist, um den ersten Lichtfluss ohne Bereitstellen eines Phasenunterschiedes durchzulassen, und den zweiten Lichtfluss mit Bereitstellen eines Phasenunterschiedes zu beugen.

**47.** Optische Aufnahmevorrichtung gemäß Anspruch 37, **dadurch gekennzeichnet, dass** die Koppellinse ein Beugungsgitter umfasst, und das Beugungsgitter angepasst ist, um eine Bewegung der Objektivlinse (OBJ) in einer Richtung senkrecht zu einer optischen Achse zu erfassen.

**48.** Optische Aufnahmevorrichtung gemäß Anspruch 37, ferner mit:

einer ersten Koppellinse, die in einem gemeinsamen optischen Pfad der ersten und zweiten Lichtflüsse angeordnet ist,
einer zweite Koppellinse, die in einem optischen Pfad des dritten Lichtflusses angeordnet ist, und
einer Beugungsstruktur, die auf mindestens einer Oberfläche der ersten und zweiten Koppellinsen angeordnet ist.

**49.** Optische Aufnahmevorrichtung gemäß Anspruch 36, **dadurch gekennzeichnet, dass** der zweite Photodetektor ein Hologrammlaser ist.

**50.** Optische Aufnahmevorrichtung gemäß Anspruch 48, **dadurch gekennzeichnet, dass**

die Koppellinse ein Beugungsgitter auf mindestens einer ihrer optischen Oberflächen aufweist, und
das Beugungsgitter angepasst ist, um eine Bewegung der Objektivlinse (OBJ) in einer Richtung senkrecht zu einer optischen Achse zu erfassen.

**51.** Optische Aufnahmevorrichtung gemäß Anspruch 5, ferner **gekennzeichnet durch**:

einen ersten Photodetektor zum Empfangen des zweiten Lichtflusses, der an einer Informationsaufzeichnungsoberfläche der zweiten Optikplatte reflektiert wurde, und des dritten Lichtflusses, der an einer Informationsaufzeichnungsoberfläche der dritten Optikplatte reflektiert wurde; und
einen zweiten Photodetektor zum Empfangen des ersten Lichtflusses, der an einer Informationsaufzeichnungsoberfläche der ersten Optikplatte reflektiert wurde.

**52.** Optische Aufnahmevorrichtung gemäß Anspruch 51, ferner **gekennzeichnet durch**:

eine Koppellinse mit einer Beugungsstruktur, die in einem gemeinsamen optischen Pfad des zweiten Lichtflusses und des dritten Lichtflusses angeordnet ist.

**53.** Optische Aufnahmevorrichtung gemäß Anspruch 51, **dadurch gekennzeichnet, dass** der erste Photodetektor, die zweite Lichtquelle und die dritte Lichtquelle (LD3) in einem Körper verpackt sind, wobei sie in einem Gehäuse angeordnet sind.

**54.** Optische Aufnahmevorrichtung gemäß Anspruch 52, **dadurch gekennzeichnet, dass**
die Koppellinse ein Beugungsgitter aufweist, und
das Beugungsgitter angepasst ist, um eine Bewegung der Objektivlinse (OBJ) in einer Richtung senkrecht zu einer optischen Achse zu erfassen.

**55.** Optische Aufnahmevorrichtung gemäß Anspruch 5, ferner **gekennzeichnet durch**:

einen Photodetektor zum Empfangen des ersten Lichtflusses, der **durch** eine Informationsaufzeichnungsoberfläche der ersten Optikplatte reflektiert wurde,
einen ersten Laser, bei dem ein Photodetektor zum Empfangen des zweiten Lichtflusses, der **durch** eine Informationsaufzeichnungsoberfläche der zweiten Optikplatte reflektiert wurde, und die zweite Lichtquelle in einem Körper verpackt sind; und
einen zweiten Laser, bei dem ein Photodetektor zum Empfangen des dritten Lichtflusses, der **durch** eine Informationsaufzeichnungsoberfläche der dritten Optikplatte reflektiert wurde, und die dritte Lichtquelle (LD3) in einem Körper verpackt sind.

**56.** Optische Aufnahmevorrichtung gemäß Anspruch 5, ferner **gekennzeichnet durch**:

ein Schicht-Prisma, das eine Mehrzahl von Prismafunktionen aufweist, die auf einem gemeinsamen optischen Pfad von mindestens zwei der ersten bis dritten Lichtflüsse angeordnet sind.

**57.** Optische Aufnahmevorrichtung gemäß Anspruch 5, ferner **gekennzeichnet durch**:

eine Koppellinse mit einem Beugungsgitter auf einem gemeinsamen optischen Pfad der ersten bis dritten Lichtflüsse, und wobei
das Beugungsgitter angepasst ist, um eine Bewegung der Objektivlinse (OBJ) in einer Richtung senkrecht zu einer optischen Achse zu erfassen.

**Revendications**

**1.** Appareil formant tête optique comprenant :

une première source lumineuse (LD1) destinée à émettre un premier flux lumineux avec une longueur d'onde $\lambda 1$ destiné à enregistrer et/ou reproduire des informations sur un premier disque optique ayant un substrat protecteur (PL3) avec une épaisseur t1 ;
une troisième source lumineuse (LD3) destinée à émettre un troisième flux lumineux avec une longueur d'onde $\lambda 3$ ($1,8 \times \lambda 1 \le \lambda 3 \le 2,2 \times \lambda 1$) destiné à enregistrer et/ou reproduire des informations sur un troisième disque optique ayant un substrat protecteur (PL3) avec une épaisseur t3 (t1 < t3) ; et
une lentille de focalisation (OBJ) agencée dans un chemin optique commun du premier flux lumineux et du troisième flux lumineux lorsque l'appareil formant tête optique enregistre et/ou reproduit des informations sur chacun des premier et troisième disques optiques,
et dans lequel
un grossissement m3 de la lentille de focalisation (OBJ) pour le troisième flux lumineux satisfait:

$$-1/10 \le \text{m3} < 0$$

**caractérisé en ce que** l'appareil formant tête optique emploie une structure dans laquelle
le premier flux lumineux entre dans la lentille de focalisation (OBJ) en tant qu'un flux lumineux convergent.

**2.** Appareil formant tête optique selon la revendication 1, **caractérisé en ce qu'**un grossissement m1 de la lentille de focalisation (OBJ) pour le premier flux lumineux satisfait :

$$0 < \text{m1} \le 1/10.$$

**3.** Appareil formant tête optique selon la revendication 2, **caractérisé en ce que** le grossissement m1 de la lentille de focalisation (OBJ) pour le premier flux lumineux satisfait

$$0 < \text{m1} \le 1/15.$$

**4.** Appareil formant tête optique selon la revendication 1, **caractérisé en ce que** le grossissement m3 de la lentille de focalisation (OBJ) pour le troisième flux lumineux satisfait

$$-1/15 \leq m3 < 0.$$

**5.** Appareil formant tête optique selon la revendication 1, **caractérisé en outre en ce qu'**il comprend :

une deuxième source lumineuse destinée à émettre un deuxième flux lumineux avec une longueur d'onde λ2 ($1,5 \times \lambda1 \leq \lambda2 \leq 1,7 \times \lambda1$) destiné à enregistrer et/ou reproduire des informations sur un deuxième disque optique ayant un substrat protecteur (PL3) avec une épaisseur t2 ($0,9 \times t1 \leq t2$).

**6.** Appareil formant tête optique selon la revendication 1, **caractérisé en outre en ce qu'**il comprend :

une structure de phase agencée sur une première surface optique de la lentille de focalisation (OBJ).

**7.** Appareil formant tête optique selon la revendication 6, **caractérisé en ce que** la structure de phase est une structure de diffraction.

**8.** Appareil formant tête optique selon la revendication 7, **caractérisé en ce qu'**un nombre d'Abbe νd satisfait : $40 \leq \nu d \leq 90$,
la structure de diffraction comprend des zones en forme d'anneaux, agencées sur une région de la première surface optique de la lentille de focalisation (OBJ) et la région n'est pas utilisée pour enregistrer ou reproduire des informations pour le troisième disque optique, et
une différence de pas de chacune des zones en anneau $d_{extérieur}$ le long d'une direction parallèle à un axe optique satisfait :

$$(2k - 1) \times \lambda1/1(n1 - 1) \leq d_{extérieur} < 2k \times \lambda1/(n1 - 1)$$

où k est une valeur entière positive et
n1 est un indice de réfraction de la lentille de focalisation (OBJ) pour un premier flux lumineux.

**9.** Appareil formant tête optique selon la revendication 8, **caractérisé en ce que** la différence de pas de chacune des zones en forme d'anneaux $d_{extérieur}$ le long d'une direction parallèle à un axe optique satisfait :

$$5 \times \lambda1/(n1 - 1) \leq d_{extérieur} < 6 \times \lambda1 /(n1 - 1).$$

**10.** Appareil formant tête optique selon la revendication 8, **caractérisé en ce que** la lentille de focalisation (OBJ) comporte sur au moins une de ses surfaces:

une première région destinée à enregistrer et/ou reproduire des informations du troisième flux lumineux ;
une seconde région agencée à l'extérieur de la première région ; et

dans lequel, lorsque le premier flux lumineux dont la longueur d'onde change de +10 nm est émis par la première source lumineuse (LD1) et entre dans la lentille de focalisation (OBJ), la lentille de focalisation (OBJ) satisfait :

$$1,7 \times 10^{-3} \leq |P2 - P3| \leq 7,0 \times 10^{-3}$$

et

$$P0 \leq P2 \leq P1 \quad ou \quad P1 \leq P2 \leq P0$$

où P0 est une position convergente paraxiale d'un flux lumineux traversant la lentille de focalisation (OBJ),
P1 est une position convergente d'un flux lumineux traversant une région la plus éloignée de l'axe optique dans la première région,
P2 est une position convergente d'un flux lumineux traversant une région la plus proche de l'axe optique dans la seconde région,
P3 est une position convergente d'un flux lumineux traversant une région la plus éloignée de l'axe optique dans la lentille de focalisation (OBJ).

11. Appareil formant tête optique selon la revendication 8, **caractérisé en ce que** lorsque la première source lumineuse (LD1) est adaptée pour émettre le premier flux lumineux dont la longueur d'onde change, une aberration longitudinale dans la première région et une aberration longitudinale dans la seconde région sont inclinées dans une même direction.

12. Appareil formant tête optique selon la revendication 7, **caractérisé en ce que** lorsque le troisième flux lumineux entre dans la lentille de focalisation (OBJ), la lentille de focalisation (OBJ) est adaptée pour faire converger un flux lumineux traversant une région qui est à l'extérieur d'une ouverture numérique du troisième flux lumineux sur la première surface optique de la lentille de focalisation (OBJ), en une position qui est à une distance de 0,01 mm ou plus d'une position d'un point convergent sur le troisième disque optique.

13. Appareil formant tête optique selon la revendication 7, **caractérisé en ce que** :

    une aberration sphérique du troisième ordre de la lentille de focalisation (OBJ) est une composante d'aberration de front d'onde d'un point convergent formé sur une surface d'enregistrement d'information d'au moins un parmi les premier à troisième disques et
    une quantité de changement de l'aberration sphérique du troisième ordre de la lentille de focalisation (OBJ) généré lorsqu'une température est augmentée a une valeur positive.

14. Appareil formant tête optique selon la revendication 7, **caractérisé en ce qu'**une puissance de la structure de phase a une valeur négative.

15. Appareil formant tête optique selon la revendication 6, **caractérisé en ce que** la structure de phase est agencée sur la région sur la première surface optique sur la lentille de focalisation (OBJ) où le deuxième flux lumineux effectue une traversée.

16. Appareil formant tête optique selon la revendication 7, **caractérisé en ce que**:

    la structure de phase est adaptée pour transmettre le premier flux lumineux sans fournir de différence de phase et pour diffracter le deuxième flux lumineux en fournissant une différence de phase.

17. Appareil formant tête optique selon la revendication 14, **caractérisé en ce que** :

    l'appareil formant tête optique satisfait :

$$|dfb/d\lambda| \leq 0{,}1 \ [\mu m/nm],$$

    où dfb/dλ est une quantité de changement d'une position le long d'un axe optique sur lequel une aberration de front d'onde est minimale, correspondant à une variation de longueur d'onde de 1 nm du premier flux lumineux, dans un point de convergence formé sur la surface d'enregistrement d'information du premier support d'information optique.

18. Appareil formant tête optique selon la revendication 14, **caractérisé en ce que** :

$$|dfb/d\lambda| \leq 0,2 \ [\mu m/nm]$$

est satisfaite,
où dfb/dλ est une quantité de changement d'une position le long d'un axe optique sur lequel une aberration de front d'onde est minimale, correspondant à une variation de longueur d'onde de 1 nm du deuxième flux lumineux, dans un point de convergence formé sur la surface d'enregistrement d'information du deuxième support d'information optique.

**19.** Appareil formant tête optique selon la revendication 6, **caractérisé en ce que** :

la structure de phase est une structure de diffraction ayant une pluralité de zones en anneau et ayant une section transversale crantée comportant un axe optique,
un centre de chacune parmi la pluralité de zones en anneau est agencé sur un axe optique, et
l'appareil formant tête optique satisfait l'expression suivante :

$$10 \times \lambda1/(n1 - 1) \leq d < 12 \times \lambda1 /(n1 - 1)$$

dans laquelle n1 est un indice de réfraction de la lentille de focalisation (OBJ) pour une longueur d'onde λ1, et
d est une différence de pas le long de l'axe optique de chacune des zones en anneau.

**20.** Appareil formant tête optique selon la revendication 5, **caractérisé en ce que** l'appareil formant tête optique satisfait: t1 = t2.

**21.** Appareil formant tête optique selon la revendication 5, **caractérisé en ce que** l'appareil formant tête optique satisfait : m2 = 0, où m2 est un grossissement de la lentille de focalisation (OBJ) pour le deuxième flux lumineux.

**22.** Appareil formant tête optique selon la revendication 1, **caractérisé en ce que** la lentille de focalisation (OBJ) est faite d'un matériau de verre.

**23.** Appareil formant tête optique selon la revendication 1, **caractérisé en outre en ce qu'**il comprend :

un élément de limitation d'ouverture numérique agencé dans un chemin optique du troisième flux lumineux.

**24.** Appareil formant tête optique selon la revendication 23, **caractérisé en ce que** l'élément de limitation d'ouverture numérique est un élément à cristaux liquides ou un filtre sélectif en longueur d'onde.

**25.** Appareil formant tête optique selon la revendication 1, **caractérisé en outre en ce qu'**il comprend :

un élément de correction d'aberration chromatique agencé dans un chemin optique du premier flux lumineux pour corriger une aberration chromatique du premier flux lumineux.

**26.** Appareil formant tête optique selon la revendication 5, **caractérisé en outre en ce qu'**il comprend :

un photodétecteur destiné à recevoir le premier flux lumineux réfléchi sur une surface d'enregistrement d'information du premier disque optique lorsque l'appareil formant tête optique reproduit ou enregistre des informations sur le premier disque optique,
destiné à recevoir le deuxième flux lumineux réfléchi sur une surface d'enregistrement d'information du deuxième disque optique lorsque l'appareil formant tête optique reproduit ou enregistre des informations sur le deuxième disque optique, et
destiné à recevoir le troisième flux lumineux réfléchi sur une surface d'enregistrement d'information du troisième disque optique lorsque l'appareil formant tête optique reproduit ou enregistre les informations sur le troisième disque optique.

**27.** Appareil formant tête optique selon la revendication 26, **caractérisé en outre en ce qu'**il comprend :

une lentille de couplage agencée dans un chemin optique commun des premier à troisième flux lumineux ; et un dispositif d'actionnement agencé dans un chemin optique commun des premier à troisième flux lumineux pour actionner la lentille de couplage.

**28.** Appareil formant tête optique selon la revendication 27, **caractérisé en ce que** la lentille de couplage dispose d'une structure de diffraction sur au moins une de ses surfaces.

**29.** Appareil formant tête optique selon la revendication 28, **caractérisé en ce que** la structure de diffraction de la lentille de couplage satisfait :

$$|\mathrm{dfb/d}\lambda| \le 0,1 \ [\mu m/nm]$$

où dfb/dλ est une quantité de changement d'une position le long d'un axe optique sur lequel une aberration de front d'onde est minimale, correspondant à une variation de longueur d'onde de 1 nm du premier flux lumineux, dans un point de convergence formé sur la surface d'enregistrement d'information du premier support d'information optique.

**30.** Appareil formant tête optique selon la revendication 27, **caractérisé en ce que** la lentille de couplage comprend un réseau de diffraction et le réseau de diffraction est adapté pour détecter un déplacement de la lentille de focalisation (OBJ) dans une direction perpendiculaire à un axe optique.

**31.** Appareil formant tête optique selon la revendication 26, **caractérisé en outre en ce qu'**il comprend:

une lentille de couplage agencée dans un chemin optique commun des premier à troisième flux lumineux et un élément à cristaux liquides agencé dans un chemin optique commun des premier à troisième flux lumineux.

**32.** Appareil formant tête optique selon la revendication 31, **caractérisé en ce que** la lentille de couplage a une structure de diffraction sur au moins une de ses surfaces.

**33.** Appareil formant tête optique selon la revendication 32, **caractérisé en ce que** la structure de diffraction de la lentille de couplage satisfait :

$$|\mathrm{dfb/d}\lambda| \le 0,1 \ [\mu m/nm]$$

où dfb/dλ est une quantité de changement d'une position le long d'un axe optique sur lequel une aberration de front d'onde est minimale, correspondant à une variation de longueur d'onde de 1 nm du premier flux lumineux, dans un point de convergence formé sur la surface d'enregistrement d'information du premier support d'information optique.

**34.** Appareil formant tête optique selon la revendication 31, **caractérisé en ce que** la lentille de couplage comprend un réseau de diffraction et le réseau de diffraction est adapté pour détecter un déplacement de la lentille de focalisation (OBJ) dans une direction perpendiculaire à un axe optique.

**35.** Appareil formant tête optique selon la revendication 26, **caractérisé en ce que** la deuxième source lumineuse et la troisième source lumineuse (LD3) sont emballées dans un corps qui est agencé dans un boîtier.

**36.** Appareil formant tête optique selon la revendication 5, **caractérisé en outre en ce qu'**il comprend :

un premier photodétecteur destiné à recevoir le premier flux lumineux réfléchi sur une surface d'enregistrement d'information du premier disque optique, et le deuxième flux lumineux réfléchi sur une surface d'enregistrement d'information du deuxième disque optique ; et un second photodétecteur destiné à recevoir le troisième flux lumineux réfléchi sur une surface d'enregistrement d'information du troisième disque optique.

**37.** Appareil formant tête optique selon la revendication 36, **caractérisé en outre en ce qu'**il comprend:

87

une lentille de couplage agencée dans un chemin optique commun des premier à troisième flux lumineux et la lentille de couplage a une structure de diffraction sur au moins une de ses surfaces.

**38.** Appareil formant tête optique selon la revendication 37, **caractérisé en outre en ce qu'**il comprend :

un élément de correction d'aberration chromatique agencé dans un chemin optique où seul le premier flux lumineux effectue une traversée pour corriger une aberration chromatique du premier flux lumineux.

**39.** Appareil formant tête optique selon la revendication 37, **caractérisé en outre en ce qu'**il comprend :

une plaque génératrice d'astigmatisme agencée dans un chemin optique entre la lentille de couplage et le premier photodétecteur ; et

dans lequel au moins un parmi le premier flux lumineux et le deuxième flux lumineux entre dans la lentille de couplage après avoir été réfléchi par la plaque génératrice d'astigmatisme.

**40.** Appareil formant tête optique selon la revendication 37, **caractérisé en outre en ce qu'**il comprend :

un séparateur de faisceau composé agencé dans un chemin optique entre la lentille de couplage et le premier photodétecteur,
dans lequel le séparateur de faisceau composé est adapté pour fusionner des chemins optiques des premier et deuxième flux lumineux,
un moyen destiné à faire entrer les premier et deuxième flux lumineux, dont des chemins optiques sont fusionnés par les séparateurs de faisceau composé, dans la lentille de couplage, et
le séparateur de faisceau composé est adapté pour établir une différence entre des chemins optiques vers l'avant des premier et deuxième flux lumineux et des chemins optiques vers l'arrière des premier et deuxième flux lumineux.

**41.** Appareil formant tête optique selon la revendication 40, **caractérisé en ce que** :

le séparateur de faisceau composé comprend une première surface ayant une fonction dichroïque qui est adaptée pour transmettre ou réfléchir un flux lumineux entrant selon une longueur d'onde du flux lumineux entrant,
une deuxième surface ayant une fonction de séparateur de faisceau qui est adaptée pour transmettre ou réfléchir un flux lumineux entrant selon une direction de polarisation du flux lumineux entrant, et
une troisième surface destinée à réfléchir un flux lumineux entrant.

**42.** Appareil formant tête optique selon la revendication 41, **caractérisé en ce que** :

celui-ci est agencé de sorte que le deuxième flux lumineux émis par la deuxième source lumineuse sorte du séparateur de faisceau composé après avoir traversé les première et deuxième surfaces,
le deuxième flux lumineux émis par la lentille de couplage sort du séparateur de faisceau composé après avoir été réfléchi par les deuxième et troisième surfaces,
le premier flux lumineux émis par la première source lumineuse (LD1) sort du séparateur de faisceau composé après avoir été réfléchi par la première surface et avoir traversé les deuxièmes surfaces, successivement,
le premier flux lumineux émis par la lentille de couplage sort du séparateur de faisceau composé après avoir été réfléchi par les deuxième et troisième surfaces.

**43.** Appareil formant tête optique selon la revendication 37, **caractérisé en ce que**:

la structure de diffraction de la lentille de couplage dispose d'une pluralité de zones en forme d'anneaux dont les centres sont agencés au niveau de l'axe optique et a une section transversale crantée comportant l'axe optique, et
l'appareil formant tête optique satisfait à l'expression suivante :

$$2 \times \lambda 1/(n1 - 1) \leq d < 3 \times \lambda 1 /(n1 - 1)$$

dans laquelle n1 est un indice de réfraction de la lentille de focalisation (OBJ) pour une longueur d'onde λ1, et d est une différence de pas le long de l'axe optique de chacune des zones en forme d'anneaux.

**44.** Appareil formant tête optique selon la revendication 37, **caractérisé en ce que** la structure de diffraction est agencée sur chacun parmi un côté de disque optique d'une surface optique sur la lentille de couplage et un côté de disque optique d'une surface optique sur la lentille de couplage.

**45.** Appareil formant tête optique selon la revendication 44, **caractérisé en ce que**:

la structure de diffraction de la lentille de couplage a une pluralité de zones en forme d'anneaux dont les centres sont agencés au niveau de l'axe optique et a une section transversale crantée comportant l'axe optique, et l'appareil formant tête optique satisfait à l'expression suivante :

$$10 \times \lambda1/(n1 - 1) \leq d < 12 \times \lambda1 /(n1 - 1)$$

dans laquelle n1 est un indice de réfraction de la lentille de focalisation (OBJ) pour une longueur d'onde λ1, et d est une différence de pas le long de l'axe optique de chacune des zones en forme d'anneaux.

**46.** Appareil formant tête optique selon la revendication 44, **caractérisé en ce que** :

la structure de diffraction agencée sur le côté de source lumineuse de la surface optique sur la lentille de couplage est adaptée pour transmettre le premier flux lumineux sans fournir de différence de phase, et pour diffracter le deuxième flux lumineux en fournissant une différence de phase.

**47.** Appareil formant tête optique selon la revendication 37, **caractérisé en ce que** la lentille de couplage comprend un réseau de diffraction et le réseau de diffraction est adapté pour détecter un déplacement de la lentille de focalisation (OBJ) dans une direction perpendiculaire à un axe optique.

**48.** Appareil formant tête optique selon la revendication 37, comprenant en outre :

une première lentille de couplage agencée dans un chemin optique commun des premier et deuxième flux lumineux, une deuxième lentille de couplage agencée dans un chemin optique des troisièmes flux lumineux, et une structure de diffraction agencée sur au moins une surface des première et deuxième lentilles de couplage.

**49.** Appareil formant tête optique selon la revendication 36, **caractérisé en ce que** le deuxième photodétecteur est un laser à hologramme.

**50.** Appareil formant tête optique selon la revendication 48, **caractérisé en ce que**:

les lentilles de couplage ont un réseau de diffraction sur au moins une de leurs surfaces optiques et le réseau de diffraction est adapté pour détecter un déplacement de la lentille de focalisation (OBJ) dans une direction perpendiculaire à un axe optique.

**51.** Appareil formant tête optique selon la revendication 5, **caractérisé en outre en ce qu'**il comprend :

un premier photodétecteur destiné à recevoir le deuxième flux lumineux réfléchi sur une surface d'enregistrement d'information du deuxième disque optique, et le troisième flux lumineux réfléchi sur une surface d'enregistrement d'information du troisième disque optique ; et un second photodétecteur destiné à recevoir le premier flux lumineux réfléchi sur une surface d'enregistrement d'information du premier disque optique.

**52.** Appareil formant tête optique selon la revendication 51, **caractérisé en ce qu'**il comprend en outre :

une lentille de couplage ayant une structure de diffraction et agencée dans un chemin optique commun du deuxième flux lumineux et du troisième flux lumineux.

**53.** Appareil formant tête optique selon la revendication 51, **caractérisé en ce que** le premier photodétecteur, la deuxième source lumineuse et la troisième source lumineuse (LD3) sont emballés dans un corps en étant agencés dans un boîtier.

**54.** Appareil formant tête optique selon la revendication 52, **caractérisé en ce que** :

la lentille de couplage a un réseau de diffraction et
le réseau de diffraction est adapté pour détecter un déplacement de la lentille de focalisation (OBJ) dans une direction perpendiculaire à un axe optique.

**55.** Appareil formant tête optique selon la revendication 5, **caractérisé en outre en ce qu'**il comprend :

un photodétecteur destiné à recevoir le premier flux lumineux réfléchi par une surface d'enregistrement d'information du premier disque optique ;
un premier laser dans lequel un photodétecteur destiné à recevoir le deuxième flux lumineux réfléchi par une surface d'enregistrement d'information du deuxième disque optique et la deuxième source lumineuse sont emballés dans un corps ; et
un second laser dans lequel un photodétecteur destiné à recevoir le troisième flux lumineux réfléchi par une surface d'enregistrement d'information du troisième disque optique et la troisième source lumineuse (LD3) sont emballés dans un corps.

**56.** Appareil formant tête optique selon la revendication 5, **caractérisé en outre en ce qu'**il comprend :

un prisme laminé disposant d'une pluralité de fonctions de prisme agencées sur un chemin optique commun d'au moins deux parmi les premier à troisième flux lumineux.

**57.** Appareil formant tête optique selon la revendication 5, **caractérisé en outre en ce qu'**il comprend :

une lentille de couplage a un réseau de diffraction sur un chemin optique commun des premier à troisième flux lumineux, et
le réseau de diffraction est adapté pour détecter un déplacement de la lentille de focalisation (OBJ) dans une direction perpendiculaire à un axe optique.

# FIG. 1 (a)

DOE

D

100 100 100 100 100 100

OPTICAL AXIS

# FIG. 1 (b)

DOE

100 100 100 100

OPTICAL AXIS

## FIG. 2 ( a )

101
101
101
101
101

102
102
102
102 102

OPTICAL AXIS

## FIG. 2 ( b )

101
101
101
101
101

102
102
102
102
102
102

OPTICAL AXIS

## FIG. 3 ( a )

103   103      103                                    HOE

D

OPTICAL AXIS

## FIG. 3 ( b )

103      103      103                              HOE

OPTICAL AXIS

## FIG. 4 ( a )

OPTICAL AXIS

## FIG. 4 ( b )

OPTICAL AXIS

FIG. 5

# FIG. 6

# FIG. 7

# FIG. 8

# FIG. 9

# FIG. 10 (a)

**fB FLUCTUATION FOR WAVELENGTH HD DVD**

# FIG. 10 (b)

**fB FLUCTUATION FOR WAVELENGTH DVD**

# FIG. 11 (a)

fB FLUCTUATION FOR WAVELENGTH HD DVD

WAVELENGTH (nm)

# FIG. 11 (b)

fB FLUCTUATION FOR WAVELENGTH DVD

WAVELENGTH (nm)

# FIG. 12

FIG. 13

# FIG. 14

RL1, RL2, RL3

OBJ

MIR

CUL    RE

# FIG. 15

# FIG. 16 (a)

|P2-P3|=0.011mm

# FIG. 16 (b)

defocus [mm]

## FIG. 17 (a)

|P2-P3|=0.0015mm

## FIG. 17 (b)

# FIG. 18

## FIG. 19 (a)

HD (λ = 405 nm)

## FIG. 19 (b)

HD (λ = 785 nm)